# EUROPÄISCHE PATENTSCHRIFT

(11) **EP 1 419 040 B1**
(45) Veröffentlichungstag und Bekanntmachung des Hinweises auf die Patenterteilung: **20.10.2010**
(21) Anmeldenummer: 02772198.4
(22) Anmeldetag: 23.08.2002
(51) Int. Cl.: B29C 45/58

(54) **VERFAHREN UND VORRICHTUNG ZUR ERZEUGUNG VON HOMOGENEN GEMISCHEN UND ZUR ERZEUGUNG UND PRÜFUNG VON FORMKÖRPERN**
METHODS AND DEVICE FOR PRODUCING HOMOGENOUS MIXTURES AND FOR PRODUCING AND TESTING MOULDED BODIES
PROCEDES ET DISPOSITIF DE PRODUCTION DE MELANGES HOMOGENES ET DE PRODUCTION ET DE VERIFICATION DE CORPS MOULES

(30) Priorität: 23.08.2001 DE 10141459
(43) Veröffentlichungstag der Anmeldung: 19.05.2004
(73) Patentinhaber: Polymaterials AG, 87600 Kaufbeuren (DE)
(72) Erfinder: MAIER, Gerhard, 80807 München (DE); REHMET, Roland, 87600 Kaufbeuren (DE); STEBANI, Jürgen, 87600 Kaufbeuren (DE); SCHNEIDER, Christian, 91054 Erlangen (DE)
(74) Vertreter: Beetz & Partner
(86) Internationale Anmeldenummer: PCT/EP2002/009456
(87) Internationale Veröffentlichungsnummer: WO 2003/018287

(56) Entgegenhaltungen:
- EP-A- 0 419 911
- AU-A- 7 500 981
- DE-A- 2 063 756
- DE-A- 3 826 095
- DE-A- 10 056 389
- DE-B- 1 133 116
- DE-U- 9 010 864
- FR-A- 2 755 637
- US-A- 3 070 427
- US-A- 4 067 673
- US-A- 4 255 367
- US-A- 4 403 866
- US-A- 4 438 072
- US-A- 4 805 154
- US-A- 5 253 994
- US-A- 5 865 537
- PATENT ABSTRACTS OF JAPAN vol. 003, no. 023 (C-038), 26. Februar 1979 (1979-02-26) -& JP 53 147757 A (TOYOTA MOTOR CORP), 22. Dezember 1978 (1978-12-22)
- PATENT ABSTRACTS OF JAPAN vol. 008, no. 207 (M-327), 21. September 1984 (1984-09-21) & JP 59 096932 A (SHARP KK), 4. Juni 1984 (1984-06-04)
- PATENT ABSTRACTS OF JAPAN vol. 1999, no. 01, 29. Januar 1999 (1999-01-29) -& JP 10 278081 A (TOSHIBA MACH CO LTD), 20. Oktober 1998 (1998-10-20)
- TUCHBREITER A, MÜHLHAUPT R: "The polyolefin challenges: catalyst and process design, tailor-made materials, high-throughput development and data mining" , WILEY VCH VERLAG GMBH , WEINHEIM XP001147798 Seite 13 -Seite 17
- PATENT ABSTRACTS OF JAPAN vol. 1998, no. 03, 27. Februar 1998 (1998-02-27) -& JP 09 300403 A (MEIHOO:KK), 25. November 1997 (1997-11-25)

## Beschreibung

Die Erfindung betrifft Verfahren und Vorrichtungen zur schnellen Erzeugung von homogenen oder quasi-homogenen Gemischen aus Mehrkomponentensystemen, insbesondere aus unterschiedlichen Kunststoffmischungen, und zur Erzeugung und gegebenenfalls auch zur Handhabung und Prüfung von Formkörpern aus solchen Gemischen.

Die Herstellung von Formkörpern aus unterschiedlichen Kunststoffmischungen ist z.B. bei der Entwicklung optimierter Kunststoffzusammensetzungen, bei der Entwicklung neuer Blendsysteme oder auch zur Prüfung der Eigenschaften neuer Additive in einer Kunststoffmatrix wichtig. Dabei müssen in vielen Fällen Versuchsreihen mit zahlreichen Kunststoffmischungen durchgeführt werden, deren Zusammensetzung schrittweise geändert wird, etwa um den Einfluß einer in ihrem Mengenanteil geänderten Komponente auf die Eigenschaften daraus erhaltener Gemische und Formkörper zu ermitteln.

Derartige Versuche werden bisher vergleichsweise langsam und in wenig wirtschaftlicher Weise durchgeführt, indem beispielsweise mit einem Mischaggregat, z.B. einem Kneter oder Extruder, die Kunststoffkomponenten gemischt und anschließend in einem separaten Schritt meist als Granulat in Kunststoffspritzgießmaschinen zu Formkörpern geformt werden. Ein nachgeschalteter Schritt besteht in der Prüfung dieser Formkörper z.B. hinsichtlich ihrer mechanischen und thermischen Kennwerte sowie weiterer technisch relevanter Größen. Die Ermittlung dieser Kennwerte ist in verschiedenen Prüfnormen festgelegt; die etwa nach DIN-Normen erhaltenen Daten können dann unmittelbar miteinander verglichen werden.

Problematisch an der geschilderten Vorgehensweise in separaten, nicht miteinander integrierten unabhängigen Schritten ist vor allem der hohe Zeitbedarf für die Herstellung der einzelnen Kunststoffmischungen, die Formung der Mischungen beispielsweise in Spritzgießmaschinen und die Prüfung der erzeugten Formkörper in Prüfmaschine. Ein weiterer Nachteil ist, daß wegen der in den üblicherweise eingesetzten Mischaggregaten, wie z.B. Zweischneckenextrudern oder Knetern, auftretenden Rückvermischung eine lange Verweilzeit der jeweiligen Kunststoffmischung in der Vorrichtung resultiert. Daraus ergibt sich ein vergleichsweise hoher Zeitbedarf für das Freispülen des Aggregats und den Wechsel der Mischungen. Dementsprechend sind nach dieser Methode pro Technikumseinheit, bestehend aus Compoundiereinrichtung, Spritzgießmaschine und Prüfgeräten, nur wenige tausend Mischungen pro Jahr herstellbar und auch prüfbar. Deswegen konnte bisher nur eine kleine Auswahl der möglichen Rezepturen erzeugt und geprüft werden, wobei unter anderem versucht wurde, mit verschiedenen Methoden der statistischen Versuchsplanung die nicht untersuchten Mischungsbereiche auf theoretische Weise durch Interpolation der erhaltenen Meßwerte zu erschließen.

Es existieren aber Fragestellungen, zu deren Beantwortung wesentlich mehr Kunststoffmischungen hergestellt, zu Formkörpern verarbeitet und geprüft werden müssen. So ist z.B. bei einer Kombination von zwei bis drei Kunststoffen mit zwei bis drei Additiven, aus der unter Variation der Zusammensetzung etwa in Prozentschritten bezüglich aller Anteile Formkörper erzeugt werden sollen, die herkömmliche Vorgehensweise nicht dazu geeignet, in hinreichend kurzer Zeit die angestrebten Ergebnisse zu liefern.

Aus der Patentliteratur sind etliche Vorrichtungen bekannt, die lediglich die Erzeugung von Kunststoffmischungen zum Gegenstand haben.

In DE 196 53 099 ist eine Vorrichtung beschrieben, bei der mindestens zwei Kunststoffkomponenten in ein mechanisch angetriebenes Mischelement eingeführt, darin vermischt und anschließend in ein Spritzgießwerkzeug gefördert werden, um eine gute Durchmischung der verarbeiteten Materialien zu erreichen.

In DE 198 08 620 ist eine gegenüber DE 196 53 099 erweiterte Vorrichtung beschrieben, die zusätzliche Speicherelemente aus einem Zylinder mit Kolben aufweist, um auch reaktive Komponenten verarbeiten zu können, ohne daß sich die Fördereinrichtungen zusetzen. Die Dosierung der gespeicherten Komponenten erfolgt ebenfalls in das Mischelement hinein. Die Verwendung einer mechanisch angetriebenen rotierenden Mischeinrichtung hat den Nachteil, daß entweder der Wechsel von einer Zusammensetzung der Mischung zur nächsten sehr lange dauert, weil eine große Menge der neuen Mischung zum Spülen kontinuierlich durch die Mischeinrichtung gefördert werden muß, oder die Mischeinrichtung bei jedem Wechsel der Zusammensetzung ausgebaut und durch eine gereinigte ersetzt werden muß. Derartige Vorrichtungen sind daher nicht zum schnellen Wechseln von Kunststoffmischungen geeignet.

EP 0 904 927 A1 beschreibt eine Einrichtung zum Einspritzen eines aus mindestens zwei Komponenten bestehenden Reaktivsystems, insbesondere eines Flüssigsilikonkautschuks, in eine Form, wobei die Komponenten über eine volumetrische Dosiereinheit mit Dosierkolben einer Mischeinrichtung zugeführt werden und das dabei erhaltene Gemisch in einen Einspritzzylinder übergeführt wird. Die Dosiereinheit ist dabei in die Spritzgießmaschine integriert. Wesentlich ist bei dieser vorbekannten Vorrichtung, daß für jede Komponente eine Dosiereinheit mit Dosierkolben vorgesehen ist und die Vereinigung der Ströme der Komponenten in einem dynamischen Mischer erfolgt. Das Problem der schnellen Herstellung von Formkörpern unterschiedlicher Zusammensetzung ist in dieser Druckschrift nicht angesprochen. EP 0 940 927 bezieht sich zudem insbesondere auf reaktive Flüssigsilikongemische, die sich in ihren theologischen und thermodynamischen Eigenschaften grundlegend von Thermoplasten unterscheiden.

Aus US 5 688 462 ist ein Spritzgießprozeß bekannt, bei dem ein statischer Mischer verwendet wird. Der Mischer befindet sich innerhalb des Werkzeugs unmittelbar vor dem Formeingang, um thermisch bedingte Inhomogenitäten der Schmelze zu vermeiden. Mit dieser Vorrichtung ist aufgrund fehlender Dosier- und Zuführungseinrichtungen kein schneller Produktwechsel möglich.

Aus DE 2 329 966 ist eine Vorrichtung zum Herstellen von Erzeugnissen aus Thermoplasten bekannt, bei der an eine Plastifizierungsvorrichtung, z.B. einen Schneckenextruder, ein statischer Mischer angeschlossen ist, an dessen Eingang eine Zweitkomponente eingeführt wird. Bei dieser Vorrichtung handelt es sich im Wesentlichen um einen Extruder mit Mischeinrichtung und nicht um eine Spritzgießmaschine, die andererseits für eine integrierte Erzeugung von Formkörpern notwendig ist.

Aus US 4 255 367 ist ein Verfahren zur Herstellung von Spritzgießerzeugnissen bekannt, bei dem Additive während des Einspritzens des geschmolzenen Kunststoffes in Flußrichtung in den Schmelzestrom zwischen der Einspritzeinrichtung, die einen Speicherzylinder mit Kolben aufweist, und dem Mischelement zugegeben werden. Aufgrund einer abschnittweisen Zudosierung von Additiven wird gezielt ein inhomogener Formkörper mit einer Art Kern-Schale-Struktur erzeugt. Ein solches Verfahren, ist zum Beispiel für eine Rezepturentwicklung, bei der es insbesondere auf eine einheitliche Zusammensetzung von Prüfkörpern ankommt, gänzlich ungeeignet.

In DE 19 902 990 sind ein Verfahren und eine Vorrichtung beschrieben, bei denen ein Kunststoffmaterial mit einem Zusatz in einer Schubschnecken-Plastifiziereinheit vorgemischt, in einem dynamischen Mischer gemischt und dann in die Kavität eines Spritzgießwerkzeuges gespritzt wird. Nachteilig ist hierbei, daß der Mischvorgang in derartigen Plastifiziereinheiten mit Mischwirkung sehr langsam ist; außerdem ist der Reinigungsaufwand bei der Schubschnecken-Plastifiziereinheit erheblich, so daß der Zeitbedarf für den Misch- und Einspritzvorgang einschließlich der Reinigungszyklen beim Wechsel der Mischungen bis zu einigen Stunden betragen kann.

Ähnliche Probleme der schnellen Erzeugung homogener Gemische wechselnder Zusanunensetzung treten etwa auch bei der Entwicklung kosmetischer Zusammensetzungen oder in der Lebensmitteltechnologie auf, z.B. bei der Entwicklung von Snackfood-Zusammensetzungen aus Pasten oder Teigen auf der Basis stärkehaltiger Produkte mit wechselnden Zusätzen oder wechselnder Zusammensetzung.

Das Patent US 5 865 537 beschreibt eine Mischvorrichtung zum Einmischen eines niedrigviskosen Fluids in ein hochviskoses Fluid. Diese Druckschrift offenbart eine Vorrichtung, wie sie im Oberbegriff des Anspruchs 17 definiert ist, bei der zwar der Sekundärstrom, zum Beispiel ein Additiv, über eine seitliche Öffnung in der Vormischeinrichtung in den Primärstrom, zum Beispiel eine Polymerschmelze, eingeführt wird, der Sekundärstrom jedoch noch im Inneren durch ein konzentrisches Rohr geführt wird, wodurch die Strömungsrichtung des Sekundärstroms etwa parallel zur Strömungsrichtung des Primärstroms verläuft.

Dieser Druckschrift ist kein Hinweis auf die Herstellung von Formkörpern unterschiedlicher Zusammensetzung in einem zyklischen Betrieb unter Dosierung bestimmter Gemischvolumina zu entnehmen.

Es ist Aufgabe der Erfindung, Verfahren und Vorrichtungen zur gegenüber dem Stand der Technik deutlich schnelleren und wirtschaftlicheren Erzeugung von homogenen oder quasi-homogenen Gemischen aus viskosen oder pastosen Mehrkomponentensysternen, insbesondere aus unterschiedlichen Kunststöffsystemen, und zur Erzeugung und gegebenenfalls auch zur Handhabung und Prüfung von Formkörpern aus solchen Gemischen anzugeben, bei denen ein einfacher und rascher Wechsel der Zusammensetzung möglich ist, vorzugsweise unter Minimierung des Materialeinsatzes.

Ferner soll es möglich sein, die erhaltenen Gemische oder Formkörper, wahlweise nach einer Zwischenlagerung oder prozeßgekoppelt, nach ihrer Erzeugung einer oder mehreren Prüfungen zu unterziehen, insbesondere im Rahmen eines Gesamtprozesses, der die Gemisch- und/oder Formkörperherstellung und die Prüfung der Gemische bzw. Formkörper umfaßt.

Die Aufgabe wird durch die Merkmale der unabhängigen Ansprüche gelöst. Die abhängigen Ansprüche sind auf bevorzugte Ausführungsformen der Erfindungskonzeption gerichtet.

Kunststoffmischungen zur Herstellung von Formkörpern sind in der Regel homogen, wobei es bei Blends vorkommen kann, daß die Mischungen nur quasi-homogen, das heißt, nicht ideal homogen sind, wobei die Homogenität jedoch für die Formkörperherstellung und Formkörperprüfung ausreicht.

Beim erfindungsgemäßen Verfahren zur schnellen Erzeugung von homogenen oder quasi-homogenen Gemischen vorgegebener und insbesondere häufig wechselnder Zusammensetzung und gegebenenfalls von Formkörpern daraus werden Mehrkomponentensysteme eingesetzt, die zwei oder mehr viskose oder pastose Fluids (Komponentensystem A) oder ein oder mehrere viskose oder pastose Fluids und ein oder mehrere Additive (Komponentensystem B) umfassen. Die Mischung wird erzielt durch Einführen der Komponenten des Komponentensystems A oder B in vorgegebenen Mengenverhältnissen in eine Vormischeinrichtung bzw. eine Spritzeinheit, worin der viskose oder pastose Zustand des Komponentensystems erhalten bleibt. Das in der Vormischeinrichtung erhaltene Komponentensystem wird in einer Mischeinrichtung zu einem homogenen oder quasi-homogenen Gemisch vermischt, woraus dann Formkörper erzeugt werden können.

In seiner allgemeinsten Form umfaßt das erfindungsgemäße Verfahren zur schnellen Erzeugung von homogenen oder quasi-homogenen Gemischen vorgegebener Zusammensetzung aus Komponentensystemen
(A) aus zwei oder mehr viskosen oder pastosen Fluids oder
(B) aus einem oder mehreren viskosen oder pastosen Fluids und einem oder mehreren Additiven
folgende Verfahrensabschnitte in der angegebenen Abfolge:
(I) Erzeugung eines Stroms mit konstantem und wählbarem Durchsatz aus mindestens einem der viskosen oder pastosen Fluids des Komponentensystems (A oder B) (Primärstrom),
(II) Einführung der übrigen Komponenten des Komponentensystems (A oder B) auf im wesentlichen gleicher axialer Höhe, bezogen auf eine Ebene quer zur Strömungsrichtung des Primärstroms, in den Primärstrom in Form eines oder mehrerer Sekundärströme mit konstantem und wählbarem Durchsatz in der Weise, daß die Strömungsrichtungen der Sekundärströme angenähert parallel zur Strömungsrichtung des Primärstroms verlaufen,
   unter Bildung eines Stroms eines Vorgemisches der Komponenten des Komponentensystems (A oder B), der innerhalb sich über seinen Querschnitt erstrekkender Volumenelemente insgesamt im wesentlichen gleichbleibende Zusammensetzung aufweist, die der vorgegebenen Zusammensetzung entspricht, und
(III) Förderung eines vorgegebenen und wählbaren Volumens des Vorgemisches durch eine Mischeinrichtung mit radialer Mischwirkung hindurch unter Erhalt eines homogenen oder quasi-homogenen Gemisches aus dem Komponentensystem (A oder B),
   wobei die Verfahrensschritte (I) bis (III) unter Erzeugung des gleichen oder eines geänderten Komponentensystems (A oder B) in Zyklen wiederholt werden.

Der Primärstrom kann entsprechend aus mehreren Komponenten bestehen und seinerseits bereits ein Vorgemisch darstellen.

Dem Verfahrensabschnitt III kann sich vorzugsweise folgender Verfahrensabschnitt IV anschließen:
(IV) Erzeugung eines oder mehrerer Formkörper aus dem erhaltenen homogenen oder quasi-homogenen Gemisch.

In Verfahrensabschnitt II entsteht durch die Einführung der Sekundärströme in den Primärstrom oder das Inkontaktbringen der beiden Ströme eine Struktur des Vorgcmisches, die durch den Vergleich mit einem Zahnpastastrang mit Farbstreifen im Umfangsbereich veranschaulicht werden kann, wobei der Primärstrom dem Zahnpastastrang und die Sekundärströme den Farbstreifen entsprechen. Jedes sich über den Querschnitt des Vorgemischstrangs erstreckende Volumenelement (Scheibchen) dieser Vorgemischstruktur hat in Axialrichtung bereits insgesamt im wesentlichen gleichbleibende Zusammensetzung; in radialen Richtungen liegt, je nach den relativen Mengenverhältnissen der Komponenten, nur geringe bis praktisch keine Homogenität vor. In der nachgeschalteten Mischeinrichtung mit radialer Mischwirkung wird das Vorgemisch radial homogenisiert.

Beim radialen Mischen verschwinden folglich die "Zahnpastastreifen", und es bildet sich ein insgesamt dreidimensional homogenes oder quasi-homogenes Gemisch, aus dem dann Formkörper hergestellt werden können.

Beim erfindungsgemäßen Verfahren ist es vorteilhaft, wenn die Strömungsrichtung in den Verfahrensabschnitten I, II und III und, falls durchgeführt, auch in Verfahrensabschnitt IV gleich ist.

Dieses Verfahren der Gemischerzeugung kann kontinuierlich durchgeführt werden.

Wenn sich eine Formkörpererzeugung als Verfahrensabschnitt IV anschließt, wird das Verfahren insgesamt in der Regel diskontinuierlich, falls die Formkörpererzeugung nicht eine kontinuierliche Extrusion ist.

Das Verfahren kann aber jedenfalls bis zur Erzeugung der Gemische in Verfahrensabschnitt II oder III kontinuierlich durchgeführt werden. Dem Fachmann sind ferner Vorrichtungen zur Zwischenspeicherung oder Pufferung eines kontinuierlich erzeugten Gemischstroms bekannt, die es erlauben, aus einem kontinuierlich anfallenden Gemischstrom diskontinuierlich, etwa durch Spritzgießen, Formkörper herzustellen.

Es kann aber auch vorteilhaft sein, die Förderung des Vorgemischstroms durch die Mischeinrichtung in Verfahrensabschnitt III und gegebenenfalls auch in Verfahrensabschnitt IV in einer Strömungsrichtung vorzunehmen, die der Strömungsrichtung des Primärstroms in Verfahrensabschnitt I und des Vorgemischstroms in Verfahrensabschnitt II entgegengesetzt ist.

Diese Verfahrensweise ist aufgrund der Umkehrung der Strömungsrichtung diskontinuierlich.

Bei einer solchen Verfahrensweise werden die Komponenten des Komponentensystems in vorgegebenen Mengenverhältnissen in eine Spritzeinheit eingeführt, in welcher der viskose oder pastose Zustand des Komponentensystems erhalten bleibt, in einer nachgeschalteten Mischeinrichtung homogenisiert oder quasi homogenisiert, wonach aus dem Gemisch Formkörper erzeugt werden können. Diese Grundverfahrensweise ist aus dem oben angegebenen Dokument DE 19 902 990 bekannt.

Eine erste Ausführungsweise des erfindungsgemäßen Verfahrens mit Umkehrung der Strömungsrichtung in Verfahrensabschnitt III und gegebenenfalls auch IV umfaßt folgende Merkmale:
- Verwendung einer Spritzeinheit, die im wesentlichen aus einem Zylinder und einem darin axial verschiebbaren Kolben besteht,
- gleichzeitige Einführung der Komponenten des Komponentensystems (A oder B) in ein sich über den radialen Querschnitt des Zylinders erstreckendes Volumenelement am auslaßseitigen Ende des Zylinders der Spritzeinheit oberhalb des Kolbens unter gleichzeitigem Zurückfahren des Kolbens aus einer obersten Hubstellung in eine untere Hubstellung und Bildung eines Vorgemisches der Komponenten des Komponentensystems (A oder B), das innerhalb sich über den radialen Querschnitt des Zylinders erstreckender Volumenelemente insgesamt im wesentlichen gleichbleibende Zusammensetzung aufweist, die der vorgegebenen Zusammensetzung entspricht,
- Förderung des Vorgemisches durch Vorfahren des Kolbens aus der unteren Hubstellung in eine obere Hubstellung durch die Mischeinrichtung hindurch
   und
- Homogenisierung oder Quasi-Homogenisierung des Vorgemisches in einer Mischeinrichtung mit radialer Mischwirkung, insbesondere einer statischen Mischeinrichtung.

### Danach kann sich eine Formkörpererzeugung anschließen.

Bei einer zweiten Ausführungsweise des erfindungsgemäßen Verfahrens mit Umkehrung der Strömungsrichtung erfolgt die Einführung der Komponenten des Komponentensystems in den Zylinder der Spritzeinheit oberhalb des Kolbens unter gleichzeitigem Zurückfahren des Kolbens aus seiner obersten Hubstellung in eine untere Hubstellung und Bildung eines Vorgemisches der Komponenten des Komponentensystems, dessen Zusammensetzung insgesamt der vorgegebenen Zusammensetzung entspricht, wonach die Homogenisierung des Vorgemisches in einer Mischeinrichtung mit radialer und mit axialer Mischwirkung vorgenommen wird. Eine solche Mischeinrichtung kann eine dynamische Mischeinrichtung sein, ist aber bevorzugt ein statischer Mischer.

Bei der ersten dieser Ausführungsweisen werden beim Zurückbewegen des Kolbens die Komponenten des Komponentensystems in ein und dasselbe Volumenelement am auslaßseitigen Ende des Zylinders eingeführt, vorzugsweise über Einlässe am Zylinder, die sich auf gleicher axialer Höhe befinden.

Der Kolben kann dabei durch den Druck, der sich durch die Einführung der Komponenten oberhalb des Kolbens aufbaut, in eine untere Hubstellung gedrückt werden. Dieser Vorgang kann auch durch ein aktives Zurückfahren des Kolbens über seine Antriebseinrichtung unterstützt werden.

Durch die Einführung der Komponenten auf bevorzugt etwa gleicher axialer Höhe des Zylinders wird beim Zurückbewegen des Kolbens eine Vorgemischstruktur gebildet, die wiederum durch den Vergleich mit einem Zahnpastastrang mit Farbstreifen veranschaulicht werden kann.

Nach der oben erläuterten zweiten Ausführungsweise des erfindungsgemäßen Verfahrens mit Umkehrung der Strömungsrichtungen müssen die Komponenten des Komponentensystems nicht zwingend in das gleiche Volumenelement bzw. auf etwa gleicher axialer Höhe in den Zylinder eingeführt werden. Die axiale Position der Einlässe des Zylinders kann folglich prinzipiell für die verschiedenen eingeführten Komponenten unterschiedlich sein, da das gebildete Vorgemisch in diesem Fall durch die Mischeinrichtung, die axiale und radiale Mischwirkung aufweist, homogenisiert oder quasihomogenisiert wird.

Bei dieser Ausführungsweise des erfindungsgemäßen Verfahrens kann es vorteilhaft sein, eine oder mehrere der Komponenten des Komponentensystems auf unterschiedlicher axialer Höhe in den Zylinder einzuführen, vor allem aus Platzgründen, wenn die entsprechenden Zuführungseinrichtungen, Ventile, Dosiereinrichtungen, etc. oder ihre Anschlüsse am Zylinder sperrig sind und einen hohen Raumbedarf aufweisen oder eine, gesehen in Achsenrichtung, sternartige radiale Anordnung dieser Einrichtungen am Zylinder vermieden werden soll.

Die Homogenisierung des Komponentensystems bei den beiden Verfahrensweisen mit Umkehrung der Strömungsrichtung erfolgt dadurch, daß der Kolben vorwärts bewegt und somit der Inhalt des Zylinders durch die Mischeinrichtung gedrückt wird.

Wenn ein Formwerkzeug angeschlossen ist, geschieht das Füllen vorteilhaft über eine Düse, die mit oder ohne Heißkanal ausgeführt sein kann. Das nachgeschaltete Formwerkzeug ist vorteilhaft als Spritzgießwerkzeug, ebenfalls mit oder ohne Heißkanal, ausgebildet und weist günstigerweise mehr als eine Kavität auf, um gleichzeitig mehrere, evtl. in ihrer Form unterschiedliche Formkörper herstellen zu können.

Die Sekundärströme werden generell vorzugsweise in radialer Richtung in den Primärstrom eingeführt.

Beim erfindungsgemäßen Verfahren ist bevorzugt mindestens eines der viskosen oder pastosen Fluids ein geschmolzener Kunststoff, z.B. ein thermoplastischer Kunststoff oder ein thermoplastisches Elastomer oder ein anderer förderbarer Kunststoff, der vorteilhafterweise eine Polymermatrix bildet. Die Komponenten können aber auch zur Herstellung von Polymer-Blends, von Kosmetikprodukten (z.B. Lippenstiften, Hautcreme, etc.) oder pharmazeutischen Produkten (z.B. Zäpfchen) geeignet sein, oder es kann sich auch um Lebensmittelkomponenten, insbesondere für Bäckerei- bzw. Confiserieprodukte (z.B. Brot, Kuchen), oder auch um Komponenten zur Herstellung von Spielzeug (z.B. Knetmasse) handeln.

Das nach Verfahrensabschnitt III erhaltene Gemisch kann, gegebenenfalls vor einem nachgeschalteten Verfahrensabschnitt IV, einer Reaktion in einem Reaktor oder einem Reaktionsabschnitt unterzogen werden. Eine vorteilhafte Anwendung dieser Verfahrensweise ist die Kochextrusion von stärkehaltigen Getreidemahlprodukten, die insbesondere zur Herstellung von Instant-Mehl oder Instant-Grieß oder zur Erzeugung von Snackfood herangezogen wird. Die Formkörper können in diesem Fall Mehle oder Grieße oder Snackprodukte sein. Der Kochextruder kann dabei zugleich die Funktion der Mischeinrichtung übernehmen, die in diesem Fall radiale und axiale Mischwirkung besitzt.

Beim erfindungsgemäßen Verfahren ist vorteilhaft mindestens eine der Komponenten des Komponentensystems ein Matrixmaterial, insbesondere ein geschmolzenes Kunststoffmaterial, und mindestens eine der übrigen Komponenten ein Additiv. Typische Additive sind z.B. Füllstoffe, UV-Stabilisatoren, Oxidationsstabilisatoren, Katalysatoren, Fließ- und Entformungsmittel, Gleitmittel, Polymerkomponenten, Flammschutzmittel, Farbstoffe, Pigmente, reaktive Komponenten, etc., von denen eine oder mehrere Komponenten mit einem oder mehreren der genannten viskosen oder pastosen Fluids bevorzugt in Form von z.B. Flüssigkeiten, Lösungen, Dispersionen, Emulsionen, Pulvern, Granulaten, Schmelzen oder Fasern bevorzugt in den Primärstrom eingeführt werden. Praktischerweise werden zwei oder mehr der vorgenannten Komponenten in bereits vorgemischter Form, insbesondere als Preblends, für den Primärstrom und/oder den Sekundärstrom verwendet.

Die Vormischeinrichtung bzw. der Zylinder ist bevorzugt so ausgebildet, daß je nach Anforderung eine wechselnde Anzahl von Zuführungseinrichtungen für Sekundärströme durch Wechselanschlüsse, z.B. Bajonettanschlüsse, daran anschließbar sind. Jc nach Anforderungen können auch verschiedene Arten von Zuführungseinrichtungen, wie z.B. Ein- oder Zweischneckenextruder, an die Vormischeinrichtung anschließbar sein.

Beim erfindungsgemäßen Verfahren können also im Prinzip beliebig viele Sekundärströme wählbar in den Primärstrom eingeführt werden.

Nach einer besonders bevorzugten Ausführungsform des Verfahrens werden ein oder mehrere Gemische als Sekundärströme in den Primärstrom eingeführt, die ihrerseits nach dem erfindungsgemäßen Verfahren nach Verfahrensabschnitt II oder nach Verfahrensabschnitt III erhalten sind. Bei dieser Verfahrensweise ergeben sich besonders viele Gemischkombinationsmöglichkeiten und besonders homogene Endgemische bzw. qualitativ besonders hochwertige Formkörper.

Das erfindungsgemäße Verfahren wird vorteilhaft in einem geschlossenen System durchgeführt, insbesondere die Verfahrensabschnitte I bis III oder I bis IV.

Grundsätzlich ist es dabei von Vorteil, wenn ein, mehrere oder sämtliche Einführungsmittel für Sekundärströme bzw. Zuführungseinrichtungen eine Dosiereinrichtung aufweisen, mit der die entsprechenden Komponenten des Komponentensystems bei ihrer Einführung in den Zylinder dosiert werden können, um so Absolutmengen oder vorgegebene Mengenverhältnisse der Komponenten einstellen zu können. Die Komponenten des Komponentensystems werden vorzugsweise in im wesentlichen radialer Richtung in den Zylinder eingeführt.

Das Volumen der Fördereinrichtung und/oder der Vormischeinrichtung, das bei der Formkörpererzeugung zur Formgebung verwendet wird, bzw. das Hubvolumen des Zylinders der Spritzeinheit wird bei diskontinuierlicher Arbeitsweise bevorzugt so gewählt, daß es einer oder mehreren Füllungen des Formwerkzeugs entspricht, das in an sich bekannter Weise mehrere gleiche oder unterschiedliche Kavitäten aufweisen kann. Zudem ist es besonders vorteilhaft, wenn die verwendeten Vorrichtungen möglichst wenig Totvolumen aufweisen, also möglichst der gesamte Inhalt der Vorrichtungen zur Gemisch- bzw. Formkörperherstellung verwendet werden kann, wenn vom Totvolumen der Mischeinrichtung und des Formwerkzeugs abgesehen wird.

Die Erzeugung des Formkörpers bzw. der Formkörper wird vorteilhaft in getakteter Weise vorgenommen, wobei
- in einem Gemischerzeugungstakt die Verfahrensabschnitte I bis III durchgeführt werden
   und
- in einem oder mehreren darauf folgenden Formgebungstakten Formkörper aus dem homogenen oder quasi-homogenen Gemisch erzeugt werden,
wonach die obige Abfolge eines Gemischerzeugungstaktes und eines oder mehrerer darauf folgender Formgebungstakte beliebig oft wiederholt werden kann.

Bei Formgebung durch Spritzgießen wird der Verfahrensabschnitt III und gegebenenfalls auch der Verfahrensabschnitt IV vorteilhaft bei einer höheren Massen- oder Volumengeschwindigkeit bzw. bei einem höheren Durchsatz durchgeführt als die Verfahrensabschnitte I und II.

Wenn die Zusammensetzung des Komponentensystems geändert bzw. ein anderes Komponentensystem verwendet werden soll, müssen nach einem oder mehreren Zyklen der Erzeugung von Formkörpern aus dem einen Komponentensystem das Totvolumen des Zylinders und die Mischeinrichtung und gegebenenfalls auch eine zur Formgebung verwendete Düse bzw. das Formwerkzeug mit dem anschließend zu verwendenden Komponentensystems anderer Zusammensetzung gespült werden. Aus dem zum Spülen verwendeten Komponentensystem können dann anschließend ebenfalls Formkörper hergestellt werden. Auf diese Weise werden Reste einer vorhergehenden Zusammensetzung sehr schnell aus dem System entfernt.

Gemäß einer weiteren Ausführungsweise werden durch kontinuierliches Extrudieren des homogenisierten oder quasi-homogenisierten Komponentensystems z.B. zylindrische oder rechteckige Stränge oder Folienbänder hergestellt, aus denen dann die eigentlichen Formkörper ausgestanzt oder ausgeschnitten bzw. abgeschnitten werden können.

Mit dem oben beschriebenen erfindungsgemäßen Verfahren werden bevorzugt solche Formkörper hergestellt, die als Prüfkörper zur Ermittlung von werkstoffspezifischen Eigenschaften, d.h. von Kenngrößen des jeweiligen zu prüfenden Komponentensystems, z.B. von Kunststoffmischungen, dienen. Das erfindungsgemäße Verfahren eignet sich jedoch selbstverständlich auch als Produktionsverfahren für Gemische oder Formkörper.

Das erfindungsgemäße Verfahren wird bevorzugt so durchgeführt, daß der Durchsatz des Primärstroms und die Durchsätze der Sekundärströme mit einer Steuereinrichtung gesteuert werden. Dies geschieht vorteilhaft so, daß die Einführung und Förderung einer, mehrerer oder der Gesamtheit der Komponenten des Komponentensystems nach Art, Dosiermenge und/oder Dosiergeschwindigkeit gesteuert wird. Dies gilt auch für die Verfahrensvariante mit Umkehrung der Strömungsrichtung. Ferner wird vorteilhaft auch die Formkörpererzeugung aus den erhaltenen Gemischen gesteuert.

Das erfindungsgemäße Verfahren kann ferner auch in vorteilhafter Weise als Gesamtverfahren ausgebildet sein, das die Herstellung von Formkörpern sowie ihre Handhabung und Prüfung umfaßt. In diesem Fall werden nach dem Verfahrensabschnitt IV ein oder mehrere der folgenden Schritte durchgeführt:
(a) sequentielles und/oder paralleles Zuführen der Formkörper zu einem Transportsystem, gegebenenfalls unter Entnahme aus einem Magazin;
(b) Transportieren der Formkörper zu einer oder mehreren Prüfeinrichtungen;
(c) Durchführung der entsprechenden Prüfung(en) in einer oder mehreren Prüfeinrichtungen;
(d) sequentielles oder paralleles Wegtransportieren der Formkörper oder daraus entstandener Produkte nach Durchführung der Prüfung(en) von der oder den Prufeinrichtungen und Einführen in ein Magazin, in ein Archivlager oder in einen Abfallsammelbehälter.

Das Gesamtverfahren wird vorteilhaft zu einem einzigen Prozeß integriert, der die Formkörpererzeugung und die Handhabung und Prüfung der Formkörper umfaßt, vorzugsweise auch die Erfassung und Auswertung von Prüfergebnissen.

Ein Schritt oder mehrere oder sämtliche Schritte des erfindungsgemäßen Verfahrens einschließlich des oben erläuterten Gesamtverfahrens werden vorzugsweise unter zentraler Datenerfassung und Datenverarbeitung durchgeführt bzw. gesteuert, insbesondere mit einem Computersystem oder einem Mikroprozessorsystem. Die Steuerung kann auch mit einer speicherprogrammierbaren Steuerung (SPS) erfolgen.

So werden zum Beispiel ein oder mehrere oder sämtliche Transportvorgänge, insbesondere in den Schritten (a), (b) und/oder (d), mit einer Steuereinrichtung gesteuert. Gleiches gilt auch für die Prüfungen in Schritt (c); diese Prüfungen und/oder die Erfassung, Verarbeitung und/oder Weiterleitung und/oder die Ausgabe von Prüfergebnissen werden ebenfalls vorteilhaft mit einer Steuereinrichtung gesteuert.

Eine vorteilhafte Ausführungsform des obigen Gesamtverfahrens ist gekennzeichnet durch Erfassung, Verarbeitung und/oder Weiterleitung von Prüfergebnissen in oder nach Schritt (c).

Wenn die Formkörper in Schritt (b) zu mehreren Prüfeinrichtungen transportiert werden, kann der Transport sequentiell und/oder parallel erfolgen. Gleiches gilt auch für die Prüfungen in Schritt (c).

Den verschiedenen Prüfeinrichtungen muß in der Regel der für die betreffende Prüfung vorgesehene spezielle Formkörpertyp zugeführt werden.

Hierzu ist bei der Formkörperherstellung entweder ein automatischer oder ein manueller Wechsel des Formwerkzeugs oder die Verwendung eines Formwerkzeugs mit mehreren, den herzustellenden Formkörpern entsprechenden Kavitäten erforderlich; gerade für diese Fälle eignet sich eine zentrale Steuerung von Teilprozessen oder auch des Gesamtprozesses in besonderem Maße.

Bei den oben genannten Prüfungen werden die Formkörper auf eine oder mehrere ihrer chemischen, insbesondere polymerchemischen, physikalischen, biochemischen, biologischen, pharmakologischen, organoleptischen, haptischen oder anderen relevanten Eigenschaften hin geprüft. Die Prüfung kann sich auch auf eine oder mehrere der mechanischen, polymerphysikalischen, optischen, elektrischen oder magnetischen Eigenschaften beziehen.

Ein weiterer Aspekt der vorliegenden Erfindung ist die Zuordnung von Prüfergebnissen zur Zusammensetzung der geprüften Formkörper. Diese Zuordnung wird im Rahmen der Erfindung vorteilhaft ebenfalls mit einer Steuereinrichtung oder einer Datenverarbeitungseinrichtung vorgenommen.

Wenn die Zuordnung in einfacher Weise und eindeutig möglich ist, insbesondere bei Versuchsreihen mit einer geringen Anzahl unterschiedlicher Form- bzw. Prüfkörper, ist eine mathematische Korrelation normalerweise nicht erforderlich.

Bei Erzeugung einer großen Zahl von Formkörpern unterschiedlicher Zusammensetzung in relativ kurzen Zeiten im Minuten- bis Stundenbereich und ihrer Prüfung auf eine oder mehrere Eigenschaften fallen jedoch große Datenmengen an, aus denen der Einfluß der variierten Variablen und der jeweils konstantgehaltenen Parameter auf die Prüfergebnisse in vielen Fällen nicht mehr in einfacher und eindeutiger Weise erkannt oder ermittelt werden kann. Dies gilt besonders bei der Herstellung von Kunststoff-Formkörpern, da hierbei zahlreiche Kombinationen von Prozeßvariablen und Prozeßparametern möglich sind und oft auch praktisch realisiert werden müssen.

Für solche Fälle ist es im Rahmen der Erfindung vorgesehen, mathematische Korrelationsverfahren anzuwenden und vorzugsweise in einer Steuereinrichtung bzw. Datenverarbeitungseinrichtung zu implementieren, die zu einer Korrelation zwischen Prozeßvariablen, Prozeßparametern und Formkörperzusammensetzungen einerseits mit einer oder mehreren Eigenschaften der Formkörper andererseits führen.

Typische Prozeßvariable bzw. Prozeßparameter, also Größen, die variiert bzw. konstantgehalten werden, sind beispielsweise die Zusammensetzung des eingesetzten Komponentensystems, die Mengenverhältnisse der Komponenten, die Verarbeitungstemperaturen, die Art und Geschwindigkeit der Homogenisierung, die Dauer der Lagerung von Prüfkörpern vor der Prüfung, die Aufheiz- und Abkühlgeschwindigkeit, die Dauer von Spülvorgängen und die dabei eingesetzten Mengen des nächstfolgenden Komponentensystems, etc.

Neben verschiedenen statistischen Auswertungen besteht eine bevorzugte Verfahrensweise darin, solche Korrelationen mit Hilfe eines Neuronalen Netzwerks zu ermitteln. Dem Fachmann sind solche Auswertungs- und Korrelationsverfahren per se geläufig, so daß sie nicht im einzelnen erörtert werden müssen.

Mit solchen Auswertungssystemen lassen sich mit im Vergleich zu herkömmlichen Verfahren geringem zeitlichem Aufwand auch Trends bei Reihenversuchen hinsichtlich der Produkteigenschaften erkennen.

Die Erfindung betrifft ferner auch eine Vorrichtung zur schnellen Erzeugung von homogenen oder quasi-homogenen Gemischen vorgegebener Zusammensetzung aus Komponentensystemen
(A) aus zwei oder mehr viskosen oder pastosen Fluids oder
(B) aus einem oder mehreren viskosen oder pastosen Fluids und einem oder mehreren Additiven,
die aufweist:
- eine Förder- und Vormischeinrichtung, die umfaßt:
   - eine Fördereinrichtung mit einem oder mehreren Einlässen für mindestens eines der viskosen oder pastosen Fluids des Komponentensystems (A oder B) als Material für einen Primärstrom, die das Material als Primärstrom bei konstantem und wählbarem Durchsatz in einer vorgegebenen Strömungsrichtung fördern kann,
      und
   - eine Vormischeinrichtung, die vorzugsweise am stromabseitigen Ende der Fördereinrichtung angeordnet ist und aufweist:
      - einen Haupteinlaß für den Primärstrom aus der Fördereinrichtung,
      - einen oder mehrere Einlässe für die übrigen Komponenten des Komponentensystems (A oder B), die sich im wesentlichen in der gleichen Ebene quer zur Strömungsrichtung des Primärstroms befinden, die vorzugsweise in der Nähe des Haupteinlasses oder am Haupteinlaß liegt,
         und
      - Einführungsmittel, die mit den Einlässen verbunden und so ausgebildet sind, daß die übrigen Komponenten des Komponentensystens (A oder B) in Form eines oder mehrerer Sekundärströme mit dem Primärstrom in Kontakt gebracht und/oder in diesen eingeführt werden können,
   - eine Mischeinrichtung mit radialer Mischwirkung, deren Einlaß am Ausgang der Vormischeinrichtung angeordnet ist und an deren Ausgang das homogene oder quasi-homogene Gemisch aus dem Komponentensystem (A oder B) austritt, sowie
   - eine Steuereinrichtung, die eine oder mehrere Funktionen der Vorrichtung steuert,
      **dadurch gekennzeichnet, daß** die Steuereinrichtung
   - die Fördereinrichtung für den Primärstrom
      und
   - die Vormischeinrichtung mit den Einführungsmitteln
      so steuert, daß
      (I) die Fördereinrichtung einen Primärstrom mit konstantem und wählbarem Durchsatz aus mindestens einem der viskosen oder pastosen Fluids des Komponentensystems (A oder B) erzeugt,
      (II) die Vormischeinrichtung mit den Einführungsmitteln die übrigen Komponenten des Komponentensystems (A oder B) in Form eines oder mehrerer Sekundärströme mit konstantem und wählbarem Durchsatz unter Bildung eines Stroms eines Vorgemisches in den Primärstrom einführt
         und
      (III) die Fördereinrichtung mit der Vormischeinrichtung ein vorgegebenes, wählbares Volumen des Vorgemisches durch die Mischeinrichtung fördert,
         und die Schritte (I) bis (III) unter Erzeugung des gleichen oder eines geänderten Komponentensystems (A oder B) in Zyklen wiederholt werden.

Zur Formkörperherstellung kann die Vorrichtung ferner ein Formwerkzeug aufweisen, das mit dem Ausgang der Mischeinrichtung verbunden oder verbindbar ist.

Nach einer Ausführungsform ist die Vorrichtung **dadurch gekennzeichnet, daß**
- der Haupteinlaß der Vormischeinrichtung für den Primärstrom im wesentlichen auf der gleichen axialen Höhe am auslaßseitigen Ende der Vormischeinrichtung liegt wie die Einlässe für die Sekundärströme,
- die Vormischeinrichtung eine eigene Fördereinrichtung mit zwei einander entgegengesetzten, umkehrbaren Förderrichtungen aufweist und in der ersten Förderrichtung mit dem Material des Primärstroms und des bzw. der Sekundärströme füllbar ist, wobei der Primärstrom mit den Sekundärströmen in Kontakt kommt, während in der zweiten Förderrichtung das in der Vormischeinrichtung gebildete Vorgemisch der Komponenten des Komponentensystems (A oder B) in bzw. durch die Mischeinrichtung förderbar ist.

Bei dieser Vorrichtung besteht die Fördereinrichtung der Vormischeinrichtung im wesentlichen aus einem darin in einem Zylinder vorgesehenen Kolben und einem Kolbenantrieb (Spritzeinheit), wobei die Einlässe für die Sekundärströme am auslaßseitigen Ende des Zylinders liegen und in einem Volumenelement VE münden und der Kolben in Axialrichtung im Zylinder zurück- und vorbewegbar ist und beim Zurückbewegen des Kolbens in eine untere Hubstellung aus dem Primärstrom und dem bzw. den Sekundärströmen, die in der ersten Strömungsrichtung strömen, ein Vorgemisch der Komponenten des Komponentensystems gebildet wird, das bei anschließendem Vorbewegen des Kolbens in eine obere Hubstellung in bzw. durch die Mischeinrichtung förderbar ist.

Bei einer derartigen Vorrichtung ist die Strömungsrichtung der Fördereinrichtung und/oder die Strömungsrichtung der Vormischeinrichtung umkehrbar.

Nach einer anderen Ausführungsform münden die Einlässe für die Sekundärströme am auslaßseitigen Ende des Zylinders und/oder an einer davon axial beabstandeten Position, wobei dann die Mischeinrichtung eine Mischeinrichtung mit radialer und axialer Mischwirkung ist.

Bei den oben beschriebenen erfindungsgemäßen Vorrichtungen münden die Einlässe der Vormischeinrichtung, die zylindrische Grundform aufweist, vorteilhafterweise in im wesentlichen radialer Richtung. Gemäß der ersten Ausführungsform der erfindungsgemäßen Vorrichtung wird ein Vorgemisch erzeugt, das innerhalb sich über den radialen Querschnitt der zylindrischen Vormischeinrichtung erstreckender "scheibchenförmiger" Volumenelemente VEᵢ praktisch unabhängig von ihrer axialen Höhe im wesentlichen gleichbleibende Zusammensetzung aufweist. Diese Vorgemischstruktur, die oben durch den Vergleich mit Farbstreifen eines Zahnpastastrangs veranschaulicht wurde und die sich beim Zurückführen des Kolbens unter Füllung des Hubvolumens im Zylinder bildet, wird am besten dadurch erzeugt, daß die Komponenten des zu verarbeitenden Komponentensystems über die verschiedenen Zuführungseinrichtungen in ein und dasselbe Volumenelement VE am auslaßseitigen Ende des Zylinders, also auf gleicher oder im wesentlichen gleicher axialer Höhe, in den Zylinder eingeführt werden.

Die Vorrichtung gemäß der zweiten Ausführungsform weist eine Mischeinrichtung auf, die axiale und radiale Mischwirkung besitzt. In diesem Fall führt die Mischeinrichtung unabhängig von der Art und Struktur des Vorgemisches, das im Zylinder der Spritzeinheit erzeugt wurde, zu einem homogenen oder quasi-homogenen Gemisch, aus dem dann Formkörper erzeugt werden. Dementsprechend können bei dieser zweiten Ausführungsform der Vorrichtung die Einlässe der Zuführungseinrichtungen auf gleicher und/oder auf unterschiedlicher axialer Höhe an der Vormischeinrichtung angeordnet sein.

Die Fördereinrichtung besteht vorteilhaft im wesentlichen aus einer Einheit aus einer Plastifizierschnecke und einem Kolben.

Gemäß vorteilhaften Ausführungsformen ist die Vormischeinrichtung ausgebildet
- als im wesentlichen zylindrisches Element, das am Umfang eine oder mehrere in den Primärstrom mündende Öffnungen oder Düsen zur Einführung von Sekundärströmen über die Einlässe aufweist,
   oder
- als senkrecht zur Strömungsrichtung des Primärstroms angeordnete blendenartige und vom Primärstrom durchströmbare und/oder umströmbare Platte oder Scheibe, die Öffnungen oder Düsen zur Einführung von Sekundärströmen über die Einlässe aufweist, die auf der Stromabseite der Platte oder Scheibe axial in Strömungsrichtung oder in einer Richtung senkrecht zur Strömungsrichtung des Primärstroms in den Primärstrom münden,
   oder
- als im Primärstrom angeordneter, vom Primärstrom umströmter und vorzugsweise im wesentlichen rotationssymmetrischer Strömungskörper, der Öffnungen oder Düsen zur Einführung von Sekundärströmen über die Einlässe aufweist, die auf der Stromabseite des Strömungskörpers in den Primärstrom münden.

Das Formwerkzeug ist bevorzugt ein Spritzgießwerkzeug. Es kann aber auch ein Stranggießwerkzeug sein, wobei der erzeugte Strang durch eine Stanz- oder Schneideeinrichtung zu einzelnen Formkörpern geschnitten werden kann.

Bei den erfindungsgemäßen Vorrichtungen sind die Mittel, mit denen der Primärstrom erzeugt und in die Vorrichtung eingeführt wird, sowie die Einführungsmittel für Sekundärströme entweder als solche zu einer Dosierung der entsprechenden eingeführten Stoffströme geeignet oder weisen eine Dosiervorrichtung auf. Dem Fachmann sind derartige Mittel und Dosiereinrichtungen geläufig. Typische Zuführungseinrichtungen, die zugleich Dosierfunktion aufweisen, sind Extruder; durch Schalten des Antriebs oder Drehzahlstcuerung läßt sich die Dosierfunktion erzielen.

Im Rahmen der Erfindung können jedoch auch beliebige andere an sich bekannte Dosiereinrichtungen verwendet werden, z.B. Zahnradpumpen, Ventile, Klappen, Schieber, Kolbendosiervorrichtungen u.dgl..

Mit den Dosiereinrichtungen lassen sich die Durchsätze bzw. die Absolutmengen der einzelnen Komponenten und damit ihr Mengenverhältnis einstellen und somit in besonders einfacher Weise bestimmte vorgegebene Zusammensetzungen bzw. Formulierungen realisieren.

Die erfindungsgemäßen Vorrichtungen zur Erzeugung von Formkörpern können ferner auch eine oder mehrere Prüfeinrichtungen zur Eigenschaftsprüfung von erzeugten Formkörpern aufweisen, die dem Formwerkzeug bzw. einem Entnahme- und Magaziniersystem nachgeschaltet sind, oder mit einer oder mehreren Prüfeinrichtungen kombiniert sein.

Die erfindungsgemäße Vorrichtung ist bevorzugt modular aufgebaut, wobei die Fördereinrichtung, die Vormischeinrichtung und die Mischeinrichtung und gegebenenfalls auch das Formwerkzeug als Module ausgebildet sind, die vorzugsweise durch Schnellverschlüsse lösbar miteinander verbindbar sind.

Auch die Transport-, Lager- und Prüfeinrichtungen können modular aufgebaut sein.

Nach besonders bevorzugten Ausführungsformen weist die erfindungsgemäße Vorrichtung ein oder mehrere Einführungsmittel für Sekundärströme und/oder eine Fördereinrichtung für den Primärstrom auf, die erfindungsgemäße Vorrichtungen zur Herstellung entsprechender Komponentengemische sind.

Die erfindungsgemäße Vorrichtung zur Formkörpererzeugung kann vorteilhaft ein oder mehrere Magazine zur Lagerung oder Zwischenlagerung von Formkörpern und ein Transportsystem aufweisen.

Die Vorrichtung kann ferner vorteilhaft ein Magaziniersystem aufweisen, das ein oder mehrere Magazine und ihre Transport-, Signal- oder Datenverbindungen umfaßt, in dem bzw. denen erzeugte Formkörper gelagert oder zwischengelagert werden können.

Eine sehr vorteilhafte Ausführungsform der erfindungsgemäßen Vorrichtung umfaßt
- ein Transportsystem
   und
- eine oder mehrere Prüfeinrichtungen zur Prüfung von Eigenschaften der Formkörper,
wobei das Transportsystem mindestens eine der folgenden Funktionen durchführen kann:
(i) Entnahme oder Erhalt von Formkörpern aus einem Formwerkzeug, einer Schneid- oder Stanzeinrichtung, einem Magaziniersystem, einem Magazin und/oder einem Archivlager,
(ii) Transport von Formkörpern zu einer oder mehreren Prüfeinrichtungen,
(iii) Transport von Formkörpern von einer oder mehreren Prüfeinrichtungen zu einer oder mehreren anderen Prüfeinrichtungen,
(iv) Transport von Formkörpern von einer oder mehreren Prüfeinrichtungen zu einem Magaziniersystem, in ein Magazin, ein
   Archivlager und/oder einen Abfallsammelbehälter,
(v) Transport von Formkörpern von einem Magaziniersystem oder einem Magazin in ein anderes Magaziniersystem oder ein anderes Magazin,
(vi) Anbringen einer Codierung an Formkörpern oder Magazinen und/oder Lesen einer Codierung an Formkörpern oder Magazinen und Steuerung der Transportvorgänge in Abhängigkeit von der Codierung,
(vii) Transport von Magazinen, in denen Formkörper magazinierbar sind, zu Abgabestellen oder Rückgabestellen.

Eine oder mehrere der Funktionen (i) bis (vü) können dabei sequentiell und/oder parallel durchgeführt werden.

Die Vorrichtung zur Handhabung und gegebenenfalls Prüfung von Formkörpern kann ein oder mehrere Magazine aufweisen, in denen Formkörper lagerbar oder zwischenlagerbar sind.

Steuerbare und insbesondere zentral steuerbare Transportsysteme wie auch Prüfsysteme sind als solche dem Fachmann geläufig.

So kann das Transportsystem der erfindungsgemäßen Handhabungsvorrichtung vorteilhaft z.B. als Förderbandsystem, Wagensystem, Rollbahnsystem, Schienensystem, Rondellsystem oder Robotersystem ausgebildet sein.

Rondellsysteme haben die Vorteile einer einfachen mechanischen Konstruktion und einer einfachen Ansteuerung.

Nach einer ganz besonders bevorzugten Ausführungsform ist die erfindungsgemäße Vorrichtung zur Herstellung von Form- bzw. Prüfkörpern mit der Vorrichtung zur Handhabung und Prüfung von Formkörpern zu einer Gesamtvorrichtung integriert. Durch eine Kombination von Herstellung und Prüfung von Formkörpern einschließlich der Ergebnisauswertung lassen sich in äußerst wirtschaftlicher und zugleich zeitsparender Weise Prüfergebnisse erzielen.

Diese Vorteile haben vor allem dann besonderes Gewicht, wenn Reihenversuche mit zahlreichen Formkörpern häufig wechselnder Zusammensetzung durchgeführt werden sollen.

Die Codiersysteme unterliegen im Rahmen der Erfindung keiner Einschränkung. So können die Codierungen holographische Codierungen, Barcode-Codierungen, Magnetcodierungen, Transpondercodierungen, Chipcodierungen, Farbcodierungen oder Formcodierungen sein.

Es ist im Rahmen der Erfindung nicht zwingend erforderlich, Formkörper sowie Magazinplätze und Prüfeinrichtungen durch Zuordnung oder Anbringung eines Codes zu codieren.

Nach einer einfachen Ausführungsform der erfindungsgemäßen Vorrichtungen können sich Adressen, bei denen bestimmte Formkörper von einem Transportsystem abzuliefern oder abzuholen sind (Abgabestellen, Entnahmestellen, Rückgabestellen), allein aus einer vorgegebenen Reihenfolge der Erzeugung bestimmter Formkörper bzw. der Reihenfolge von Abgabestellen, Entnahmestellen oder Rückgabestellen ergeben. In solchen Fällen resultiert die Zuordnung von bestimmten Formkörpern zu bestimmten Adressen insbesondere aus dem Prozeßablauf selbst, ohne daß hierfür eine individuelle Codierung erforderlich ist. In der Praxis werden solche Zuordnungen vorteilhaft von einer Steuereinrichtung erzeugt und gegebenenfalls über Datenverbindungen zwischen der Steuereinrichtung und entsprechenden Einrichtungen wie Prüfeinrichtungen oder Magazinen übertragen. Diese abfolgebezogenen Zuordnungen können auch gespeicherte Zuordnungen sein.

Die erfindungsgemäßen Vorrichtungen weisen eine Steuereinrichtung auf, die eine oder mehrere weitere oder sämtliche weiteren Funktionen der Vorrichtung steuert. Sie kann eine Eingabeeinrichtung zur Dateneingabe und eine Ausgabeeinrichtung aufweisen.

Die Steuereinrichtung kann prinzipiell so ausgelegt sein, daß sie mit den gesteuerten bzw. zu steuernden Vorrichtungselementen oder entsprechenden Aktuatoren in Signal- oder Datenverbindung steht. Diese Verbindung kann leitungsgebunden oder nicht leitungsgebunden sein und im letztgenannten Fall z.B. eine Funkverbindung, wie etwa eine Bluetooth-Verbindung, sein. Die Signal- oder Datenverbindungen können so ausgestaltet sein, daß Signale oder Daten in beiden Übertragungsrichtungen übertragbar sind, um so beispielsweise eine Rückmeldung von einem angesteuerten Vorrichtungselement zur Steuereinrichtung über eine erfolgte Betätigung zu ermöglichen.

Die Steuereinrichtung ist vorteilhaft so ausgebildet, daß sie den jeweiligen Gesamtprozeß steuern kann, mindestens jedoch eine der folgenden weiteren Einrichtungen oder Funktionen:
- Kolbenantriebe bzw. Antriebseinheiten;
- Dosiereinrichtungen der Einführungsmittel für Sekundärströme;
- die Zusammensetzung des Primärstroms und/oder von Sekundärströmen;
- die Mischeinrichtung;
- die Formhälften bzw. den Werkzeugantrieb;
- ein Magaziniersystem;
- ein oder mehrere Magazine;
- ein Transportsystem;
- Prüfeinrichtung(en);
- eine Codiereinrichtung;
- die Codierung von Formkörpern und von Entnahmestellen und/oder Abgabestellen von Magazinen;
- die Erfassung, Auswertung, Verarbeitung, Speicherung, Weiterleitung und/oder Ausgabe von Prüfergebnissen.

Die Steuereinrichtung ist vorzugsweise ein Computer, insbesondere ein Mikrocomputer, oder ein Computernetzwerk mit einem zentralen Rechner.

Die Steuereinrichtung kann jedoch auch eine speicherprogrammierbare Steuerung (SPS) sein oder eine solche Steuerung aufweisen.

Die Steuereinrichtung hat vorteilhaft auch Codierfunktionen: Für jeden erzeugten Formkörper werden sein Transportweg bis hin zu Prüfeinrichtungen und von dort zu anderen Prüfeinrichtungen oder zu Magazinen oder von Magazinen zu anderen Abgabe- oder Rückgabestellen codiert. Diese Ausführungsform ist besonders vorteilhaft, da in der Regel für jede Prüfung ein bestimmter Formkörpertyp erforderlich ist, der gezielt hergestellt, transportiert und gegebenenfalls auch gelagert werden kann.

Die Codierung erlaubt, zusammen mit entsprechenden Programmen, die Lokalisierung und Identifizierung von Formkörpern und die Zuordnung von Prüfergebnissen zu individuellen Formkörpern.

Die Steuereinrichtung kann vorteilhaft ein Neuronales Netzwerk aufweisen, mit dem z.B. Prüfergebnisse der Zusammensetzung des jeweiligen Formkörpers und/oder Verfahrensbedingungen zugeordnet werden können, so daß nach dem Lernvorgang Ergebnisvoraussagen für Zusammensetzungen möglich sind und somit entsprechende Versuche eingespart werden können.

Steuereinrichtungen und Codiersysteme sind dem Fachmann bekannt, so daß sie keiner näheren Erläuterung bedürfen.

Es ist im Rahmen der Erfindung natürlich möglich, einzelne Verfahrensschritte oder Verfahrensabschnitte oder auch das jeweilige Gesamtverfahren unter manueller Steuerung durchzuführen und entsprechende Vorrichtungsteile manuell zu bedienen, z.B. den Werkzeugantrieb oder Prüfeinrichtungen.

Die Erfindung wird im folgenden anhand von Ausführungsbeispielen unter Bezug auf die Zeichnungen näher erläutert. Es zeigen:

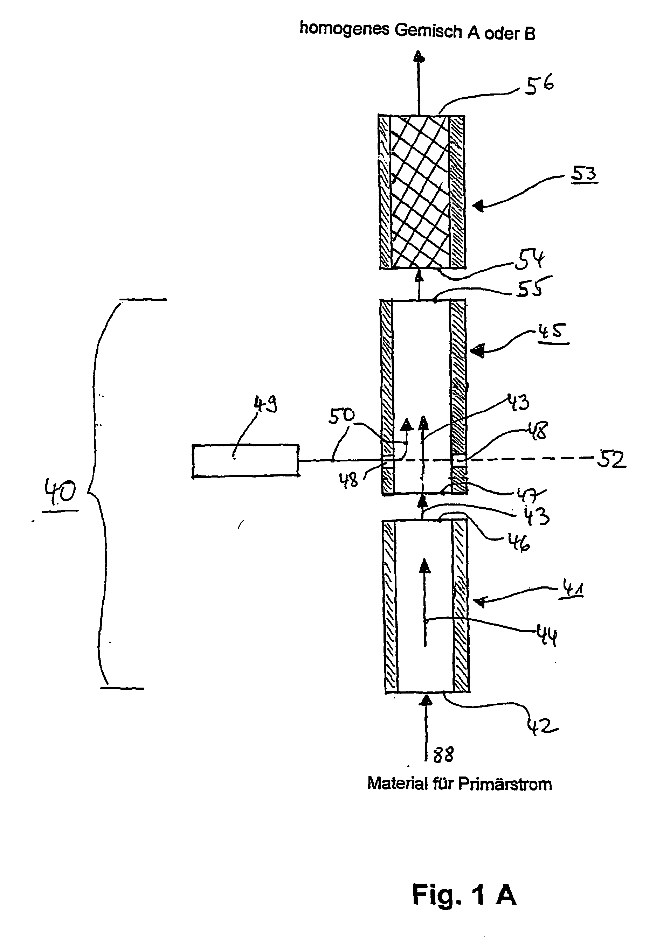

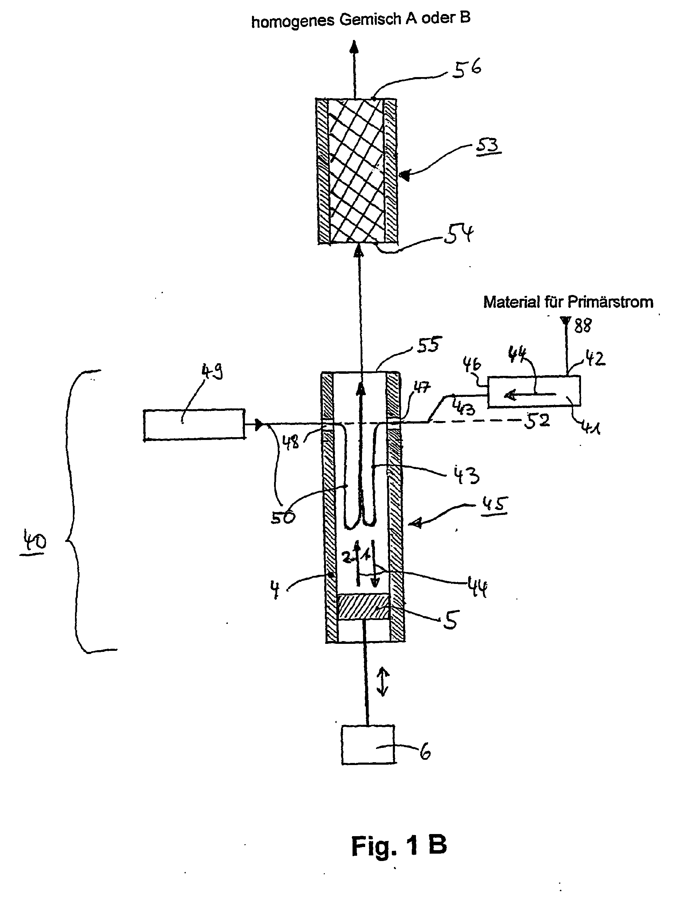

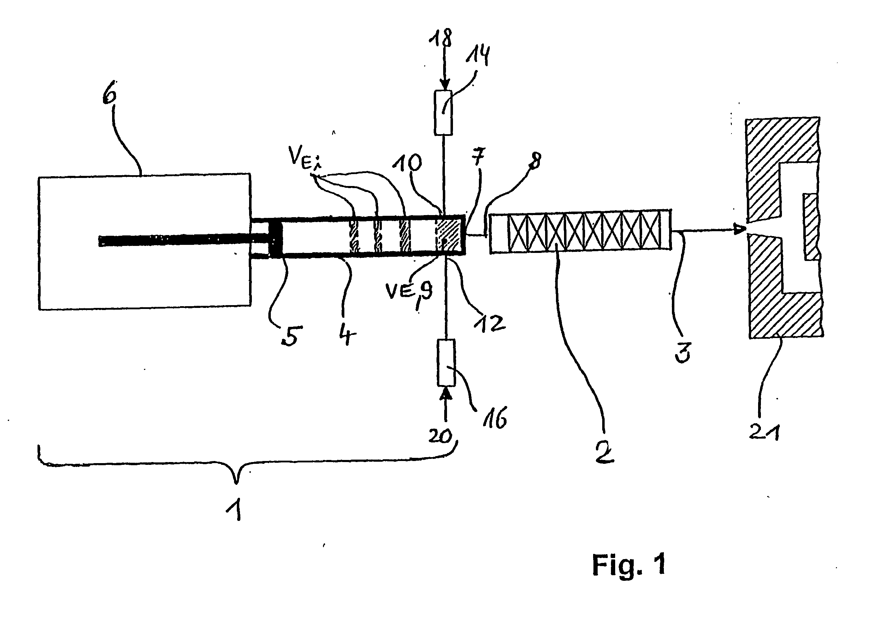

- Figuren 1A, 1B: schematische Darstellungen von erfindungsgemäßen Vorrichtungen zur Erzeugung homogener Gemische;

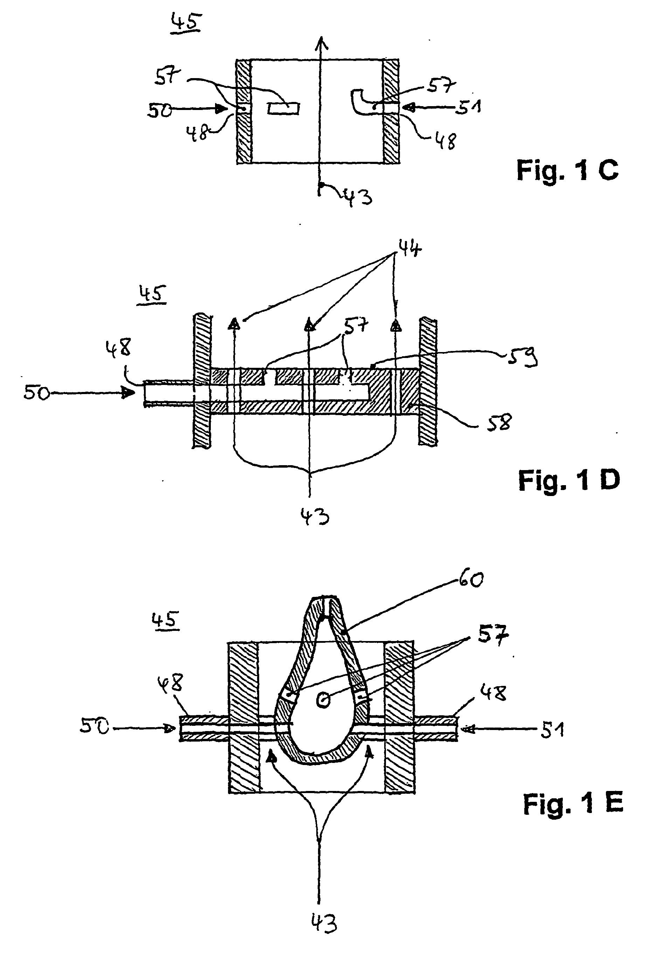

- Figuren 1C, 1D, 1E: verschiedene Ausführungsformen erfindungsgemäßer Vormisch- einrichtungen;
- Figuren 1F bis 1J: verschiedene Ausführungsformen von erfindungsgemäßen Vorrich- tungen zur Erzeugung homogener Gemische bzw. zur Formkörperer- zeugung (Fig. 1J);
- Figuren 1K bis 1P: verschiedene Ausführungsformen von Einführungsmitteln für Se- kundärströme,
- Figur 1: eine schematische Darstellung eines weiteren Ausführungsbeispiels einer erfindungsgemäßen Vorrichtung zur Formkörperherstellung;
- Figur 2A: eine schematische Darstellung eines weiteren Ausführungsbeispiels einer erfindungsgemäßen Vorrichtung zur Formkörperherstellung;
- Figur 2B: eine schematische Darstellung eines erfindungsgemäßen Gesamtprozes- ses zur Herstellung und Prüfung von Formkörpern;
- Figuren 2C bis 2F: konkretere Ausführungsbeispiele für erfindungsgemäße Vorrichtun- gen zur Erzeugung von Formkörpern;
- Figur 3: eine schematische Darstellung eines Ausführungsbeispiels der Spritz- einheit von Fig. 1;
- Figur 4: eine schematische Darstellung eines anderen Ausführungsbeispiels einer Vorrichtung zur Formkörperherstellung gemäß der Erfindung;
- Figuren 5A, 5B: einen Verfahrensablaufplan für einen erfindungsgemäßen Gesamtpro- zeß;
- Figur 6: eine schematische Ansicht eines Ausführungsbeispiels einer erfindungs- gemäßen Vorrichtung zur Formkörperherstellung in Draufsicht;
- Figur 7: eine Ansicht der Vorrichtung von Fig. 6 in Richtung A in Fig. 6;
- Figur 8: einen vergrößerten Ausschnitt der Ansicht von Fig. 7;
- Figur 9: eine schematische Darstellung eines weiteren Ausführungsbeispiels der erfindungsgemäßen Vorrichtung zur Formkörperherstellung;
- Figur 10: ein Ausführungsbeispiel für eine erfindungsgemäße Vorrichtung zur Handhabung und Prüfung von Formkörpern mit einem Transportsy- stem und
- Figur 11: ein weiteres Ausführungsbeispiel für eine erfindungsgemäße Vorrich- tung zur Handhabung und Prüfung von Formkörpern mit einem ge- genüber Fig. 10 anders ausgebildeten Transportsystem.

In der nachfolgenden Beschreibung der Ausführungsbeispiele sind für gleiche Elemente gleiche Bezugszeichen verwendet.

In Fig. 1A ist das Prinzip der erfindungsgemäßen Verfahrensweise und der erfindungsgemäßen Vorrichtung zur Erzeugung homogener Gemische schematisch dargestellt.

Die Vorrichtung umfaßt zwei Hauptbestandteile, eine Förder- und Vormischeinrichtung **40** und eine Mischeinrichtung **53,** die am Ausgang **55** der Förder- und Vormischeinrichtung **40** angeordnet ist.

Die Förder- und Vormischeinrichtung **40** umfaßt eine Fördereinrichtung **41** mit einem oder mehreren Einlässen **42** für mindestens eines der viskosen oder pastosen Fluids des Komponentensystems A oder B als Material für den Primärstrom **43** und eine Vormischeinrichtung **45,** deren Haupteinlaß **47** mit dem stromabseitigen Ende **46** der Fördereinrichtung **41** verbunden ist.

Die Fördereinrichtung **41** ist so ausgebildet, daß sie das Material des Primärstroms **43,** das von einer Materialzuführung **88** stammt, bei konstantem und wählbarem Durchsatz und/oder in einer festlegbaren Menge in einer vorgegebenen Strömungsrichtung **44** fördern kann. ,

Der Primärstrom **43,** der insbesondere ein Kunststoffmaterial darstellt und vorteilhaft das Matrixmaterial für die zu erzeugenden Komponentensystem-Gemische bildet, tritt am Haupteinlaß **47** in die Vormischeinrichtung **45** ein. Über die Einlässe **48** werden die übrigen Komponenten des Komponentensystems mit dem Primärstrom **43** in Kontakt gebracht oder in diesen eingeführt. Hierzu sind Einführungsmittel **49** für die Sekundärströme **50** vorgesehen. Die Einlässe **48** befinden sich bevorzugt in der Nähe des Haupteinlasses **47** und liegen vorteilhaft im wesentlichen auf der gleichen Ebene **52** quer zur Strömungsrichtung **44** des Primärstroms **43,** also etwa auf gleicher axialer Höhe. Die Einführungsmittel **49** sind vorzugsweise so ausgebildet, daß die Sekundärströme **50** bei konstantem und wählbarem Durchsatz und/oder in einer wählbaren Gesamtmenge eingeführt werden können.

Bei diesem Vorgang bildet sich, wie durch die beiden Pfeile in der Vormischeinrichtung **45** angedeutet ist, welche die Strömungsrichtungen von Sekundärströmen **50** und des Primärstroms **43** symbolisieren, die bereits erläuterte, mit Zahnpasta-Farbstreifen veranschaulichte Vorgemischstruktur aus, die innerhalb von Volumenelementen quer zur Strömungsrichtung insgesamt, aber noch nicht axial vermischt, die jeweils angestrebte Zusammensetzung aufweist.

Der stromabseitige Ausgang **55** der Vormischeinrichtung **45** ist mit dem Einlaß **54** der nachgeschalteten Mischeinrichtung **53** verbunden, die radiale Mischwirkung besitzt. Dabei handelt es sich bevorzugt um einen statischen Mischer. Am Ausgang **56** der Mischeinrichtung **53** tritt das homogene oder quasi-homogene Gemisch A oder B aus, das dann geprüft und/oder weiterverarbeitet werden kann, besonders unter Formgebung.

Bevorzugt schließt sich also ein Formwerkzeug an, mit dem, vorzugsweise durch Spritzgießen, Formkörper hergestellt werden können, insbesondere Prüfkörper.

Die in Fig 1A in allgemeiner Form dargestellte erfindungsgemäße Vorrichtung kann auch so ausgebildet sein oder betrieben werden, daß die Strömungsrichtung **44** des Primärstroms **43** und die Strömungsrichtung der Sekundärströme **50** bei der Erzeugung des Vorgemisches der Strömungsrichtung des Gemisches beim Mischvorgang bzw. Spritzvorgang entgegengesetzt sind.

Eine derartige Vorrichtung ist in Fig. 1B dargestellt. Bei dieser Vorrichtung ist die Vormischeinrichtung **45** als Kolbenfördereinrichtung mit einem Zylinder **4** und einem darin vor- und zurückbewegbaren Kolben **5** mit Kolbenantrieb **6** ausgebildet. Auf der axialen Höhe der Ebene **52** münden sowohl die Einlässe **48** für die Sekundärströme **50,** die durch die Einführungsmittel **49** eingeführt werden, als auch der Haupteinlaß **47** für den Primärstrom **43,** der aus dem Ende **46** der Fördereinrichtung **41** in der Strömungsrichtung **44** in die Vormischeinrichtung **45** eintritt. Die Fördereinrichtung **41** erhält das Material für den Primärstrom **43** von einer Materialzuführung **88.**

Zu Beginn der Erzeugung des Vorgemisches befindet sich der Kolben **5** in einer oberen Hubstellung und wird, wie der Pfeil **1.** der Strömungsrichtung **44** andeutet, in eine untere Hubstellung verfahren, wobei der Primärstrom **43** und die Sekundärströme **50** gewissermaßen in den Zylinder **4** 'aufgezogen' werden. Dabei bildet sich das Vorgemisch mit der bereits erläuterten Gemischstruktur. Beim anschließenden Vorschieben des Kolbens **5** in eine obere Hubstellung resultiert die umgekehrte Strömungsrichtung **44,** die mit **2.** bezeichnet ist. Dieser Auspreßvorgang führt zum Austreten des Vorgemisches aus dem Ausgang **55** der Vormischeinrichtung **43,** das über den Einlaß **54** in die Mischeinrichtung **53** eintritt, dort homogenisiert wird und aus dem Ausgang **56** austritt. Beim Auspreß- oder Spritzvorgang werden der Primärstrom **43** und die Sekundärströme **50** erforderlichenfalls durch Ventile, vorteilhaft Rückschlagventile, abgesperrt.

Die Vorgänge des Füllens der Vormischeinrichtung **45** und des Herausdrückens der entsprechenden Gemische daraus werden abwechselnd durchgeführt.

Die Fig. 1C, 1D und 1E zeigen verschiedene Ausführungsformen von Vormischeinrichtungen **45** oder funktionell wesentliche Teile davon. Fig. 1C zeigt ein zylindrisches Element, mit am Umfang angeordneten Öffnungen oder Düsen **57** mit Einlässen **48** zur Einführung von Sekundärströmen **50, 51** in den Primärstrom **43.**

In Fig. 1D ist eine senkrecht zur Strömungsrichtung **44** des Primärstroms **43** angeordnete blendenartige Platte oder Scheibe **58** dargestellt, die Öffnungen oder Düsen **57** zur Einführung von Sekundärströmen **50** über die Einlässe **48** aufweist, die auf der Stromabseite **59** der Platte oder Scheibe **57** münden.

Fig. 1E zeigt einen im wesentlichen rotationssymmetrischen Strömungskörper **60,** dessen Rotationsachse parallel zur Strömungsrichtung des Primärstroms **43** ausgerichtet ist. Der Strömungskörper **60** weist Öffnungen oder Düsen **57** zur Einführung von Sekundärströmen **50, 51** über Einlässe **48** auf, die bevorzugt auf der Stromabseite des Strömungskörpers **60** liegen.

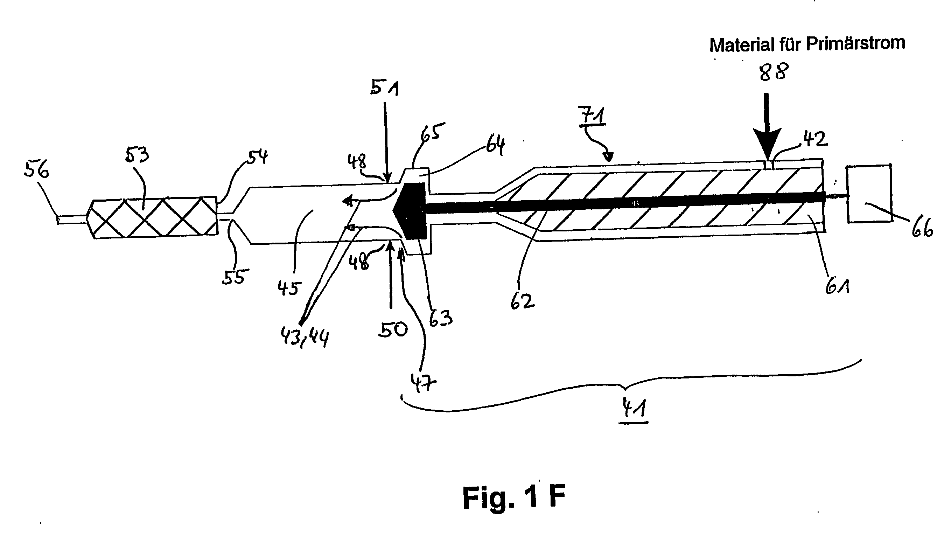

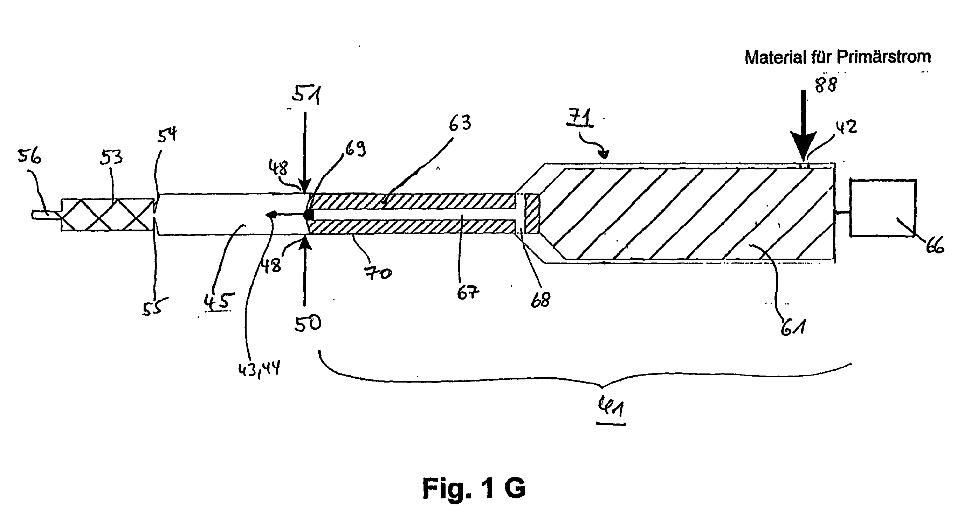

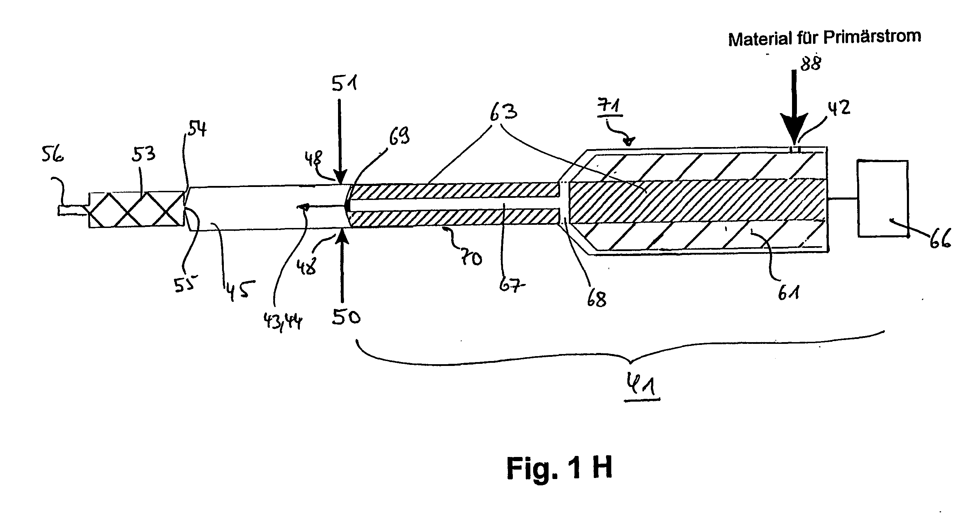

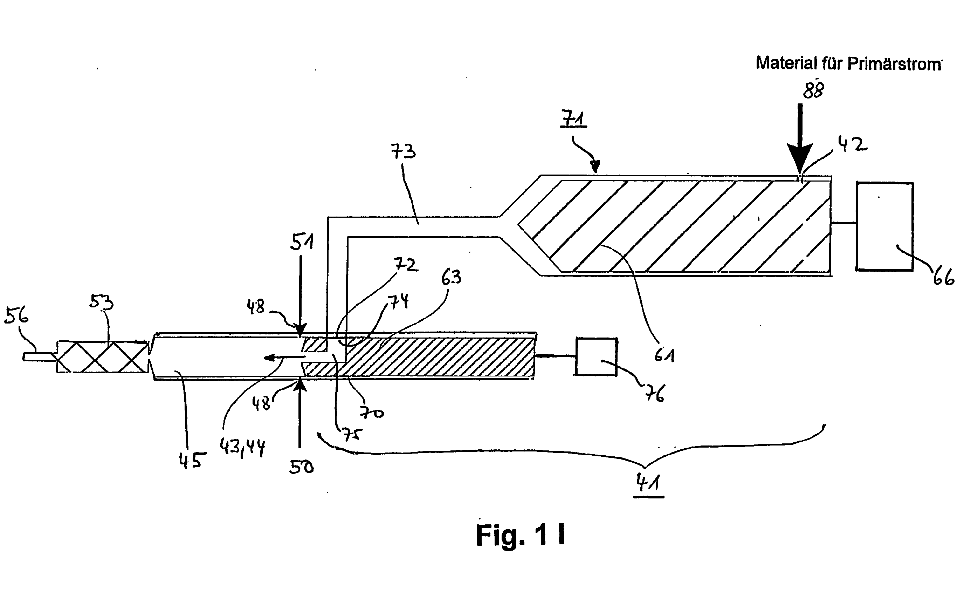

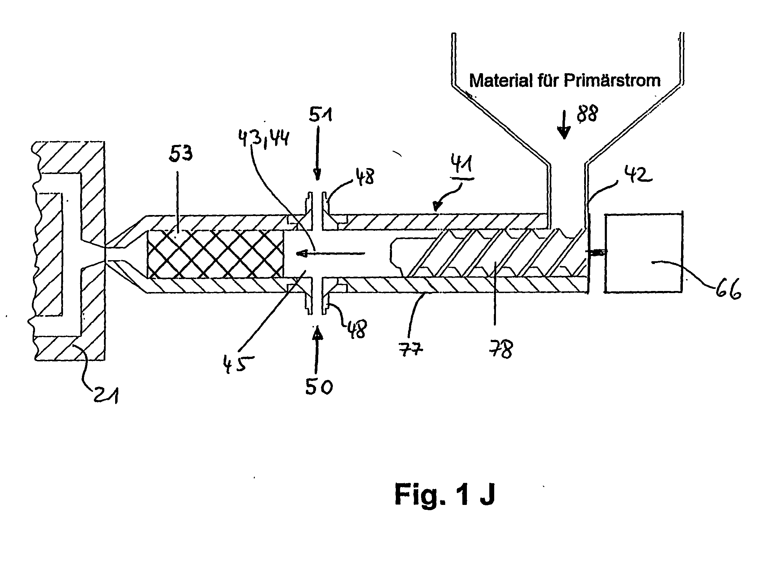

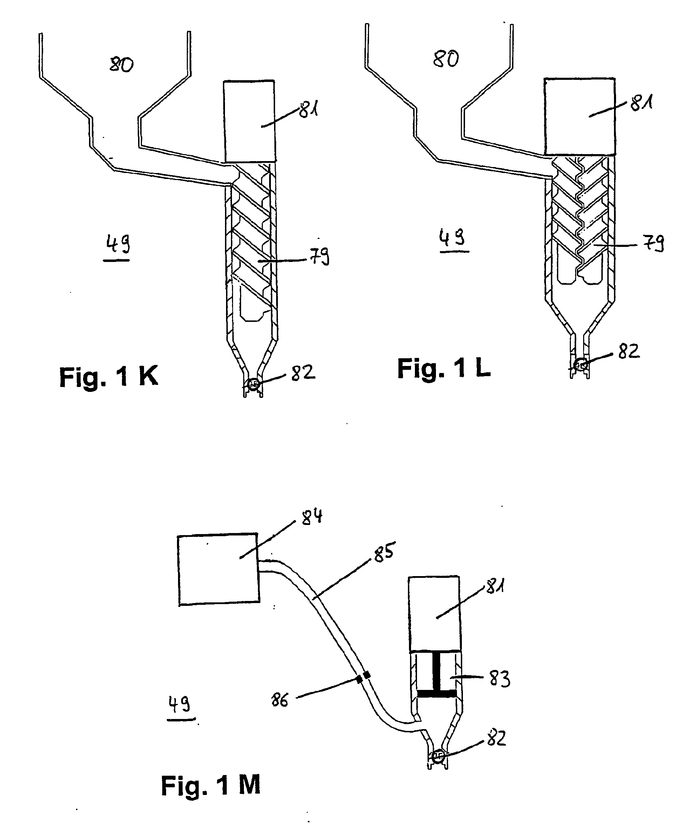

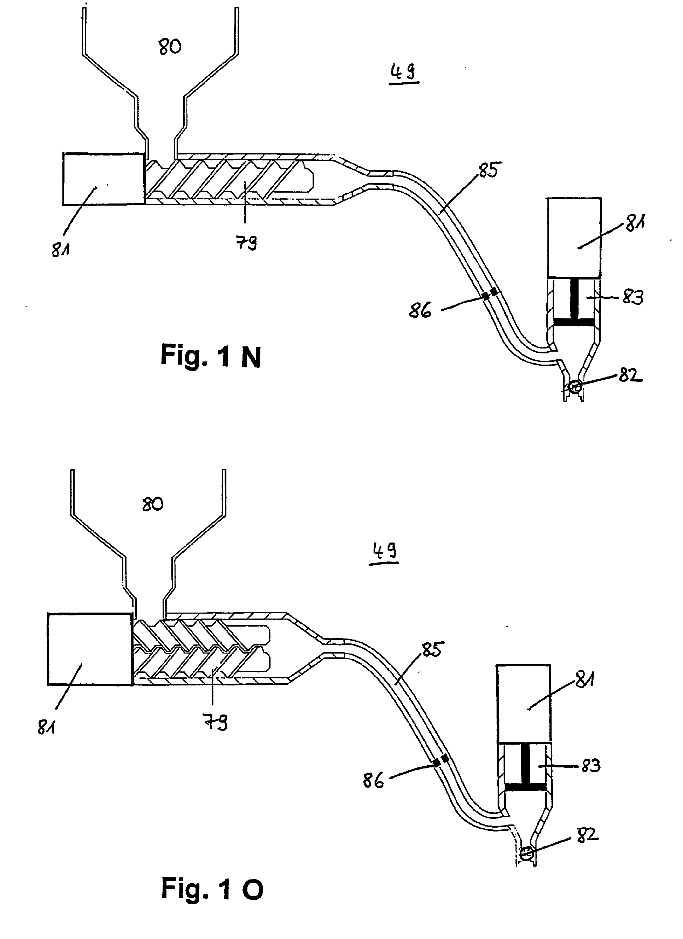

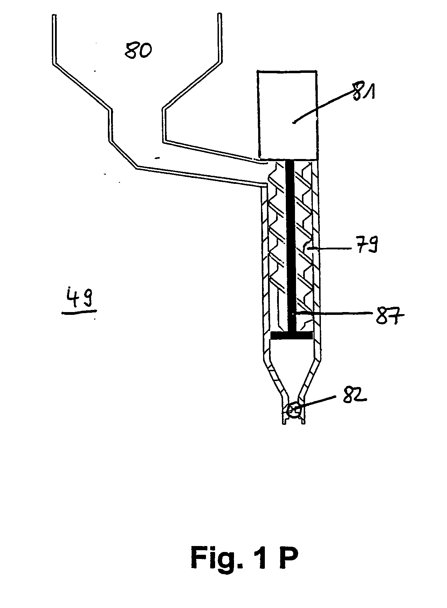

Die Vorrichtung von Fig. 1, die im Prinzip der von Fig. 1B entspricht, umfaßt eine Spritzeinheit **1,** die einen Zylinder **4,** in dem ein darin axial verschiebbarer Kolben **5** aufgenommen ist, sowie einen Kolbenantrieb **6,** der mit dem Kolben **5** in Wirkverbindung steht.

Am auslaßseitigen Ende **9** des Zylinders **4** sind Einlässe **10** und **12** vorgesehen, die auf im wesentlichen gleicher axialer Höhe radial angeordnet sind und in ein dort befindliches Volumenelement VE münden. Neben dem auslaßseitigen Volumenelement VE sind Volumenelemente VEᵢ eingezeichnet, die scheibenförmige Volumenabschnitte des eindosierten Komponentensystems repräsentieren sollen. Diese Volumenabschnitte erstrecken sich über den radialen Querschnitt des Zylinders **4.**

Mit den Einlässen **10** und 12 am Zylinder **4** sind Zuführungseinrichtungen **14** und **16** für die Komponenten des Komponentensystems verbunden, die ihrerseits Einlässe **18** bzw. **20** aufweisen.

In Förderrichtung nach dem Zylinder **4** liegt die Mischeinrichtung **2,** die bei dem Ausführungsbeispiel von Fig. 1 als statischer Mischer ausgebildet und mit ihrem Einlaß **8** mit dem Auslaß **7** der Spritzeinheit **1** verbunden ist. Der Ausgang **3** der Mischeinrichtung **2** ist wiederum mit einem Formwerkzeug **21** verbunden oder zumindest damit verbindbar ausgeführt.

Im Betrieb werden beim Zurückfahren des Kolbens **5** aus einer obersten Hubstellung in eine untere Hubstellung die Komponenten des Komponentensystems über die Zuführungseinrichtungen **14, 16** in den Zylinder eingeführt. Dabei bildet sich im Zylinder **4** ein Vorgemisch, das innerhalb der Volumenelemente VEᵢ, die gegenüber dem auslaßseitigen Volumenelement VE auf verschiedenen axialen Höhen des Zylinders **4** eingezeichnet sind, insgesamt im wesentlichen gleichbleibende Zusammensetzung aufweist. Dieses Vorgemisch wurde oben durch die Analogie zu "Zahnpastastreifen" bereits erläutert.

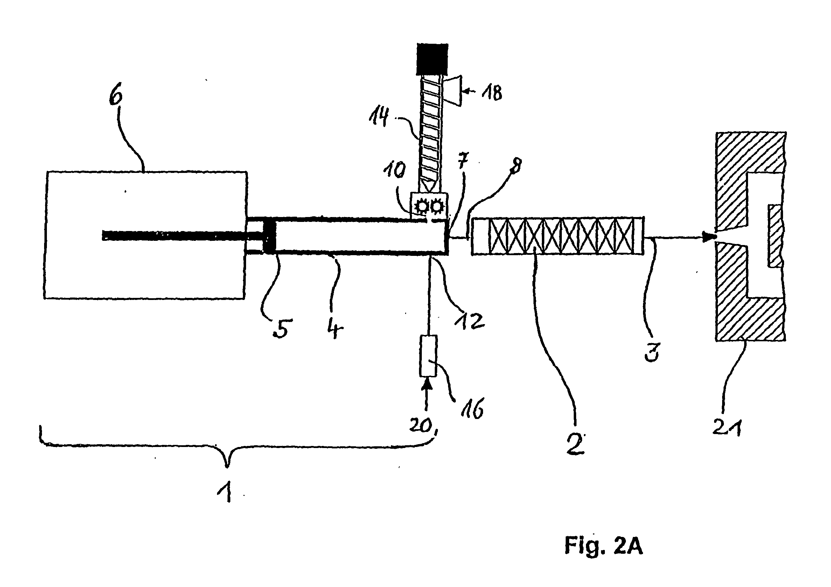

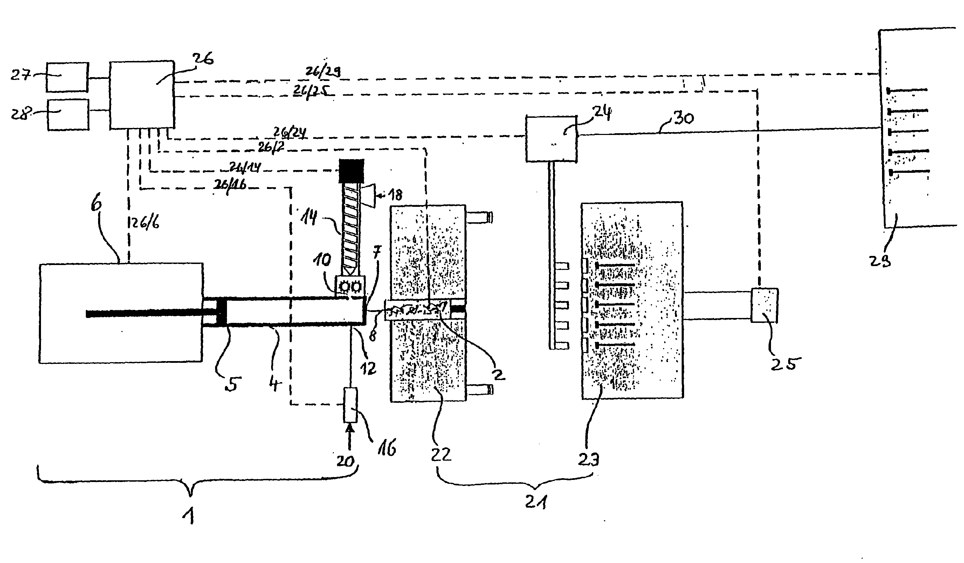

Das in Fig. 2A dargestellte Ausführungsbeispiel ist dem von Fig. 1 ähnlich und weist demgegenüber zwischen der Zuführungseinrichtung **14** und dem entsprechenden Einlaß **10** am Zylinder **4** zusätzlich eine geeignete Austrag- bzw. Dosiereinrichtung auf, z.B. eine Förderschnecke, eine Zahnradpumpe oder eine Zellenradschleuse, um so Komponenten dem Zylinder **4** dosiert zuführen zu können. Eine solche Dosiereinrichtung kann auch bei der Zuführungseinrichtung **16** vorgesehen sein.

Bei bestimmten Zuführungseinrichtungen, wie z.B. Knetern oder Extrudern, kann die Einrichtung selbst bereits Dosierfunktion aufweisen, die z.B. über den Schneckenantrieb steuerbar ist.

Dosiereinrichtungen können ferner auch mit dem Zylinder **4** der Spritzeinheit **1** integriert sein.

Der Kolbenantrieb **6** ist vorzugsweise so ausgebildet, daß das Zurückfahren und das Vorfahren des Kolbens **5** steuerbar sind. Es ist ferner günstig, den Förderdruck der Zuführungseinrichtungen zum Zurückdrücken oder zumindest zur Unterstützung des Zurückfahrens des Kolbens **5** auszunutzen. Der Kolbenantrieb **6** ist vorzugsweise so ausgebildet, daß er den Kolben **5** beim Herausrücken des Vorgemisches durch die Mischeinrichtung **2** hindurch in das Formwerkzeug **21** hinein schußartig vorzubewegen vermag, um das statische Mischen wie auch den Spritzgießvorgang effizient durchführen zu können.

Eine besonders vorteilhafte Ausführungsform einer erfindungsgemäßen Vorrichtung ist in Fig. 1F dargestellt und weist folgende Merkmale auf:
- die Fördereinrichtung **41** umfaßt eine Schnecken-Plastifiziereinheit **71,** der über einen Einlaß **42** das Material für den Primärstrom aus einer Materialzuführug **88** zugeführt werden kann und deren auslaßseitiges Ende mit der Vormischeinrichtung **45** verbunden ist;
- die Plastifizierschnecke **61** der Plastifiziereinheit **71** weist eine durchgehende axiale Bohrung auf, durch die eine darin axial verschiebbare Kolbenstange **62** hindurchgeht, an deren am ausgangsseitigen Ende der Plastifiziereinheit liegenden Ende ein Kolben **63** angeordnet ist;
- die Vormischeinrichtung **45** ist an ihrem Haupteinlaß **47** mit dem Gehäuse **65** der Plastifiziereinheit **71** verbunden;
- am Haupteinlaß **47** der Vormischeinrichtung **45** ist ein Zylinder vorgesehen, der mit der Vormischeinrichtung **45** verbunden oder Teil der Vormischeinrichtung **45** ist und in den der Kolben **63** bei axialer Vorbewegung über die Kolbenstange **62** eindringen kann;
- die Kolbenstange **62** mit dem Kolben **63** sowie die Plastifizierschnecke **61** werden unabhängig steuerbar von einer Antriebseinheit **66** angetrieben,
   wobei in der untersten Hubstellung des Kolbens **63** das von der Plastifiziereinheit **71** geförderte, plastifizierte Material des Primärstroms **43** über einen zwischen dem Kolben **63** und dem Gehäuse **65** vorgesehenen Ringspalt **64** in der Strömungsrichtung **44** in die Vormischeinrichtung **45** eintreten und mit den Sekundärströmen **50, 51** in Kontakt kommen kann und bei axialem Vorschieben des Kolbens **63** mit der Kolbenstange **62** der Ringspalt **64** und die Einlässe **48** der Vormischeinrichtung **45** für die übrigen Komponenten des Komponentensystems durch den Kolben **63** verschlossen werden, der bei weiterem Verschieben das in der Vormischeinrichtung **45** resultierende eingeschlossene Komponentensystem (A oder B) über den Ausgang **55** und den Einlaß **54** durch die Mischeinrichtung **53** fördert, an deren Ausgang **56** das homogenisierte Komponentensystem vorliegt.

Fig. **1G** zeigt eine weitere vorteilhafte Ausführungsform der erfindungsgemäßen Vorrichtung, die folgende Merkmale aufweist:
- die Fördereinrichtung **41** umfaßt eine Schnecken-Plastifiziereinheit **71,** der über einen Einlaß **42** das Material für den Primärstrom aus einer Materialzuführung **88** zugeführt werden kann und deren auslaßseitiges Ende mit der Vormischeinrichtung **45** verbunden ist;
- die Plastifizierschnecke **61** der Plastifiziereinheit **71** ist am auslaßseitigen Ende mit einem Kolben **63** fest verbunden, der in einem Zylinder **70** axial verschiebbar angeordnet ist, der mit der Vormischeinrichtung **45** verbunden oder Teil der Vormischeinrichtung **45** ist;
- der Kolben **63** weist einen zentralen axialen Schmelzekanal **67** auf, der am freien Ende des Kolbens **63** mit einem Ventil **69** ausgerüstet ist und in die Vormischeinrichtung **45** mündet und an seinem anderen Ende im Bereich der Verbindung mit der Plastifizierschnecke **61** in radial angeordneten Eintrittöffnungen **68** endet;
- die Plastifizierschnecke **61** mit dem damit verbundenen Kolben 63 ist steuerbar von einer Antriebseinheit **66** angetrieben und axial verschiebbar, wobei in der untersten Hubstellung des Kolbens **63** von der Plastifiziereinheit **71** gefördertes, plastifiziertes Material des Primärstroms **43** über die radialen Eintrittsöffnungen **68** in den axialen Schmelzekanal **67** eintreten und an dessen auslaßseitigem Ende in die Vormischeinrichtung **45** hinein austreten und in der Strömungsrichtung **44** mit den Sekundärströmen **50, 51** in Kontakt kommen kann, und bei axialem Vorschieben des Kolbens **63** über die Plastifizierschnecke **61** der Zutritt des Primärstroms **43** zur Vormischeinrichtung **45** durch das Ventil **69** sowie über den Kolben **63** die Einlässe **48** der Vormischeinrichtung **45** für die übrigen Komponenten des Komponentensystems durch den Kolben **63** verschlossen werden, der bei weiterem Vorschieben das in der Vormischeinrichtung **45** resultierende eingeschlossene Komponentensystem (A oder B) über den Ausgang **55** und den Einlaß **54** durch die Mischeinrichtung **53** fördert, an deren Ausgang **56** das homogenisierte Komponentensystem vorliegt.

Eine weitere vorteilhafte Ausführungsform zeigt Fig. 1H. Sie weist folgende Merkmale auf:
- die Fördereinrichtung **41** umfaßt eine Schneckenplastifiziereinheit **71,** der über einen Einlaß **42** das Material für den Primärstrom von einer Materialzuführung **88** zugeführt werden kann und deren auslaßseitiges Ende mit der Vormischeinrichtung **45** verbunden ist;
- die Plastifizierschnecke **61** der Plastifiziereinheit **71** weist eine durchgehende axiale Bohrung auf, durch die ein darin axial verschiebbarer Kolben **63** hindurchgeht, der sich am ausgangsseitigen Ende der Plastifiziereinheit **41** fortsetzt, und in einem Zylinder **70** axial verschiebbar ist, der mit der Vormischeinrichtung **45** verbunden oder Teil der Vormischeinrichtung **45** ist;
- der Kolben **63** weist in dem Teil, der im Zylinder **70** liegt, einen zentralen axialen Schmelzekanal **67** auf, der am freien Ende des Kolbens **63** mit einem Ventil **69** ausgerüstet ist und in die Vormischeinrichtung **45** mündet und an seinem anderen Ende, das im Bereich des auslaßseitigen Endes der Plastifiziereinrichtung **71** liegt, in radial angeordneten Eintrittsöffnungen **68** endet;
- die Plastifizierschnecke **61** sowie der Kolben **63** sind unabhängig steuerbar von einer Antriebseinheit **66** angetrieben, wobei in der untersten Hubstellung des Kolbens **63** von der Plastifiziereinheit **71** gefördertes plastifiziertes Material des Primärstroms **43** über die radialen Eintrittsöffnungen **68** in den axialen Schmelzekanal **67** eintreten und an dessen auslaßseitigem Ende in die Vormischeinrichtung **45** hinein austreten und in der Strömungsrichtung **44** mit den Sekundärströmen **50, 51** in Kontakt kommen kann und bei axialem Vorschieben des Kolbens **63** durch die Plastifizierschnecke **61** die radialen Eintrittsöffnungen **68** und die Einlässe **48** der Vormischeinrichtung **45** für die übrigen Komponenten des Komponentensystems durch den Kolben **63** verschlossen werden, der bei weiterem Vorschieben das in der Vormischeinrichtung **45** resultierende eingeschlossene Komponentensystem (A oder B) über den Ausgang **55** und den Einlaß **54** durch die Mischeinrichtung **53** fördert, an deren Ausgang **56** das homogenisierte Komponentensystem vorliegt. Fig. 1I zeigt eine weitere vorteilhafte Vorrichtung, die folgende Merkmale aufweist:
- die Fördereinrichtung **41** umfaßt eine von einem Antrieb **66** steuerbar angetriebene Schnecken-Plastifiziereinheit **71** mit
   einer Plastifizierschnecke **61,** der über einen Einlaß **42** das Material für den Primärstrom von einer Materialzuführung **88** zugeführt werden kann, sowie einen Zylinder **70** mit einem darin axial verschiebbaren Kolben **63,** wobei der Zylinder **70** mit der Vormischeinrichtung **45** verbunden oder Teil der Vormischeinrichtung **45** ist;
- der Zylinder **70** weist einen seitlich, vorzugsweise senkrecht zu seiner Achse angeordneten Einlaß **72** im Bereich des Endes auf, das zur Vormischeinrichtung **45** hin liegt, der über einen Schmelzekanal **73** mit dem auslaßseitigen Ende der Plastifiziereinheit **71** verbunden ist;
- der Kolben **63** weist eine seitliche, vorzugsweise senkrecht zuseiner Achse radial angeordnete Eintrittsöffnung **74** auf, an die sich ein vorzugsweise rechtwinklig abgewinkelter Schmelzekanal **75** anschließt, der von der Eintrittsöffnung **74** ausgehend vorzugsweise zunächst in Radialrichtung und dann zentral in axialer Richtung des Kolbens **63** verläuft und in die Vormischeinrichtung **45** mündet;
- der Kolben **63** ist von einer steuerbaren Antriebseinheit **76** axial verschiebbar angetrieben, wobei in der untersten Hubstellung des Kolbens **63** die Eintrittsöffnung **74** des Kolbens **63** mit dem Einlaß **72** des Zylinders **70** fluchtet, so daß von der Plastifiziereinheit **71** über den Schmelzekanal **73** gefördertes, plastifiziertes Material des Primärstroms **43** durch den Einlaß **72** und die Eintrittsöffnung **74** in den Schmelzekanal **75** des Kolbens **63** gelangen und aus ihm in die Vormischeinrichtung **45** einströmen und dort in der Strömungsrichtung **44** mit den Sekundärströmen **50, 51** in Kontakt kommen kann und bei axialem Vorschieben des Kolbens **63** die Eintrittsöffnung **74** sowie die Einlässe **48** der Vormischeinrichtung **45** verschlossen werden und bei weiterem Vorschieben das in der Vormischeinrichtung **45** resultierende eingeschlossene Komponentensystem (A oder B) durch die Mischeinrichtung **53** gefördert wird, an deren Ausgang **56** das homogenisierte Komponentensystem vorliegt.

Ähnliche Fördereinrichtungen wie die in den Vorrichtungen der Fig. 1F bis 1I verwendeten sind per se bekannt (vgl. etwa EP 0 846 050), jedoch nicht für die Lösung der erfindungsgemäßen Aufgabenstellung der Erzeugung eines Vorgemisches aus einem Primärstrom und Sekundärströmen in einer Vormischeinrichtung und ihrer nachgeschalteten Homogenisierung.

Fig. 1J zeigt schließlich eine besonders einfache Ausführungsform der erfindungsgemäßen Vorrichtung, die folgende Merkmale aufweist:
- die Fördereinrichtung **41** umfaßt einen Schubschneckenextruder **77** mit einer Schubschnecke **78,** dem über einen Einlaß 42 das Material für den Primärstrom von einer Materialzuführung **88** zugeführt werden kann und dessen auslaßseitiges Ende mit der Vormischeinrichtung **45** verbunden ist;
- die Schubschnecke **78** ist steuerbar von einer Antriebseinheit **66** angetrieben, wobei in der untersten Hubstellung der Schubschnecke **78** das geförderte, plastifizierte Material des Primärstroms **43** in der Strömungsrichtung **44** in die Vormischeinrichtung **45** gefördert wird und dort mit den über die Einlässe **48** eingeführten Sekundärströmen **50, 51** in Kontakt kommt und das resultierende Komponentensystem (A oder B) in die Mischeinrichtung **53** gefördert wird und beim Vorschieben der Schubschnecke **78** das Formwerkzeug **21** gefüllt wird.

In Fig. 2B ist ein Gesamtprozeß zur Herstellung und Prüfung von Formkörpern schematisch veranschaulicht. An den Herstellungsprozeß schließt sich eine Prüfung der Formkörper an. Verwendet ist eine Kolbenspritzeinheit.

Die Spritzeinheit 1 weist eine Zuführungseinrichtung **14,** die als Kneter oder Extruder ausgebildet ist und mit einer Dosiereinrichtung versehen ist, und eine Zuführungseinrichtung **16** mit Einlaß **20** auf.

Der Gesamtprozeß wird von einer Steuereinrichtung **26,** die über eine Eingabeeinrichtung und eine Ausgabeeinrichtung **27** verfügt und vorzugsweise als Computer- oder Mikroprozessorsystem ausgebildet ist, gesteuert. Die Steuereinrichtung **26** kann jedoch auch als Computernetzwerk mit Zentralrechner oder als speicherprogrammierbare Steuerung (SPS) ausgeführt sein.

Die Zuführungseinrichtungen **14, 16,** der Kolbenantrieb **6,** die Mischeinrichtung **2,** der Werkzeugantrieb **25,** der die Bewegung der Formhälfte **23** und damit das Schließen und Öffnen des Formwerkzeugs **21** steuert, ein Magaziniersystem **24** und eine Prüfeinrichtung **29** stehen in Signal- oder Datenverbindung mit der Steuereinrichtung **26,** wie durch die entsprechenden gestrichelten Linien veranschaulicht ist.

Die verschiedenen, durch gestrichelte Linien veranschaulichten Ansteuerungen sind wie folgt bezeichnet:

| | |
|---|---|
| **26/2** | Ansteuerung der Mischeinrichtung **2,** |
| **26/6** | Ansteuerung des Kolbenantriebs **6,** |
| **26/14** | Ansteuerung der Zuführungseinrichtung **14** (z.B. Kunststoffdosierung), |
| **26/16** | Ansteuerung der Zuführungseinrichtung **16** (z.B. Additivdosierung), |
| **26/24** | Ansteuerung des Magaziniersystems **24,** |
| **26/25** | Ansteuerung des Werkzeugantriebs **25,** |
| **26/29** | Ansteuerung der Prüfeinrichtung **29.** |

Im in Fig. 2B dargestellten Beispiel weist die Steuereinrichtung **26** ein Neuronales Netzwerk **28** auf, das vorteilhaft als Software in der Steuereinrichtung **26** implementiert ist, um beispielsweise Korrelationen zwischen Formkörperzusammensetzungen und Prüfergebnissen zu ermitteln.

Die Steuereinrichtung **26** ist vorteilhaft auch zur Auswertung von Prüfergebnisse in der Lage, die über die Ausgabeeinrichtung **27** ausgegeben werden können.

Es sei ausdrücklich betont, daß Fig. 2B nicht so zu verstehen ist, als seien alle gestrichelt dargestellten Signal- bzw. Datenverbindungen zwingend. Je nach Anwendungsfall können weniger wie auch mehr derartige Verbindungen mit der Steuereinrichtung **26** vorliegen.

Die Mischeinrichtung **2** ist hier von der Formhälfte **22** des Formwerkzeugs **21** umgeben. Das,Magaziniersystem **24,** das mindestens ein Magazin aufweist, ist so ausgeführt und ansteuerbar, daß es einen oder mehrere erzeugte Formkörper aus dem Formwerkzeug **21** entnehmen und über eine Transferstrecke **30** der Prüfeinrichtung **29** oder mehreren Prüfeinrichtungen zur Bestimmung unterschiedlichster Materialkennwerte zuführen kann.

Die Ergebnisse der Prüfungen können über die Ausgabeeinrichtung **27** angezeigt, ausgedruckt oder etwa zur Weiterverarbeitung weitergeleitet werden.

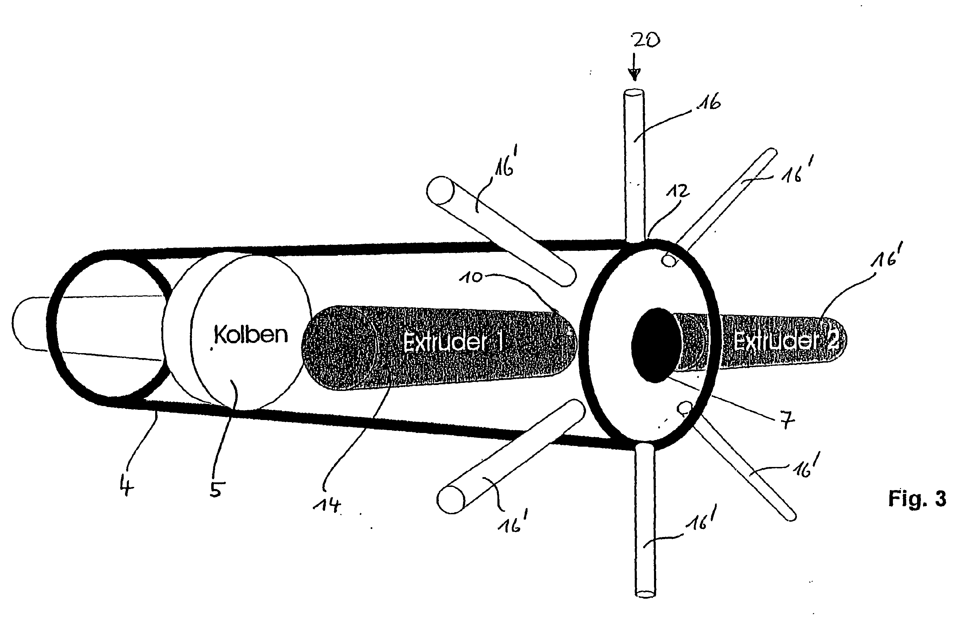

Der in Fig. 3 dargestellte Zylinder **4** einer Kolbenspritzeinheit wie in Fig. 2B ist mit mehreren Zuführungseinrichtungen **14, 16, 16'** ausgestattet, die radial am auslaßseitigen Ende des Zylinders **4** auf im wesentlichen gleicher axialer Höhe angeordnet sind. Sie können jedoch auch auf unterschiedlichen axialen Höhen in den Zylinder **4** münden. Bei der Zuführungseinrichtung **16** ist der Einlaß **20** eingezeichnet.

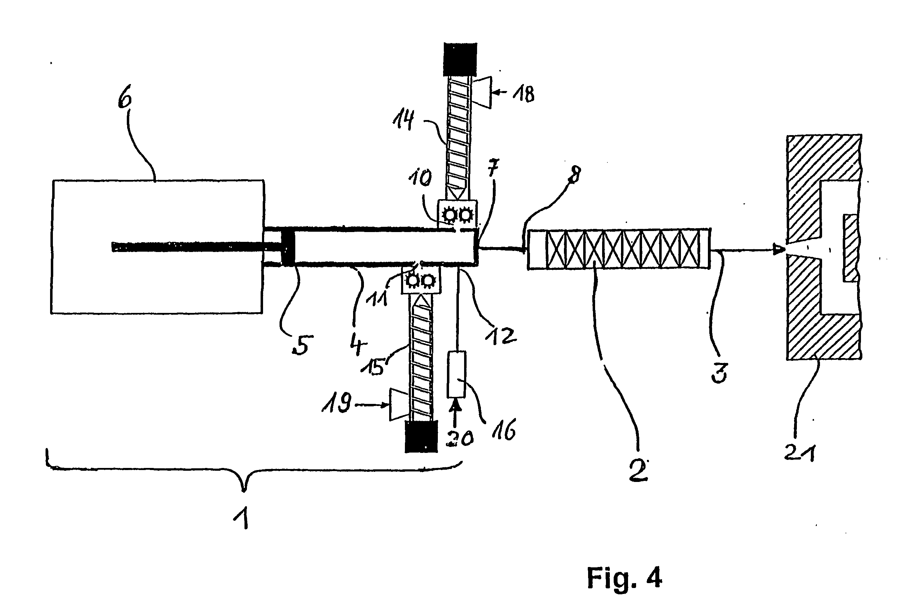

In Fig. 4 ist ein weiteres Ausführungsbeispiel einer erfindungsgemäßen Vorrichtung zur Formkörperherstellung mit einer Kolbenspritzeinheit gezeigt, bei der an der Spritzeinheit **1** zusätzlich zu den Zuführungseinrichtüngen **14, 16** eine weitere Zuführungseinrichtung **15** auf axial unterschiedlicher Höhe in bezug auf die Zuführungseinrichtungen **14** und **16** angeordnet ist. Diese zusätzliche Zuführungseinrichtung **15** mit Einlaß **19** und einer Dosiereinrichtung, die am Einlaß **11** in den Zylinder **4** mündet, entspricht ansonsten der Zuführungseinrichtung **14.**

In Förderrichtung nach dem Zylinder **4** ist eine Mischeinrichtung **2** vorgesehen, die radial und axial mischt und mit ihrem Einlaß **8** an den Auslaß **7** der Spritzeinheit **1** angeschlossen ist. Der Ausgang **3** der Mischeinrichtung **2** wiederum ist mit dem Formwerkzeug **21** verbunden oder damit verbindbar ausgeführt. Die Zuführungseinrichtungen **14, 16,** die Mischeinrichtung **2** und/oder das Formwerkzeug **21** können mit Schnellwechselverbindungen ausgerüstet sein, z.B. mit Bajonettverbindungen.

In den Fig. 1K bis 1P sind verschiedene Ausführungsformen von Einführungsmitteln **49** für Sekundärströme (in den Fig. 1, 2A, 2B, 3 und 4 als Zuführungseinrichtungen **13** bis **16** bezeichnet) dargestellt, die bei der erfindungsgemäßen Vorrichtung günstig verwendet werden können.

Die Fig. 1K und 1L zeigen einfache Schnecken-Plastifiziereinheiten **79,** wobei Fig. 1K eine Einschnecken-Vorrichtung und Fig. 1L eine Zweischneckenvorrichtung zeigen. Die Plastifiziereinheiten **79** weisen jeweils eine Antriebseinheit **81** auf und werden über eine Materialzuführung **80** mit Material für einen Sekundärstrom versorgt. Sie sind ferner am auslaßseitigen Ende mit einem Ventil **82** ausgerüstet, vorzugsweise einem Rückschlagventil.

Fig. 1M zeigt eine Kolbeneinspritzvorrichtung **83** mit einer Antriebseinheit **81,** die über eine Materialzuleitung **85** mit Ventil **86** von einer Pumpeinheit **84** mit Material für einen Sekundärstrom versorgt wird. Sie weist wiederum ein Ventil **82** am auslaßseitigen Ende auf. Diese Vorrichtung eignet sich besonders für Flüssigkeiten.

In den Fig. 1N und 1O sind zwei gleichartige Einführungsmittel **49** für Sekundärströme in Form von Schnecken-Plastifiziereinheiten oder Schneckenextrudern mit einer Kolbeneinspritzvorrichtung dargestellt, wobei Fig. 1N eine Einschneckenvorrichtung und Fig. 1O eine Doppelschneckenvorrichtung zeigen.

Die Kolbeneinspritzvorrichtung 83 weist jeweils eine Antriebseinheit **81** sowie ein auslaßseitiges Ventil **82,** wie oben beschrieben, auf und wird über eine Materialzuleitung **85** mit Ventil **86** von der Plastifiziereinheit **79,** die über eine Antriebseinheit **81** angetrieben ist, mit Material aus einer Materialzuführung **80** versorgt.

Fig. 1P zeigt schließlich eine über eine Materialzuführung **80** versorgte und mit Antriebseinheit **81** angetriebene Schnecken-Plastifiziereinheit **79,** die einen Einspritzkolben **87** aufweist. Diese Vorrichtung ist ebenfalls mit einem Ventil **82,** wie oben beschrieben, ausgerüstet. Die in Fig. 1P schematisch dargestellte Plastifiziereinheit **79** mit Einspritzkolben **87** kann ähnlich aufgebaut sein wie die Kolben-Plastifiziereinheiten **71** der Vorrichtungen der Fig. 1F, 1G oder 1H.

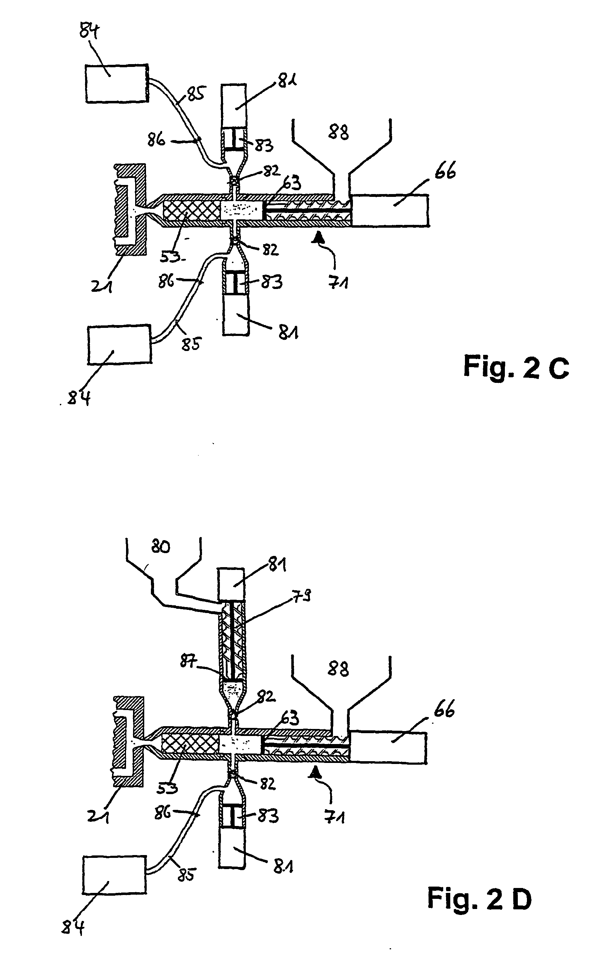

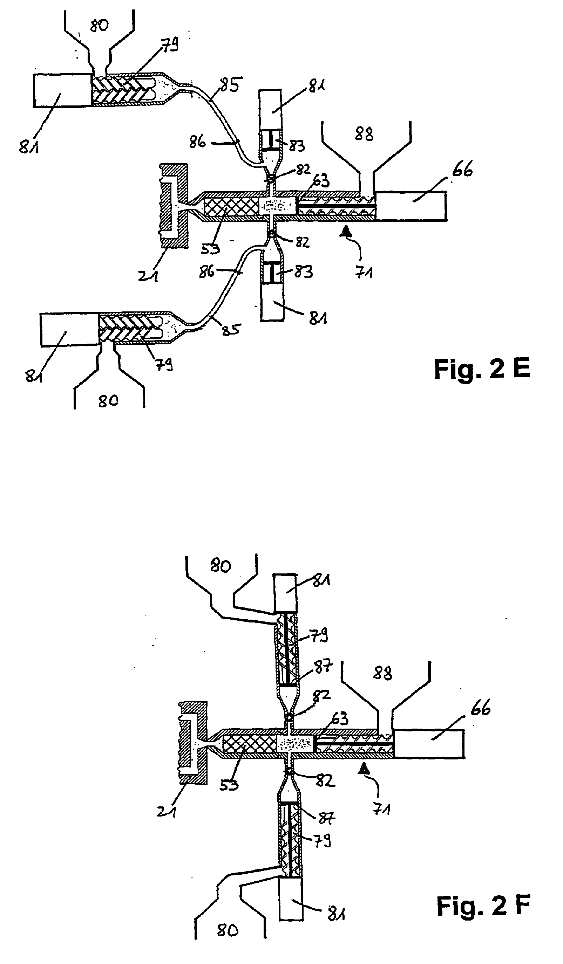

Die Fig. 2C, 2D, 2E und 2F zeigen Ausführungsformen erfindungsgemäßer Vorrichtungen zur Erzeugung von Formkörpern, insbesondere aus Kunststoffen. Alle Vorrichtungen weisen zur Vereinfachung die gleiche Förder- und Vormischeinrichtung auf, die jeweils eine Fördereinrichtung mit einer Plastifiziereinheit **71** mit Kolben **63** und Antriebseinheit **66** aufweist, die über eine Materialzuführung **88** mit Material für den Primärstrom versorgt wird. Diese Fördereinrichtung kann von dem Typ sein, wie er in den Fig. 1F, 1G oder 1H dargestellt ist. Die Vormischeinrichtung liegt zwischen der als Fördereinrichtung dienenden Plastifiziereinheit **71** und der Mischeinrichtung **53,** an die sich ein Formwerkzeug **21** anschließt.

Die Vormischeinrichtung wird über Einführungsmittel mit Sekundärströmen versorgt, von denen jeweils zwei dargestellt sind. Die Einführungsmittel für die Sekundärströme entsprechen bei Fig. 2C zwei Kolbeneinspritzvorrichtungen **83** nach Fig. 1M, bei Fig. 2D einer Kolbeneinspritzvorrichtung **83** nach Fig. 1M und einer Kolben-Plastifiziereinheit nach Fig. 1P, bei Fig. 2E zwei Vorrichtungen nach Fig. 1O und bei Fig. 2F zwei Kolben-Plastifiziereinheiten nach Fig. 1P.

Die Ausführungsformen der Fig. 2C bis 2F eignen sich zum Beispiel für folgende Anwendungen:
- Vorrichtung von Fig. 2C: Mischen eines Polymermaterials (Primärstrom) mit zwei niedrigviskosen flüssigen Additiven, z.B. Farbadditiven (Sekundärströme);
- Vorrichtung von Fig. 2D: Mischen eines Polymermaterials, z.B. eines Polyamids, als Matrixmaterial (Primärstrom) mit
   einem Elastomer (eingeführt als Granulat in die Kolben-Plastifiziereinheit 79) (Sekundärstrom 1) und mit einem flüssigen Weichmacher (eingeführt über die Kolbeneinspritzvorrichtung **83,** Sekundärstrom 2),
   beispielsweise zur Optimierung der Streckspannung an elastomermodifiziertem Polyamid;
- Vorrichtung von Fig. 2E: Mischen eines Polymermaterials, z.B. einer PBT-Formmasse (PBT = Polybutylenglykolterephthalat), als Matrixmaterial (Primärstrom) mit einer PBT-Formmasse + Stabilisator (pulverförmig) (Sekundärstrom 1) und mit einer weiteren PBT-Formmasse + Laserpigment (pulverförmig) (Sekundärstrom 2),
   beispielsweise zur Kontrastoptimierung einer laserbeschriftbaren PBT-Formmasse;
- Vorrichtung von Fig. 2F: Mischen eines Polymermaterials, z.B. von PBT, als Matrixmaterial (Primärstrom) mit einem Elastomer 1 (Granulat) (Sekundärstrom 1) und einem Elastomer 2 (Granulat) (Sekundärstrom 2), beispielsweise zur Optimierung der Kerbschlagzähigkeit von PBT.

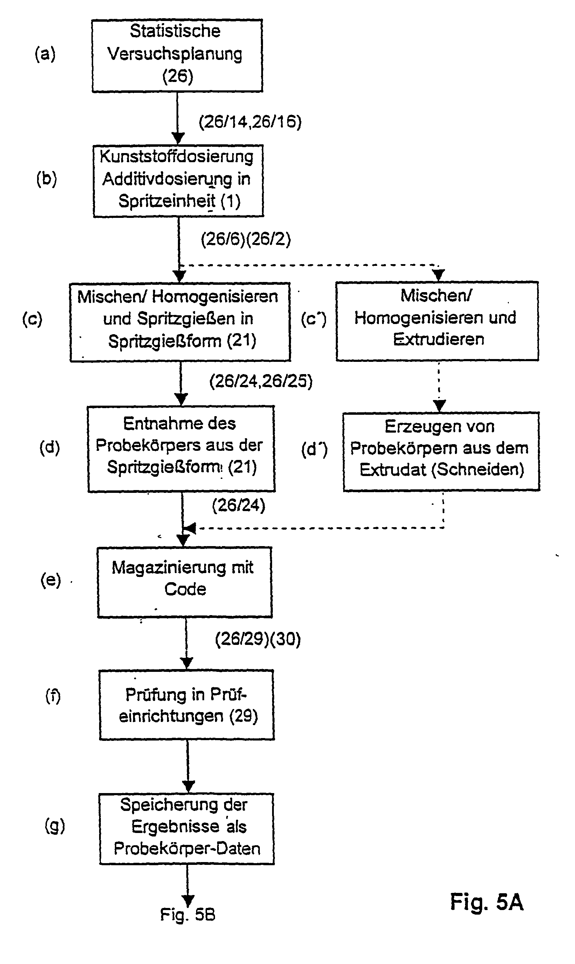

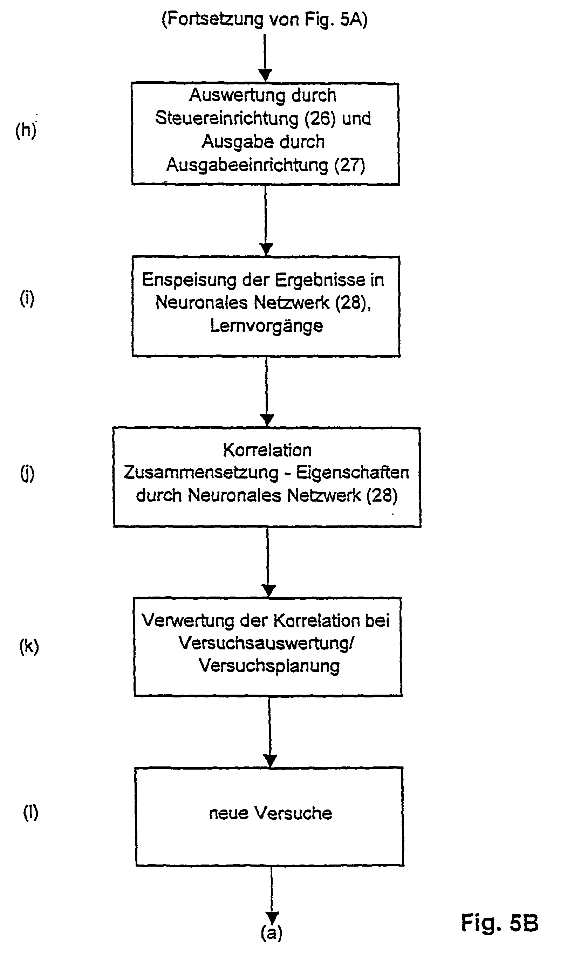

In den Fig. 5A und 5B sind einzelne Schritte eines erfindungsgemäßen Gesamtprozesses bis zur Auswertung in Form eines Ablaufplans gezeigt, der weiter unten im einzelnen beschrieben ist.

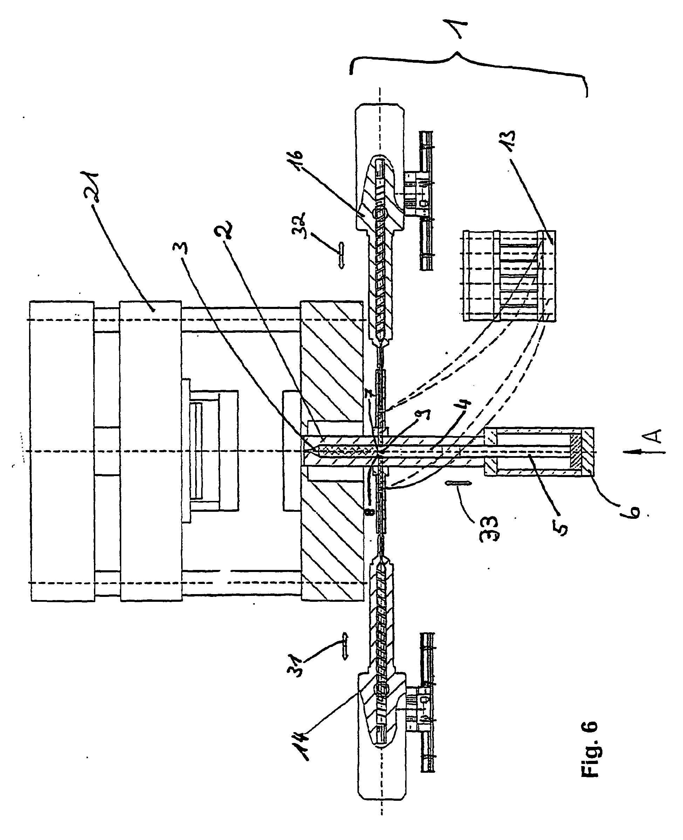

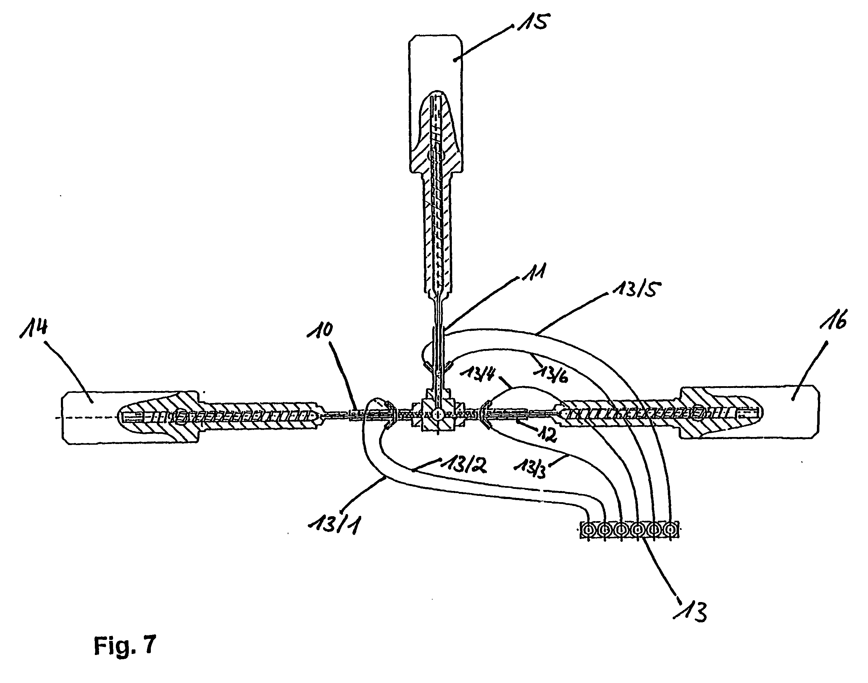

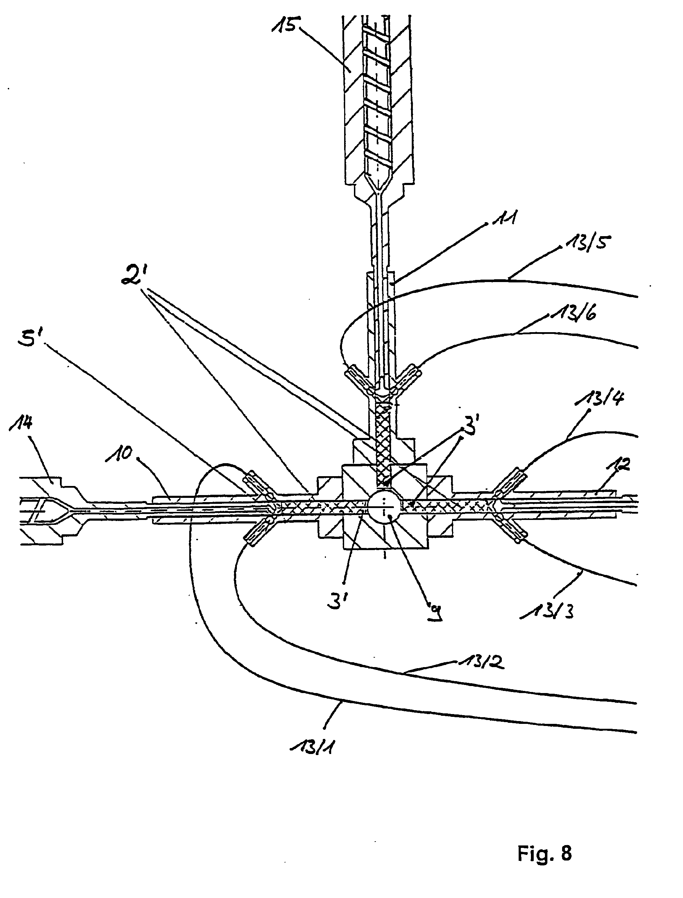

Zwei weitere Ausführungsbeispiele einer erfindungsgemäßen Vorrichtung zur Formkörperherstellung sind in den Fig. 6, 7 und 8 dargestellt. Die Vorrichtung von Fig. 6 weist zwei, die Vorrichtung der Fig. 7 und 8 weist drei Haupt-Zuführungseinrichtungen **14, 15, 16** auf.

Der in einem Gehäuse durch den Kolbenantrieb **6** in den durch den Doppelpfeil **33** angedeuteten Antriebsrichtungen verschiebbar aufgenommene Kolben **5** ragt in vollständig zurückgefahrenem Zustand in den Zylinder **4** der Spritzeinheit **1** hinein, die den Auslaß **7** aufweist, der mit der Mischeinrichtung **2** verbunden ist.

Am auslaßseitigen Ende **9** des Zylinders **4** befinden sich die Einlässe **10, 11** und **12** für die Zuführungseinrichtungen **14, 15** und **16,** die in den durch Doppelpfeile angedeuteten Antriebsrichtungen **31** bzw. **32** hin- und herbewegbar sind. Das auslaßseitige Ende der Zuführungseinrichtungen **14, 15** und **16** ist jeweils als Dosierkolben **5'** ausgebildet, der an seiner Spitze eine Rückstromsperre aufweist, die den Materialfluß in Förderrichtung zuläßt, nicht aber in der entgegengesetzten Richtung. Die Zuführungseinrichtungen **14, 15** und **16** sind in einer auf den Zylinder **4** zu bewegten Position dargestellt.

In die Einlässe **10, 11** und **12** münden je zwei jeweils mit einer Rückstromsperre versehene Zuleitungen **13/1** und **13/2, 13/3** und **13/4** bzw. **13/5** und **13/6** von einer weiteren Zuführungseinrichtung **13,** z.B. einer Kolbendosiereinheit für flüssige und pastose Additive.

In Förderrichtung nach den Anschlüssen mit den Rückstromsperren sind in den jeweiligen Einlässen **10, 11** und **12** des Zylinders **4** Vormischeinrichtungen **2'** angeordnet. Die Vormischeinrichtungen 2' sind als statische Mischer ausgebildet und münden mit ihren Ausgängen **3'** radial am auslaßseitigen Ende **9** des Zylinders **4.**

In Förderrichtung nach dem Zylinder **4** liegt die Mischeinrichtung **2,** die hier als statischer Mischer **2** ausgebildet ist und mit ihrem Einlaß **8** direkt an den Auslaß **7** der Spritzeinheit **1** angeschlossen ist. Der Ausgang **3** der statischen Mischeinrichtung **2** ist wiederum mit dem Formwerkzeug **21** verbunden. Die Vorrichtung nach den Fig. **6** bis **8** arbeitet also nicht mit Schubschneckenextrudern als Zuführungseinrichtungen, sondern mit Zuführungseinrichtungen, bei denen ebenfalls das Prinzip der Kolbendosierung verwirklicht ist.

In den zurückgefahrenen Zuführungseinrichtungen **14, 15, 16** werden die jeweiligen Komponenten durch einen Extruder plastifiziert und gelangen so in den entsprechenden Einlaß **10, 11, 12** des Zylinders **4.** Ebenso werden je nach Rezeptur flüssige oder pastose Additive von der weiteren Zuführungseinrichtung **13** in die Einlässe **10, 11, 12** dosiert. Wenn der Dosierungsvorgang abgeschlossen ist, fährt die betreffende Zuführungseinrichtung **14, 15, 16** auf den Zylinder **4** zu und drückt somit das plastifzierte Material und die eindosierten flüssigen und pastosen Additive zur Homogenisierung in die Vormischeinrichtung **2'.** Die Rückstromsperren am vorderen Ende des Dosierkolbens **5'** und in den Anschlüssen für die Additive verhindern dabei ein Zurückfließen der Komponenten.

Nachdem die vorgemischten Komponenten aus den Zuführungseinrichtungen **14, 15, 16** über das auslaßseitige Ende **9** des Zylinders in den Zylinder **4** gelangt sind, drückt sie der Kolben **5** anschließend zum Homogenisieren durch die Mischeinrichtung **2** hindurch in das Spritzgießwerkzeug **21.**

Bei Verwendung von statischen Mischern als Mischeinrichtungen kann die Zeitdauer, während der die eindosierten Komponenten homogenisiert und in das Formwerkzeug **21** gedrückt werden, auf Zeiten im Sekundenbereich verringert werden. Auf diese Weise lassen sich pro Tag mindestens etwa 100 bis 300 verschiedene Formkörper unterschiedlicher Zusammensetzung herstellen und auf ihre Materialeigenschaften prüfen. Das bedeutet, daß dieses schnelle Verfahren die Herstellung und Prüfung von Formkörpern aus mehr als 10.000 Kunststoffmischungen pro Jahr erlaubt.

Unter Bezug auf die Fig. 5A und 5B wird nun der Ablauf eines Gesamtprozesses näher erläutert, der die Herstellung und Prüfung von Formkörpern und die Auswertung der Ergebnisse umfaßt.

Nach Ermittlung oder Erstellung eines Prozeßablaufplans in Schritt (a), z.B. durch statistische Ablaufplanung, steuert die Steuereinrichtung **26** die temperierbaren Zuführungseinrichtungen **14, 16** über entsprechende Ansteuerungen **26/14, 26/16** zum Plastifizieren der einzelnen Komponenten an. Die Anzahl der benötigten Zuführungseinrichtungen **14, 16** richtet sich nach der Komplexität der herzustellenden Komponentensysteme.

Nun wird in Schritt (b) der Kolben **5** über die Ansteuerung **26/6** des Kolbenantriebs **6** und gegebenenfalls unter Ansteuerung **26/2** der Mischeinrichtung aus einer oberen Hubstellung in eine untere Hubstellung bewegt, wobei die Komponenten des Komponentensystems quasi in den Zylinder **4** eingezogen bzw. von den Zuführungseinrichtungen **14, 16** in den Zylinder **4** hineindosiert werden.

Der Kolben **5** kann dabei unter dem Druck der einströmenden Komponenten aus seiner oberen Hubstellung in seine untere Hubstellung zurückgedrückt oder beim Zurückbewegen durch die Ansteuerung **26/6** des Kolbenantriebs **6** dadurch unterstützt werden.

Beim Vorfahren des Kolbens **5** wird das Komponentensystem, besonders ein Kunststoffmaterial, mit einem oder mehreren Additiven in einer vorzugsweise heizbaren Mischeinrichtung **2** vermischt und in eine Spritzgießform gespritzt (Schritt (c)) bzw. extrudiert (Schritt (c')).

Nachdem der Werkzeugantrieb **25,** der auf eine Formhälfte **23** des Formwerkzeugs **21** wirkt, von der Steuereinrichtung **26** über die Ansteuerung **26/25** angesteuert, das Formwerkzeug **21** geöffnet hat, werden die Formkörper von einem von der Steuereinrichtung **26** über die Ansteuerung **26/24** angesteuerten und dem Formwerkzeug zugeordneten Magaziniersystem **24** entnommen (Schritt (d)), mit einem individuellen registrierten Code versehen in einem Magazin gelagert oder zwischengelagert (Schritt (e)). Die Probekörper können gemäß Schritt (d') auch durch Schneiden oder Stanzen aus einem Extrudat erhalten werden. Mit Hilfe dieses Codes lassen sich die in einer oder mehreren Prüfungen durch Prüfeinrichtungen **29** erhaltenen Ergebnisse dem jeweiligen Formkörper und damit seiner jeweiligen Zusammensetzung, zuordnen. Mittels des Codes lassen sich die Formkörper auch lokalisieren. Vorteilhafterweise sind auch die Prüfeinrichtungen **29** durch eine Ansteuerung **26/29** von der Steuereinrichtung **26** angesteuert.

Aus dem Magazin werden die Formkörper über eine Transferstrecke **30** in die zugeordnete Prüfeinrichtung **29** gebracht, wo sie geprüft werden (Schritt (f)). Die erhaltenen Daten werden gespeichert (Schritt (g)).

Diese z.B. in einer Datenbank abgelegten Prüfergebnisse sind z.B. mit einer Auswertungssoftware auswertbar und durch die Ausgabeeinrichtung **27** z.B. durch Graphiken visualisierbar (Schritt (h)). Gemäß Schritt (i) können die Ergebnisse mit Hilfe einer geeigneten Software, z.B. mit einem Neuronalen Netzwerk **28,** mit der Zusammensetzung der Probekörper korreliert werden.

Nach ausreichend vielen Versuchsabläufen kann z.B. mit Hilfe des Neuronalen Netzwerks ein mathematisches Modell erhalten werden, das jeweils eine Korrelation der Eingangsvariablen mit den Prüfergebnissen erlaubt (Schritt (j)). Durch diese Auswertungsmethodik, aber auch durch statistische Auswertung, lassen sich bei Reihenversuchen mit verschiedenen Zusammensetzungen des Komponentensystems beispielsweise Trends hinsichtlich der Formkörpereigenschaften erkennen, wodurch wiederum die weitere Versuchsplanung optimiert werden kann (Schritte (k) und (l)).

Die bei den erfindungsgemäßen schnellen Screening-Verfahren gewonnenen Ergebnisse dienen dem Anwender zur Orientierung und zur Trenderkennung hinsichtlich der zu erwartenden Eigenschaftsprofile der neuen geprüften Produkte. Für die Untersuchung der verschiedenen Eigenschaften kommen typischerweise folgende Prüfverfahren zum Einsatz:
- Rheologische Eigenschaften: Scherviskosität, Schmelzindex, Fließspirale.
- Mechanische Eigenschaften: Elastizitätsmodul, Zugfestigkeit, Bruchdehnung, dynamischer komplexer Schubmodul, Schlagzähigkeit.
- Thermische Eigenschaften: Differential-Scanning-Kalorimetrie (DSC), Flammtests, Vicat-Erweichungstemperatur, Heat deflection temperature (HDT), Wärmeausdehnung.
- Elektrische Eigenschaften: Elektrischer Widerstand, elektrische Leitfähigkeit, Durchschlagfestigkeit, Isolationsvermögen,

Dielektrizitätskonstante.
- Grenzflächeneigenschaften: Polarität, Randwinkel, Rauhigkeit.
- Sonstige Eigenschaften: Spannungsrißbeständigkeit (ESC), Biokompatibilität, UV-Beständigkeit, etc.
- Optische Eigenschaften: Farbkontrast, Farbintensität, etc.

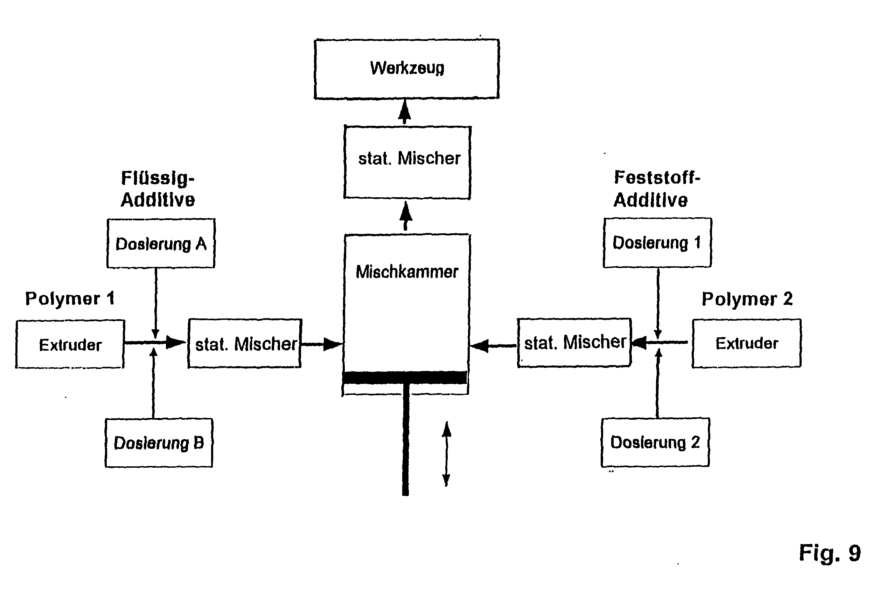

In Fig. 9 ist ein weiteres Beispiel für eine erfindungsgemäße Vorrichtung zur Herstellung von Formkörpern schematisch dargestellt.

Diese Vorrichtung ist ähnlich den Vorrichtungen der Fig. 6 bis 8 aufgebaut.

In die Mischkammer der Spritzeinheit münden zwei Zuführungseinrichtungen, die für ein Polymer **1** bzw. ein Polymer **2** vorgesehen sind. Sie umfassen jeweils einen Extruder, in den bzw. an dessen Auslaß im Fall von Polymer **1** Flüssig-Additive (Dosierungen A und B) und im Fall von Polymer **2** Feststoff-Additive (Dosierungen **1** und **2)** eingeführt werden.

Das Material gelangt jeweils durch einen statischen Mischer in die Mischkammer des Zylinders der Spritzeinheit, wo das eigentliche Vorgemisch gebildet wird.

Beim Spritzgießen ('Schuß') wird das Komponentensystem durch einen statischen Mischer hindurch in das Formwerkzeug gespritzt. Für den Fachmann ist klar, daß die in den Fig. 6 bis 9 dargestellten konkreteren Ausführungsbeispiele im Rahmen des Erfindungskonzepts in vielfältiger Weise modifiziert werden können, insbesondere hinsichtlich der Art der Zuführungseinrichtungen für den Primärstrom und die Sekundärströme und der Art der verwendeten Mischer. Aufgrund dieser Flexibilität sind die erfindungsgemäßen Verfahren und die erfindungsgemäßen Vorrichtungen an beliebige Komponentensysteme anpaßbar.

Die Vorrichtungen besitzen vorteilhaft modularen Aufbau, so daß auch Modifizierungen der Vorrichtungen einfach und schnell möglich sind.

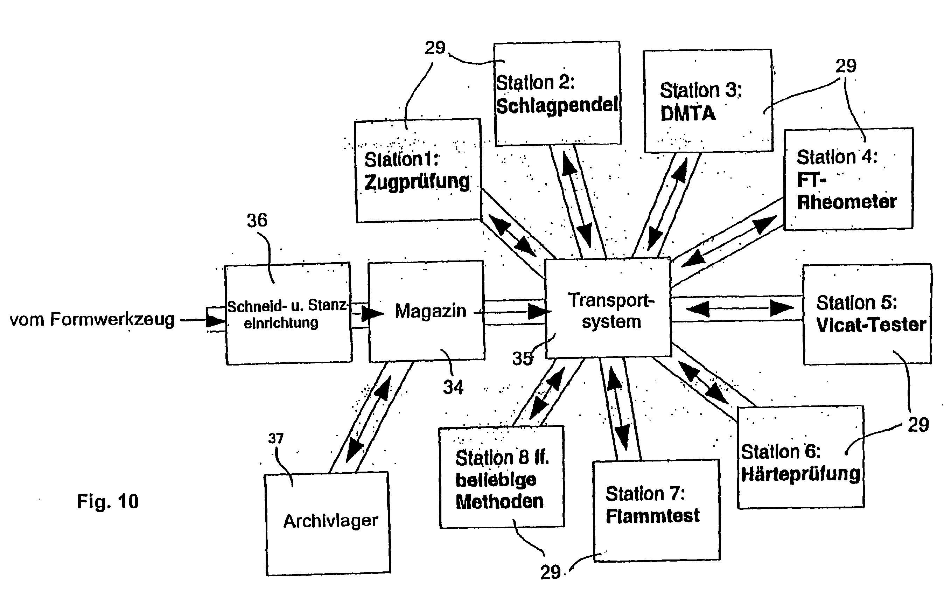

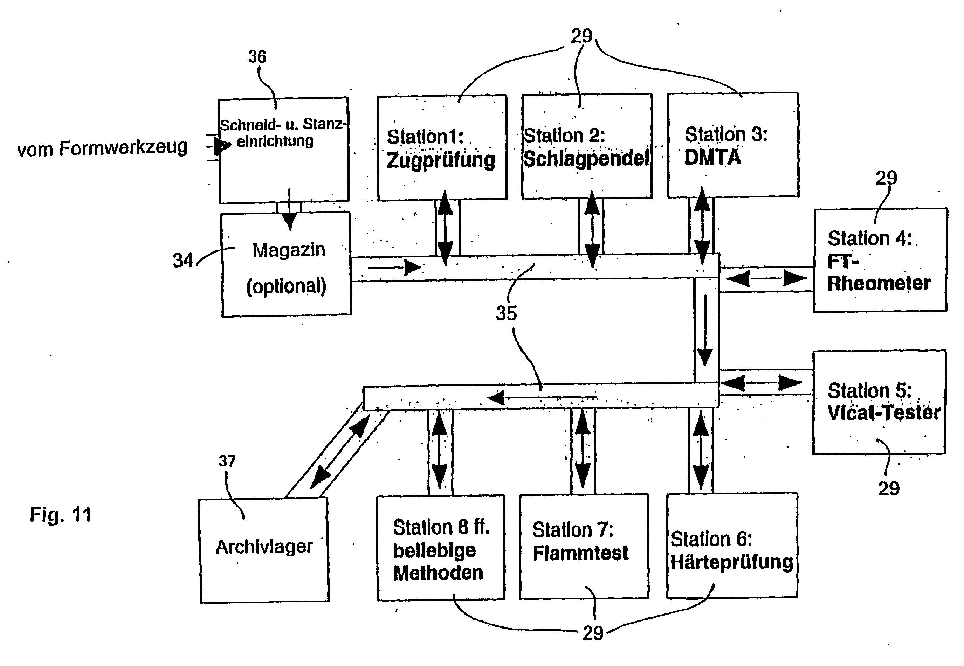

Die Fig. 10 und 11 zeigen erfindungsgemäße Vorrichtungen zur Handhabung und zur Prüfung von Formkörpern, die mit erfindungsgemäßen Vorrichtungen zur Herstellung von Formkörpern kombiniert oder integriert sein können.

Bei beiden Vorrichtungen gelangen die Formkörper, die vom Formwerkzeug oder einer Schneid- und Stanzeinrichtung **36** kommen, entweder direkt oder über ein zwischengeschaltetes Magazin **34** in ein Transportsystem **35.**

Das Transportsystem **35** der Vorrichtung von Fig. 10 ist als zentrales System ausgebildet, das mit allen Entnahmestellen bzw. Rückgabestellen, insbesondere also mit einem Formwerkzeug, einer Schneid- und Stanzeinrichtung **36,** einem Magazin **34,** einem Archivlager **37** und Prüfeinrichtungen **29,** direkt in Verbindung steht und diese Adressen direkt bedienen kann. Das Gesamtsystem ist von einer Steuereinrichtung steuerbar.

Die einzelnen Transferstrecken des Transportsystems **35** von Fig. 10 können beliebig ausgebildet sein, z.B. als Robotersysteme, Förderbänder, Wagen- und Schienensystem, Rollbahnsystem o.dgl., und insbesondere in einer Rondellstruktur angeordnet sein.

Das System von Fig. 10 hat durch den zentralen Direkttransport der Formkörper konstruktive und wirtschaftliche Vorteile und kann mit hoher zeitlicher Effektivität betrieben werden.

Das Transportsystem **35** der Vorrichtung von Fig. 11 ist ein konstruktiv dezentrales System, das vorteilhaft natürlich zentral steuerbar ist.

Die Transferstrecken verbinden in diesem Beispiel die einzelnen Adressen miteinander. Dies bedeutet nicht zwingend, daß direkte Verbindungen von einer Adresse zur nächsten vorliegen; es ist auch möglich, ein übergeordnetes Transportsystem vorzusehen, aus dem mit weichenartigen Vorrichtungen die einzelnen Adressen bedient werden können.

In den Fig. 10 und 11 sind in den Stationen 1 bis 7 verschiedene Prüfeinrichtungen **29** dargestellt; bei Station 8 ist angedeutet, daß beliebige weitere Prüfmethode angewandt werden können.

Die in den Fig. 10 und 11 konkret angegebenen Prüfeinrichtungen **29** sind selbstverständlich nur beispielhaft und dienen nur der Erläuterung, da beliebige andere Prüfeinrichtungen **29** in beliebigen anderen Kombinationen und Sequenzen vorgesehen sein können.

Gemäß einer vorteilhaften Ausführungsform der Vorrichtungen der Fig. 10 und 11 kann das Transportsystem **35** so ausgebildet sein, daß es nicht oder nicht ausschließlich Formkörper transportiert, sondern ein oder mehrere Magazine **34.** Bei dieser Ausführungsform können z.B. bei bestimmten Adressen Formkörper aus einem Magazin **34** entnommen bzw. in das Magazin **34** eingebracht werden.

Die Vorrichtungen der Fig. 10 und 11 sind vorteilhaft durch eine Steuereinrichtung steuerbar.

Es können ein oder mehrere Magazine **34** vorgesehen sein, die zu einem Magaziniersystem **24** zusammengefaßt sein können (vgl. Fig. 2B).

Für jede Versuchsreihe wird die für die verschiedenen Prüfungen erforderliche Anzahl von Prüfkörpern hergestellt, die im Magaziniersystem **24** bzw. in einem oder mehreren Magazinen **34** gelagert oder zwischengelagert werden können.

Das Transportsystem **35** kann jedoch auch so ausgebildet sein, daß es Formkörper direkt vom Formwerkzeug oder einer Schneid- und Stanzeinrichtung 36 aufnimmt und zu vorgesehenen Adressen transportiert.

Der Transport von Formkörpern zu und von verschiedenen Adressen, z.B. zu und von Prüfeinrichtungen **29,** kann sequentiell und/oder parallel erfolgen. Formkörper, die bereits geprüft wurden, können in einem Archivlager **37** als Rückstellmuster archiviert werden. Dies ist besonders sinnvoll bei Formkörpern, die einer zerstörungsfreien Prüfung unterzogen wurden, die gegebenenfalls wiederholt werden soll. Das Transportsystem 35 kann schließlich auch Formkörper in einem Abfallsammelbehälter transportieren, in dem z.B. Material zum Recycling gesammelt wird.

Die vorstehend beschriebenen Verfahren und Vorrichtungen werden insbesondere bei Fragestellungen eingesetzt, bei denen die Herstellung einer großen Anzahl an Proben in kurzer Zeit erforderlich ist, wie beispielsweise:
- Untersuchungen zur Mischbarkeit von Polymeren,
- Untersuchung von ternären oder höheren Blends (Mischbarkeit, Morphologie, mechanische Eigenschaften),
- Charakterisierung der mechanische Eigenschaften von binären, ternären oder höheren Polymermischungen,
- Ermittlung von Phasendiagrammen von binären, ternären oder höheren Polymermischungen,
- Optimierung von mechanischen Eigenschaften von Polymerblends in Abhängigkeit von der Zusammensetzung,
- Entwicklung von Phasenvennittlern,
- Untersuchung des Einflusses einer geringen Menge eines Drittpolymers auf das Phasenverhalten und die mechanischen Eigenschaften eines binären Polymerblends,
- Herstellung und Untersuchung von Blends aus einem flexiblen Polymer (Random-Coil-Polymer) und einem hauptkettenflüssigkristallinen Polymer (Rigid-Rod- oder Extended-Rod-Polymer),
- Entwicklung von Additiven und Additivkombinationen mit verbesserter Wirkung, geringeren Kosten, verminderter Toxizität oder verbesserter Umweltverträglichkeit,
- Entwicklung von Additiven und Additivkombinationen für neue Kunststoffe und neue Blends,
- Entwicklung von Farbstoffen, Pigmenten, Farbmischungen oder Einfärbungen,
- Untersuchung der Spannungsrißbildung von additivhaltigen Polymeren in Gegenwart von Lösungsmitteln, Ölen, Tensiden, etc.,
- Untersuchung und Optimierung von Mischungen aus viskosen Medien und evtl. niedrigviskosen Substanzen, wie sie z.B. in Kosmetika, Lebensmitteln, Klebstoffen etc. eingesetzt werden.

Ein besonders vorteilhafter Aspekt der Erfindung ist die mögliche Gleichzeitigkeit des Vermischens der Komponenten und des Spritzens des Komponentensystems in das Formwerkzeug, wodurch der Zeitaufwand für eine gesondert stattfindende Compoundierung nach den herkömmlichen Verfahren entfällt.

Besondere Vorteile des Erfindungskonzepts sind folgende:
- Wegen der vergleichsweise sehr hohen Geschwindigkeit der Herstellung von Formkörpern unterschiedlicher Materialzusammensetzung können in relativ kurzer Zeit sehr viele Formkörper unterschiedlicher Materialzusammensetzung hergestellt und geprüft werden.
- Wegen der vorteilhaften Korrelationserzeugung durch Verwendung eines Neuronalen Netzwerks als System zur Trenderkennung besteht gar nicht die Notwendigkeit, aus allen möglichen Kombinationen der Komponenten eines Komponentensystems Formkörper herzustellen und sie zu prüfen.

Dieses System zur Trenderkennung liefert vor allem durch die Korrelation der Eingangsgrößen (z.B. Materialzusammensetzung, Herstellungsbedingungen bzw. Herstellungsweise) mit den entsprechenden Prüfergebnissen mit gegenüber herkömmlichen Verfahren geringem Zeitaufwand Informationen zu denjenigen Variablen, deren Veränderung den stärksten oder signifikantesten Einfluß auf die erzielten/erzielbaren Prüfergebnisse haben.

Bei der Untersuchung von Materialeigenschaften von Komponentensystemen genügt es also, aus vorher als signifikant erkannten Kunststoffmischungen oder aus sich im Verlauf einer Versuchsreihe aufgrund des Trenderkennungssystems als signifikant erweisenden Kunststoffmischungen Prüfkörper herzustellen. Diese repräsentativen Formkörper können dann gezielt geprüft werden, um die vorausberechneten Eigenschaften zu verifizieren.

Die Verfahren und Vorrichtungen gemäß der Erfindung sind nicht nur zur Herstellung von Formkörpern zur Materialprüfung, sondern insbesondere auch für Produktionsverfahren anwendbar bzw. einsetzbar. Dabei sind die verschiedensten Produkte aus allen mit diesem System verarbeitbaren Materialien erzeugbar, wie beispielsweise Polymer-Blends, Kosmetikprodukte (z.B. Lippenstifte) oder pharmazeutische Produkte (z.B. Zäpfchen), es können aber auch Lebensmittel, insbesondere Bäckerei- bzw. Confiserieprodukte (z.B. Brot, Kuchen), oder auch Spielzeug (z.B. Knetmasse u.dgl.) hergestellt werden.

### Bezugszeichenliste

- 1: Spritzeinheit
- 2: Mischeinrichtung
- 2': Vormischeinrichtung
- 3: Ausgang der Mischeinrichtung 2
- 3': Ausgang der Vormischeinrichtung 2'
- 4: Zylinder
- 5: Kolben
- 5': Dosierkolben
- 6: Kolbenantrieb
- 7: Auslaß der Spritzeinheit 1
- 8: Einlaß der Mischeinrichtung 2
- 9: auslaßseitiges Ende des Zylinders 4
- 10: Einlaß am Zylinder 4
- 11: Einlaß am Zylinder 4
- 12: Einlaß am Zylinder 4
- 13: weitere Zuführungseinrichtung
- 13/1: bis 13/6 Zuleitungen der Zuführungseinrichtung 13
- 14: Zuführungseinrichtung
- 15: Zuführungseinrichtung
- 16: Zuführungseinrichtung
- 16': Zuführungseinrichtung
- 18: Einlaß der Zuführungseinrichtung 14
- 19: Einlaß der Zuführungseinrichtung 15
- 20: Einlaß der Zuführungseinrichtung 16
- 21: Formwerkzeug
- 22: Formhälfte
- 23: Formhälfte
- 24: Magaziniersystem
- 25: Werkzeugantrieb
- 26: Steuereinrichtung
Informationsfluß :
26/2 Ansteuerung Mischeinrichtung 2
26/6 Ansteuerung Kolbenantrieb 6
26/14 Ansteuerung Zuführungseinrichtung 14 (Kunststoffdosierung, Plastifizierung)
26/16 Ansteuerung Zuführungseinrichtung 16 (Additivdosierung)
26/24 Ansteuerung Magaziniersystem 24
26/25 Ansteuerung Werkzeugantrieb 25
26/29 Ansteuerung Prüfeinrichtung 29
- 27: Ausgabeeinrichtung
- 28: Neuronales Netzwerk
- 29: Prüfeinrichtung
- 30: Transferstrecke
- 31: Antriebsrichtungen der Zuführungseinrichtung 14
- 32: Antriebsrichtungen der Zuführungseinrichtung 16
- 33: Antriebsrichtungen des Kolbens 5
- 34: Magazin
- 35: Transportsystem
- 36: Schneid- und Stanzeinrichtung
- 37: Archivlager

- 40: Förder- und Vormischeinrichtung
- 41: Fördereinrichtung
- 42: Einlaß
- 43: Primärstrom
- 44: Strömungsrichtung des Primärstroms 43 bzw. Förderrichtung
- 45: Vormischeinrichtung
- 46: stromabseitiges Ende der Fördereinrichtung 41
- 47: Haupteinlaß der Vormischeinrichtung 45
- 48: Einlässe für übrige Komponenten
- 49: Einführungsmittel für Sekundärströme 50, 51
- 50: Sekundärstrom
- 51: Sekundärstrom
- 52: Ebene
- 53: Mischeinrichtung mit radialer Mischwirkung
- 54: Einlaß der Mischeinrichtung 53
- 55: Ausgang der Vormischeinrichtung 45
- 56: Ausgang der Mischeinrichtung 53
- 57: Öffnungen, Düsen
- 58: Platte, Scheibe
- 59: Stromabseite
- 60: Strömungskörper
- 61: Plastifizierschnecke
- 62: Kolbenstange
- 63: Kolben
- 64: Ringspalt
- 65: Gehäuse
- 66: Antriebseinheit
- 67: Schmelzekanal
- 68: Eintrittsöffnungen
- 69: Ventil
- 70: Zylinder
- 71: Plastifiziereinheit
- 72: Einlaß
- 73: Schmelzekanal
- 74: Eintrittsöffnung
- 75: Schmelzekanal
- 76: Antriebseinheit
- 77: Schubschneckenextruder
- 78: Schubschnecke
- 79: Piastifiziereinheit
- 80: Materialzuführung (Material für Sekundärstrom 50, 51)
- 81: Antriebseinheit
- 82: Ventil
- 83: Kolbeneinspritzvorrichtung
- 84: Pumpeinheit
- 85: Materialzuleitung
- 86: Ventil
- 87: Einspritzkolben
- 88: Materialzuführung (Material für Primärstrom 43)
- VE: Volumenelement am Ende 9 des Zylinders 4
- VEᵢ: Volumenelemente im Hubbereich des Kolbens 5 im Zylinder 4

## Patentansprüche

1. Verfahren zur schnellen Erzeugung von homogenen oder quasi-homogenen Gemischen vorgegebener Zusammensetzung aus Komponentensystemen
(A) aus zwei oder mehr viskosen oder pastosen Fluids
oder
(B) aus einem oder mehreren viskosen oder pastosen Fluids und einem oder mehreren Additiven,
das folgende Verfahrensabschnitte in der angegebenen Abfolge umfaßt:
(I) Erzeugung eines Stroms mit konstantem und wählbarem Durchsatz aus mindestens einem der viskosen oder pastosen Fluids des Komponentensystems (A oder B) (Primärstrom),
(II) Einführung der übrigen Komponenten des Komponentensystems (A oder B) auf im wesentlichen gleicher axialer Höhe, bezogen auf eine Ebene quer zur Strömungsrichtung des Primärstroms, in den Primärstrom in Form eines oder mehrerer Sekundärströme mit konstantem und wählbarem Durchsatz in der Weise, daß die Strömungsrichtungen der Sekundärströme angenähert parallel zur Strömungsrichtung des Primärstroms verlaufen,
unter Bildung eines Stroms eines Vorgemisches der Komponenten des Komponentensystems (A oder B), der innerhalb sich über seinen Querschnitt erstreckender Volumenelemente (V_{Ei}) insgesamt im wesentlichen gleichbleibende Zusammensetzung aufweist, die der vorgegebenen Zusammensetzung entspricht, und
(III) Förderung eines vorgegebenen und wählbaren Volumens des Vorgemisches durch eine Mischeinrichtung mit radialer Mischwirkung hindurch unter Erhalt eines homogenen oder quasi-homogenen Gemisches aus dem Komponentensystem (A oder B),
wobei die Verfahrensschritte (I) bis (III) unter Erzeugung des gleichen oder eines geänderten Komponentensystems (A oder B) in Zyklen wiederholt werden.

2. Verfahren nach Anspruch 1
**gekennzeichnet durch** folgenden weiteren Verfahrensabschnitt nach Verfahrensabschnitt (III):
(IV) Erzeugung eines oder mehrerer Formkörper aus dem erhaltenen homogenen oder quasi-homogenen Gemisch.

3. Verfahren nach Anspruch 2, **dadurch gekennzeichnet, daß** die Erzeugung des Formkörpers bzw. der Formkörper in getakteter Weise vorgenommen wird, wobei
- in einem Gemischerzeugungstakt die Verfahrensabschnitte (I) bis (III) durchgeführt werden
und
- in einem oder mehreren darauf folgenden Formgebungstakten Formkörper aus dem homogenen oder quasi-homogenen Gemisch erzeugt werden,
wonach die obige Abfolge eines Gemischerzeugungstaktes und eines oder mehrerer darauf folgender Formgebungstakte beliebig oft wiederholt werden kann.

4. Verfahren nach einem oder mehreren der Ansprüche 1 bis 3, **dadurch gekennzeichnet, daß** die Strömungsrichtung in den Verfahrensabschnitten (I), (II) und (III) und gegebenenfalls auch in Verfahrensabschnitt (IV) gleich ist.

5. Verfahren nach einem oder mehreren der Ansprüche 1 bis 3, **dadurch gekennzeichnet, daß** die Förderung des Vorgemischstroms durch die Mischeinrichtung in Verfahrensabschnitt (III) und gegebenenfalls auch in Verfahrensabschnitt (IV) in einer Strömungsrichtung vorgenommen wird, die der Strömungsrichtung des Primärstroms in Verfahrensabschnitt (I) und des Vorgemischstroms in Verfahrensabschnitt (II) entgegengesetzt ist.

6. Verfahren nach einem oder mehreren der Ansprüche 1 bis 5, **dadurch gekennzeichnet, daß** Verfahrensabschnitt (III) und gegebenenfalls auch Verfahrensabschnitt (IV) bei Formgebung durch Spritzgießen bei einer höheren Massen- oder Volumengeschwindigkeit bzw. bei einem höheren Durchsatz durchgeführt wird als die Verfahrensabschnitte (I) und (II).

7. Verfahren nach einem oder mehreren der Ansprüche 1 bis 6, **dadurch gekennzeichnet, daß** in Verfahrensabschnitt (III) eine Mischeinrichtung mit radialer und axialer Mischwirkung oder eine Kombination von Mischeinrichtungen mit radialer und/oder axialer Mischwirkung verwendet wird.

8. Verfahren nach einem oder mehreren der Ansprüche 1 bis 7, **dadurch gekennzeichnet, daß** das nach Verfahrensabschnitt (III) erhaltene homogene oder quasi-homogene Gemisch, gegebenenfalls vor einem nachgeschalteten Verfahrensabschnitt (IV), einer Reaktion in einem Reaktor oder Reaktionsabschnitt unterzogen wird.

9. Verfahren nach einem oder mehreren der Ansprüche 1 bis 3 und 5 bis 8 durch
- Einführung der Komponenten des Komponentensystems (A oder B) in vorgegebenen Mengenverhältnissen in eine Spritzeinheit (1), in welcher der viskose oder pastose Zustand des Komponentensystems erhalten bleibt,
- Homogenisierung oder Quasi-Homogenisierung des Komponentensystems (A oder B) in einer Mischeinrichtung (2)
und
- Erzeugung eines oder mehrerer Formkörper aus dem homogenisierten oder quasi-homogenisierten Gemisch,
**gekennzeichnet durch**
- Verwendung einer Spritzeinheit (1), die im wesentlichen aus einem Zylinder (4) und einem darin axial verschiebbaren Kolben (5) besteht,
- gleichzeitige Einführung der Komponenten des Komponentensystems (A oder B) in ein sich über den radialen Querschnitt des Zylinders (4) erstreckendes Volumenelement (VE) am auslaßseitigen Ende (9) des Zylinders (4) der Spritzeinheit (1) oberhalb des Kolbens (5) unter gleichzeitigem Zurückfahren des Kolbens (5) aus einer obersten Hubstellung in eine untere Hubstellung und Bildung eines Vorgemisches der Komponenten des Komponentensystems (A oder B), das innerhalb sich über den radialen Querschnitt des Zylinders (4) erstreckender Volumenelemente (VEᵢ) insgesamt im wesentlichen gleichbleibende Zusammensetzung aufweist, die der vorgegebenen Zusammensetzung entspricht,
- Förderung des Vorgemisches **durch** Vorfahren des Kolbens (5) aus der unteren Hubstellung in eine obere Hubstellung **durch** die Mischeinrichtung (2) hindurch und
- Homogenisierung oder Quasi-Homogenisierung des Vorgemisches in einer Mischeinrichtung (2) mit radialer Mischwirkung, insbesondere einer statischen Mischeinrichtung.

10. Verfahren nach einem oder mehreren der Ansprüche 1 bis 3 und 5 bis 8 durch
- Einführung der Komponenten des Komponentensystems (A oder B) in vorgegebenen Mengenverhältnissen in eine Spritzeinheit (1), in welcher der viskose oder pastose Zustand des Komponentensystems erhalten bleibt,
- Homogenisierung oder Quasi-Homogenisierung des Komponentensystems (A oder B) in einer Mischeinrichtung (2)
und
- Erzeugung eines oder mehrerer Formkörper aus dem homogenisierten oder quasi-homogenisierten Gemisch,
**gekennzeichnet durch**
- Verwendung einer Spritzeinheit (1), die im wesentlichen aus einem Zylinder (4) und einem darin axial verschiebbaren Kolben (5) besteht,
- gleichzeitige Einführung der Komponenten des Komponentensystems (A oder B) in den Zylinder (4) der Spritzeinheit (1) oberhalb des Kolbens (5) unter gleichzeitigem Zurückfahren des Kolbens (5) aus seiner obersten Hubstellung in eine untere Hubstellung und Bildung eines Vorgemisches der Komponenten des Komponentensystems (A oder B), dessen Zusammensetzung insgesamt der - vorgegebenen Zusammensetzung entspricht,
- Förderung des Vorgemisches **durch** Vorfahren des Kolbens (5) aus der unteren Hubstellung in eine obere Hubstellung
**durch** die Mischeinrichtung (2) hindurch
und
- Homogenisierung oder Quasi-Homogenisierung des Vorgemisches in einer Mischeinrichtung (2) mit axialer und radialer Mischwirkung.

11. Verfahren nach einem oder mehreren der Ansprüche 1 bis 10, **dadurch gekennzeichnet, daß** mindestens eines der viskosen oder pastosen Fluids ein geschmolzener Kunststoff ist, vorzugsweise ein thermoplastischer Kunststoff und/oder ein thermoplastisches Elastomer, und/oder die Erzeugung der Formkörper durch Spritzgießen oder durch Extrudieren vorgenommen wird.

12. Verfahren nach einem oder mehreren der Ansprüche 1 bis 11, **dadurch gekennzeichnet, daß** mindestens eine der Komponenten des Komponentensystems (A oder B) ein Matrixmaterial, insbesondere ein geschmolzenes Kunststoffmaterial, und mindestens eine der übrigen Komponenten ein Additiv ist, wobei als Additive vorzugsweise Füllstoffe, Färbemittel, Polymerkomponenten, Stabilisatoren, Katalysatoren, Fließ- und Entformungsmittel, Gleitmittel und/oder reaktive Komponenten eingesetzt werden.

13. Verfahren nach einem oder mehreren der Ansprüche 1 bis 12, **dadurch gekennzeichnet, daß** die Komponenten des Komponentensystems (A oder B) bei ihrer Einführung in den Zylinder (4) bzw. der Primärstrom (43) und die Sekundärströme (50, 51) dosiert werden.

14. Verfahren nach einem oder mehreren der Ansprüche 1 bis 13, **dadurch gekennzeichnet, daß** die Einführung einer, mehrerer oder der Gesamtheit der Komponenten des Primärstroms (43) und der Sekundärströme (50, 51) nach Art, Dosiermenge und/oder Dosiergeschwindigkeit gesteuert wird.

15. Verfahren nach einem oder mehreren der Ansprüche 2 bis 14,
**gekennzeichnet durch** Vornahme eines oder mehrerer der folgenden Schritte nach Verfahrensabschnitt (IV):
(a) sequentielles und/oder paralleles Zuführen der Formkörper zu einem Transportsystem (35), gegebenenfalls unter Entnahme aus einem Magazin (34);
(b) Transportieren der Formkörper zu einer oder mehreren Prüfeinrichtungen (29), wobei der Transport zu mehreren Prüfeinrichtungen (29) sequentiell und/oder parallel vorgenommen wird;
(c) Durchführung der entsprechenden Prüfung(en) in einer oder mehreren Prüfeinrichtungen (29), wobei die Formkörper bei Durchführung mehrerer Prüfungen parallel und/oder sequentiell in den Prüfeinrichtungen (29) geprüft werden;
(d) sequentielles oder paralleles Wegtransportieren der Formkörper oder daraus entstandener Produkte nach Durchführung der Prüfung(en) von der oder den Prüfeinrichtungen (29) und Einführen in ein Magazin (34), in ein Archivlager oder in einen Abfallsammelbehälter,
vorzugsweise mit Erfassung, Verarbeitung und/oder Weiterleitung von Prüfergebnissen in oder nach Schritt (c).

16. Verfahren nach Anspruch 15, **dadurch gekennzeichnet, daß** ein oder mehrere oder sämtliche Transportvorgänge, insbesondere in den Schritten (a), (b) und/oder (d), und /oder die Prüfungen in Schritt (c) und/oder die Erfassung, Verarbeitung, Auswertung und/oder Weiterleitung von Prüfergebnisse mit einer Steuereinrichtung (26) gesteuert werden, vorzugsweise unter zentraler Datenerfassung und Datenverarbeitung, insbesondere mit einem Computersystem oder einem Mikroprozessorsystem und/oder mit einer speicherprogrammierbaren Steuerung (SPS).

17. Vorrichtung zur schnellen Erzeugung von homogenen oder quasi-homogenen Gemischen vorgegebener Zusammensetzung aus Komponentensystemen (A) aus zwei oder mehr viskosen oder pastosen Fluids
oder
(B) aus einem oder mehreren viskosen oder pastosen Fluids und einem oder mehreren
Additiven,
die aufweist:
- eine Förder- und Vormischeintichtung (40), die umfaßt:
- eine Fördereinrichtung (41) mit einem oder mehreren Einlässen (42) für mindestens eines der viskosen oder pastosen Fluids des Komponentensystems (A oder B) als Material für einen Primärstrom (43), die das Material als Primärstrom (43) bei konstantem und wählbarem Durchsatz in einer vorgegebenen Strömungsrichtung (44) fördern kann,
und
- eine Vormischeinrichtung (45), die vorzugsweise am stromabseitigen Ende (46) der Fördereinrichtung (41) angeordnet ist und aufweist
· einen Haupteinlaß (47) für den Primärstrom (43) aus der Fördereinrichtung (41),
· einen oder mehrere Einlässe (48) für die übrigen Komponenten des Komponentensystems (A oder B), die sich im wesentlichen in der gleichen Ebene (52) quer zur Strömungsrichtung (44) des Primärstroms (43) befinden, die vorzugsweise in der Nähe des Haupteinlasses (47) oder am Haupteinlaß3 (47) liegt,
und
· Einführungsmittel (49), die mit den Einlässen (48) verbunden und so ausgebildet sind, daß die übrigen Komponenten des Komponentensystens (A oder B) in Form eines oder mehrerer Sekundärströme (50, 51) mit dem Primärstrom (43) in Kontakt gebracht und/oder in diesen eingeführt werden können,
- eine Mischeinrichtung (53) mit radialer Mischwirkung, deren Einlaß (54) am Ausgang (55) der Vormischeinrichtung (45) angeordnet ist und an deren Ausgang (56) das homogene oder quasi-homogene Gemisch aus dem Komponentensystem (A oder B) austritt (Fig. 1A, 1B),
sowie
- eine Steuereinrichtung (26), die eine oder mehrere Funktionen der Vorrichtung steuert,
**dadurch gekennzeichnet, daß** die Steuereinrichtung (26)
- die Fördereinrichtung (41) für den Primärstrom (43)
und
- die Vormischeinrichtung (45) mit den Einführungsmitteln (49) so steuert, daß
(I) die Fördereinrichtung (41) einen Primärstrom mit konstantem und wählbarem Durchsatz aus mindestens einem der viskosen oder pastosen Fluids des Komponentensystems (A oder B) erzeugt,
(II) die Vormischeinrichtung (45) mit den Einführungsmitteln (49) die übrigen Komponenten des Komponentensystems (A oder B) in Form eines oder mehrerer Sekundärströme mit konstantem und wählbarem Durchsatz unter Bildung eines Stroms eines Vorgemisches in den Primärstrom einführt und
(III) die Fördereinrichtung (41) mit der Vormischeinrichtung (45) ein vorgegebenes, wählbares Volumen des Vorgemisches durch die Mischeinrichtung (53) fördert, und die Schritte (I) bis (III) unter Erzeugung des gleichen oder eines geänderten Komponentensystems (A oder B) in Zyklen wiederholt werden.

18. Vorrichtung nach Anspruch 17, **dadurch gekennzeichnet, daß**
- der Haupteinlaß (47) der Vormischeinrichtung (45) für den Primärstrom (43) im wesentlichen auf der gleichen axialen Höhe (51) am auslaßseitigen Ende der Vormischeinrichtung liegt wie die Einlässe (48) für die Sekundärströme (50, 51),
- die Vormischeinrichtung (45) eine eigene Fördereinrichtung (5, 6) mit zwei einander entgegengesetzten Förderrichtungen aufweist und in der ersten Förderrichtung (44, 1.) mit dem Material des Primärstroms (43) und des bzw. der Sekundärströme (50) füllbar ist, wobei der Primärstrom (43) mit den Sekundärströmen (50, 51) in Kontakt kommt, während in der zweiten Förderrichtung (44, 2.) das in der Vormischeinrichtung (45) gebildete Vorgemisch der Komponenten des Komponentensystems (A oder B) in bzw. durch die Mischeinrichtung (53) förderbar ist (Fig. 1B).

19. Vorrichtung nach Anspruch 17 oder 18, **dadurch gekennzeichnet, daß** sie ferner ein Formwerkzeug (21) aufweist, das mit dem Ausgang (56) der Mischeinrichtung (53) verbunden oder verbindbar ist, vorzugsweise ein Spritzgießwerkzeug oder ein Stranggießwerkzeug.

20. Vorrichtung nach Anspruch 18 oder 19, **dadurch gekennzeichnet, daß** die Fördereinrichtung (5, 6) der Vormischeinrichtung (45) im wesentlichen aus einem darin in einem Zylinder (4) vorgesehenen Kolben (5) und einem Kolbenantrieb (6) (Spritzeinheit) besteht, wobei der Kolben in Axialrichtung im Zylinder (4) zurück- und vorbewegbar ist und beim Zurückbewegen des Kolbens (5) in eine untere Hubstellung aus dem Primärstrom (43) und dem bzw. den Sekundärströmen (50), die in der ersten Strömungsrichtung (44, 1.) strömen, ein Vorgemisch der Komponenten des Komponentensystems (A oder B) gebildet wird, das bei anschließendem Vorbewegen des Kolbens (5) in eine obere Hubstellung in bzw. durch die Mischeinrichtung förderbar ist (Fig.1B).

21. Vorrichtung nach einem oder mehreren der Ansprüche 17 bis 20, **dadurch gekennzeichnet, daß** die Vormischeinrichtung (45) ausgebildet ist
- als im wesentlichen zylindrisches Element, das am Umfang eine oder mehrere in den Primärstrom (43) mündende Öffnungen oder Düsen (57) zur Einführung von Sekundärströmen (50, 51) über die Einlässe (48) aufweist;
oder
- als senkrecht zur Strömungsrichtung (44) des Primärstroms (43) angeordnete blendenartige und vom Primärstrom (43) durchströmbare und/oder umströmbare Platte oder Scheibe (58), die Öffnungen oder Düsen (57) zur Einführung von Sekundärströmen (50, 51) über die Einlässe (48) aufweist, die auf der Stromabseite (59) der Platte oder Scheibe (58) axial in Strömungsrichtung oder in einer Richtung senkrecht zur Strömungsrichtung (44) des Primärstroms (43) in den Primärstrom (43) münden;
oder
- als im Primärstrom (43) angeordneter, vom Primärstrom (43) umströmter und vorzugsweise im wesentlichen rotationssymmetrischer Strömungskörper (60), der Öffnungen oder Düsen (57) zur Einführung von Sekundärströmen (50, 51) über die Einlässe (48) aufweist, die auf der Stromabseite des Strömungskörpers (60) in den Primärstrom (43) münden (Fig. 1C, 1D, 1E).

22. Vorrichtung nach einem oder mehreren der Ansprüche 17 bis 21, **dadurch gekennzeichnet, daß** sie modular aufgebaut ist, wobei die Fördereinrichtung (41), die Vormischeinrichtung (45), die Mischeinrichtung (53) und gegebenenfalls auch das Formwerkzeug (21) als Module ausgebildet sind, die vorzugsweise durch Schnellverschlüsse lösbar miteinander verbindbar sind.

23. Vorrichtung nach einem oder mehreren der Ansprüche 17 bis 22, **dadurch gekennzeichnet, daß** die Fördereinrichtung (41) im wesentlichen aus einer Einheit aus Plastifizierschnecke (61) und Kolben (63) besteht (Fig. 1F).

24. Vorrichtung nach einem oder mehreren der Ansprüche 17 bis 23, **gekennzeichnet durch** folgende Merkmale:
- die Fördereinrichtung (41) umfaßt eine Schnecken-Plastifiziereinheit (71), der über einen Einlaß (42) das Material für den Primärstrom zugeführt werden kann und deren auslaßseitiges Ende mit der Vonnischeinrichtung (45) verbunden ist;
- die Plastifizierschnecke (61) der Plastifiziereinheit (71) weist eine durchgehende axiale Bohrung auf, **durch** die eine darin axial verschiebbare Kolbenstange (62) hindurchgeht, an deren am ausgangsseitigen Ende der Plastifiziereinheit liegenden Ende ein Kolben (63) angeordnet ist;
- die Vormischeinrichtung (45) ist an ihrem Haupteinlaß (47) mit dem Gehäuse (65) der Plastifiziereinheit (71) verbunden;
- am Haupteinlaß (47) der Vormischeinrichtung (45) ist ein Zylinder vorgesehen, der mit der Vormischeinrichtung (45) verbunden oder Teil der Vormischeinrichtung (45) ist und in den der Kolben (63) bei axialer Vorbewegung über die Kolbenstange (62) eindringen kann;
- die Kolbenstange (62) mit dem Kolben (63) sowie die Plastifizierschnecke (61) werden unabhängig steuerbar von einer Antriebseinheit (66) angetrieben,
wobei in der untersten Hubstellung des Kolbens (63) das von der Plastiereinheit (71) geförderte, plastifizierte Material des Primärstroms (43) über einen zwischen dem Kolben (63) und dem Gehäuse (65) vorgesehenen Ringspalt (64) in die Vormischeinrichtung (45) eintreten und mit den Sekundärströmen (50, 51) in Kontakt kommen kann und bei axialem Vorschieben des Kolbens (63) mit der Kolbenstange (62) der Ringspalt (64) und die Einlässe (48) der Vormischeinrichtung (45) für die übrigen Komponenten des Komponentensystems (A oder B) **durch** den Kolben (63) verschlossen werden, der bei weiterem Verschieben das in der Vormischeinrichtung (45) resultierende eingeschlossene Komponentensystem (A oder B) **durch** die Mischeinrichtung (53) fördert (Fig. 1F).

25. Vorrichtung nach einem oder mehreren der Ansprüche 17 bis 23, **gekennzeichnet, durch** folgende Merkmale:
- die Fördereinrichtung (41) umfaßt eine Schnecken-Plastifiziereinheit (71), der über einen Einlaß (42) das Material für den Primärstrom zugeführt werden kann und deren auslaßseitiges Ende mit der Vormischeinrichtung (45) verbunden ist;
- die Plastifizierschnecke (61) der Plastifiziereinheit (71) ist am auslaßseitigen Ende mit einem Kolben (63) fest verbunden, der in einem Zylinder (70) axial verschiebbar angeordnet ist, der mit der Vormischeinrichtung (45) verbunden oder Teil der Vormischeinrichtung (45) ist;
- der Kolben (63) weist einen zentralen axialen Schmelzekanal (67) auf, der am freien Ende des Kolbens (63) mit einem Ventil (69) ausgerüstet ist und in die Vormischeinrichtung (45) mündet und an seinem anderen Ende im Bereich der Verbindung mit der Plastifizierschnecke (61) in radial angeordneten Eintrittöffnungen (68) endet;
- die Plastifizierschnecke (61) mit dem damit verbundenen Kolben (63) ist steuerbar von einer Antriebseinheit (66) angetrieben und axial verschiebbar, wobei in der untersten Hubstellung des Kolbens (63) von der Plastifiziereinheit (71) gefördertes, plastifiziertes Material des Primärstroms (43) über die radialen Eintrittsöffnungen (68) in den axialen Schmelzekanal (67) eintreten und an dessen auslaßseitigem Ende in die Vormischeinrichtung (45) hinein austreten und mit den Sekundärströmen (50, 51) in Kontakt kommen kann, und bei axialem Vorschieben des Kolbens (63) über die Plastifizierschnecke (61) der Zutritt des Primärstroms (43) zur Vormischeinrichtung (45) **durch** das Ventil (69) sowie über den Kolben (63) die Einlässe (48) der Vormischeinrichtung (45) für die übrigen Komponenten des Komponentensystems (A oder B) **durch** den Kolben (63) verschlossen werden, der bei weiterem Vorschieben das in der Vormischeinrichtung (45) resultierende eingeschlossene Komponentensystem (A oder B) **durch** die Mischeinrichtung (53) fördert (Fig. 1G).

26. Vorrichtung nach einem oder mehreren der Ansprüche 17 bis 23, **gekennzeichnet durch** folgende Merkmale:
- die Fördereinrichtung (41) umfaßt eine Schneckenplastifiziereinheit (71), der über einen Einlaß (42) das Material für den Primärstrom zugeführt werden kann und deren auslaßseitiges Ende mit der Vormischeinrichtung (45) verbunden ist;
- die Plastifizierschnecke (61) der Plastifiziereinheit (71) weist eine durchgehende axiale Bohrung auf, **durch** die ein darin axial verschiebbarer Kolben (63) hindurchgeht, der sich am ausgangsseitigen Ende der Plastifiziereinheit (41) fortsetzt und in einem Zylinder (70) axial verschiebbar ist, der mit der Vormischeinrichtung (45) verbunden oder Teil der Vormischeinrichtung (45) ist;
- der Kolben (63) weist in dem Teil, der im Zylinder (70) liegt, einen zentralen axialen Schmelzekanal (67) auf, der am freien Ende des Kolbens (63) mit einem Ventil (69) ausgerüstet ist und in die Vormischeinrichtung (45) mündet und an seinem anderen. Ende, das im Bereich des auslaßseitigen Endes der Plastifiziereinrichtung (71) liegt, in radial angeordneten Eintrittsöffnungen (68) endet;
- die Plastifizierschnecke (61) sowie der Kolben (63) sind unabhängig steuerbar von einer Antriebseinheit (66) angetrieben, wobei in der untersten Hubstellung des Kolbens (63) von der Plastifiziereinheit (71) gefördertes plastifiziertes Material des Primärstroms (43) über die radialen Eintrittsöffnungen (68) in den axialen Schmelzekanal (67) eintreten und an dessen auslaßseitigem Ende in die Vormischeinrichtung (45) hinein austreten und mit den Sekundärströmen (50, 51) in Kontakt kommen kann und bei axialem Vorschieben des Kolbens (63) **durch** die Plastifizierschnecke (61) die radialen Eintrittsöffnungen (68) und die Einlässe (48) der Vormischeinrichtung (45) für die übrigen Komponenten des Komponentensystems (A oder B) **durch** den Kolben (63) verschlossen werden, der bei weiterem Vorschieben das in der Vormischeinrichtung (45) resultierende eingeschlossene Komponentensystem (A oder B) **durch** die Mischeinrichtung (53) fördert (Fig. 1H).

27. Vorrichtung nach einem oder mehreren der Ansprüche 17 bis 23, **gekennzeichnet durch** folgende Merkmale::
- die Fördereinrichtung (41) umfaßt eine von einem Antrieb (66) steuerbar angetriebene Schnecken-Plastifiziereinheit (71) mit einer Plastifizierschnecke (61), der über einen Einlaß (42) das Material für den Primärstrom zugeführt werden kann, sowie einen Zylinder (70) mit einem darin axial verschiebbaren Kolben (63), wobei der Zylinder (70) mit der Vormischeinrichtung (45) verbunden oder Teil der Vormischeinrichtung (45) ist;
- der Zylinder (70) weist einen seitlich, vorzugsweise senkrecht zur Achse des Zylinders (70) angeordneten Einlaß (72) im Bereich des Endes auf, das zur Vormischeinrichtung (45) hin liegt, der über einen Schmelzekanal (73) mit dem auslaßseitigen Ende der Plastifiziereinheit (71) verbunden ist;
- der Kolben (63) weist eine seitliche, vorzugsweise senkrecht zur Achse des Kolbens (63) radial angeordnete Eintrittsöffnung (74) auf, an die sich ein vorzugsweise rechtwinklig abgewinkelter Schmelzekanal (75) anschließt, der von der Eintrittsöffnung (74) ausgehend vorzugsweise zunächst in Radialrichtung und dann zentral in axialer Richtung des Kolbens (63) verläuft und in die Vormischeinrchtung (45) mündet;
- der Kolben (63) ist von einer steuerbaren Antriebseinheit (76) axial verschiebbar angetrieben, wobei in der untersten Hubstellung des Kolbens (63) die Eintrittsöffnung (74) des Kolbens (63) mit dem Einlaß (72) des Zylinders (70) fluchtet, so daß von der Plastifiziereinheit (71) über den Schmelzekanal (73) gefördertes, plastifiziertes Material des Primärstroms (43) **durch** den Einlaß (72) und die Eintrittsöffnung (74) in den Schmelzekanal (75) des Kolbens (63) gelangen und aus ihm in die Vormischeinrichtung (45) einströmen und dort mit den Sekundärströmen (50, 51) in Kontakt kommen kann und bei axialem Verschieben des Kolbens (63) die Eintrittsöffnung (74) sowie die Einlässe (48) der Vormischeinrichtung (45) verschlossen werden und bei weiterem Vorschieben das in der Vormischeinrichtung (45) resultierende eingeschlossene Komponentensystem (A oder B) **durch** die Mischeinrichtung (53) gefördert wird (Fig. 1I).

28. Vorrichtung nach einem oder mehreren der Ansprüche 17 bis 22, **gekennzeichnet durch** folgende Merkmale:
- die Fördereinrichtung (41) umfaßt einen Schubschneckenextruder (77) mit einer Schubschnecke (78), dem über einen Einlaß (42) das Material für den Primärstrom zugeführt werden kann und dessen auslaßseitiges Ende mit der Vormischeinrichtung (45) verbunden ist;
- die Schubschnecke (78) ist steuerbar von einer Antriebseinheit (66) angetrieben, wobei in der untersten Hubstellung der Schubschnecke (78) das geförderte, plastifizierte Material des Primärstroms (43) in die Vormischeinrichtung (45) gefördert wird und dort mit den Sekundärströmen (50, 51) in Kontakt kommt und das resultierende Komponentensystem (A oder B) in die Mischeinrichtung (53) gefördert wird und beim Vorschieben der Schubschnecke (78) das Formwerkzeug (21) gefüllt wird (Fig. 1J).

29. Vorrichtung nach einem oder mehreren der Ansprüche 17 bis 28, **dadurch gekennzeichnet, daß** eine oder mehrere der Zuführungseinrichtungen (14, 15, 16, 16') bzw. ein oder mehrere Einführungsmittel (49) für Sekundärströme (50, 51) und/oder die Fördereinrichtung (41) Dosierfunktion besitzen oder eine Dosiereinrichtung aufweisen (Fig. 1A, 1B, 1 F bis IJ, 2A, 2B, 4).

30. Vorrichtung nach einem oder mehreren der Ansprüche 19 bis 29,
**gekennzeichnet durch**
- ein Transportsystem (35)
und
- eine oder mehrere Prüfeinrichtungen (29) zur Prüfung von Eigenschaften der
Formkörper,
wobei das Transportsystem (35) mindestens eine der folgenden Funktionen durchführen kann:
(i) Enmahme oder Erhalt von Formkörpern aus einem Formwerkzeug (21), einer Schneid- oder Stanzeinrichtung (36), einem Magaziniersystem (24), einem Magazin (34) und/oder einem Archivlager (37),
(ii) Transport von Formkörpern zu einer oder mehreren Prüfeinrichtungen (29),
(iii) Transport von Formkörpern von einer oder mehreren Prüfeinrichtungen (29) zu einer oder mehreren anderen Prüfeinrichtungen (29),
(iv) Transport von Formkörpern von einer oder mehreren Prüfeinrichtungen zu einem Magaziniersystem (24), in ein
Magazin (34), ein Archivlager (37) und/oder einen Abfallsammelbehälter,
(v) Transport von Formkörpern von einem Magaziniersystem (24) oder einem Magazin (34) in ein anderes Magaziniersystem (24) oder ein anderes Magazin (34),
(vi) Anbringen und/oder Lesen einer Codierung an Formkörpern oder Magazinen (34) und Steuerung der Transportvorgänge in Abhängigkeit von der Codierung,
(vii) Transport von Magazinen, in denen Formkörper magazinierbar sind, zu Abgabestellen oder Rückgabestellen,
wobei vorzugsweise eine oder mehrere der Funktionen (i) bis (vii) sequentiell und/oder parallel durchführbar sind
(Fig. 2B, 10, 11).

31. Vorrichtung nach Anspruch 30, **dadurch gekennzeichnet, daß** sie ein Magaziniersystem (24) aufweist, das ein Magazin (34) oder mehrere Magazine (34) umfaßt, in denen erzeugte Formkörper gelagert oder zwischengelagert werden können (Fig. 2B).

32. Vorrichtung nach einem oder mehreren der Ansprüche 17 bis 31, **dadurch gekennzeichnet, daß** ein oder mehrere Einführungsmittel (49) für Sekundärströme (50, 51) und/oder die Fördereinrichtung (41) für den Primärstrom (43) eine Vorrichtung nach Anspruch 17 oder 18 sind.

33. Vorrichtung nach einem oder mehreren der Ansprüche 17 bis 32, **dadurch gekennzeichnet, daß** die Steuereinrichtung (26) eine oder mehrere weitere oder sämtliche weiteren Funktionen der Vorrichtung steuert.

## Claims

1. Method for the rapid preparation of homogeneous or quasi-homogeneous mixtures having a predetermined composition from component systems
(A) of two or more viscous or pasty fluids
or
(B) of one or more viscous or pasty fluids and one or more additives,
comprising the following process sections in the given sequence:
(I) generation of a flow having a constant and selectable throughput of at least one of the viscous or pasty fluids of the component system (A or B) (primary flow),
(II) introduction of the other components of the component system (A or B) in the form of one or more secondary flows having a constant and selectable throughput into the primary flow on substantially the same axial level with respect to a plane transverse to the flow direction of the primary flow so that the flow directions of the secondary flows are approximately parallel to the flow direction of the primary flow,
while forming a flow of a pre-mixture of the components of the component system (A or B) having a substantially uniform overall composition corresponding to the predetermined composition within volume elements extending across the cross-section of the flow of the pre-mixture,
and
(III) supply of a predetermined and selectable volume of the pre-mixture through mixer means having a radial mixing effect while obtaining a homogeneous or quasi-homogeneous mixture of the component system (A or B),
wherein the process steps (I) to (III) are repeated in cycles while preparing the same or a changed component system (A or B).

2. Method according to claim 1,
**characterised by** the following additional process section following process section (III):
(IV) preparation of one or more moulded bodies from the obtained homogeneous or quasi-homogeneous mixture.

3. Method according to claim 2, **characterised in that** the production of the moulded body or the moulded bodies is carried out in a timed manner, wherein
- the process sections (I) to (III) are carried out in a mixture preparation stroke,
and
- moulded bodies are produced from the homogeneous or quasi-homogeneous mixture in one or more following moulding strokes,
after which the above sequence of a mixture preparation stroke and one or more following forming strokes can be repeated as often as desired.

4. Method according to one or more of claims 1 to 3, **characterised in that** the flow direction remains the same in the process sections (I), (II) and (III) and possibly also in process section (IV).

5. Method according to one or more of claims 1 to 3, **characterised in that** in process section (III) and, if applicable, also in process section (IV) the transport of the pre-mixture flow through the mixer means is effected in a flow direction opposed to the flow direction of the primary flow in process section (I) and of the pre-mixture flow in process section (II).

6. Method according to one or more of claims 1 to 5, **characterised in that** in case of shaping by injection moulding the process section (III) and, if applicable, the process section (IV) as well are carried out with a higher mass or volume speed or with a higher throughput than the process sections (I) and (II).

7. Method according to one or more of claims 1 to 6, **characterised in that** in process section (III) mixer means having a radial and an axial mixing effect or a combination of mixer means having a radial and/or an axial mixing effect are used.

8. Method according to one or more of claims 1 to 7, **characterised in that** the homogeneous or quasi-homogeneous mixture obtained after process section (III) is subjected to a reaction in a reactor or a reaction section, if appropriate before a following process section (IV) is carried out.

9. Method according to one or more of claims 1 to 3 and 5 to 8, comprising:
- the introduction of the components of the component system (A or B) in predetermined proportions into an injection unit (1) in which the viscous or pasty state of the component system remains unchanged,
- the homogenisation or quasi-homogenisation of the component system (A or B) in mixer means (2),
and
- the production of one or more moulded bodies from the homogenised or quasi-homogenised mixture, **characterised by**
- use of an injection unit (1) substantially consisting of a cylinder (4) and a piston (5) which can be axially displaced therein,
- simultaneous introduction of the components of the component system (A or B) into a volume element (VE) extending across the radial cross-section of the cylinder (4) at the outlet side end (9) of the cylinder (4) of the injection unit (1) above the piston (5) while, at the same time, the piston (5) is returned from an uppermost stroke position to a lower stroke position, and a pre-mixture of the components of the component system (A or B) having a substantially uniform overall composition corresponding to the predetermined composition within volume elements (VEᵢ) extending across the radial cross section of the cylinder (4) is prepared,
- transport of the pre-mixture through the mixer means (2) by advancing the piston (5) from the lower stroke position into an upper stroke position, and
- homogenisation or quasi-homogenisation of the pre-mixture in mixer means (2) having a radial mixing effect, particularly in a static mixer device.

10. Method according to one or more of claims 1 to 3 and 5 to 8, comprising:
- the introduction of the components of the component system (A or B) in predetermined proportions into an injection unit (1) in which the viscous or pasty state of the component system remains unchanged,
- the homogenisation or quasi-homogenisation of the component system (A or B) in mixer means (2), and
- the production of one or more moulded bodies from the homogenised or quasi-homogenised mixture, **characterised by**
- use of an injection unit (1) substantially consisting of a cylinder (4) and piston (5) which can be axially displaced therein,
- simultaneous introduction of the components of the component system (A or B) into the cylinder (4) of the injection unit (1) above the piston (5) while, at the same time, the piston (5) is returned from its uppermost stroke position to a lower stroke position, and a pre-mixture of the components of the component system (A or B) having an overall composition which corresponds to the predetermined composition is prepared,
- transport of the pre-mixture through the mixer means (2) by advancing the piston (5) from the lower stroke position into an upper stroke position,
and
- homogenisation or quasi-homogenisation of the pre-mixture in mixer means (2) having a radial and an axial mixing effect.

11. Method according to one or more of claims 1 to 10, **characterised in that** at least one of the viscous or pasty fluids is a molten plastic material, preferably a thermoplastic polymer and/or a thermoplastic elastomer and/or the production of the moulded bodies is carried out by injection moulding or extruding.

12. Method according to one or more of claims 1 to 11, **characterised in that** at least one of the components of the component system (A or B) is a matrix material, particularly a molten plastic material, and at least one of the other components is an additive, preferred additives used being fillers, colouring agents, polymer components, stabilisers, catalysts, flow and demoulding agents, lubricants and/or reactive components.

13. Method according to one or more of claims 1 to 12, **characterised in that** the components of the component system (A or B) are metered during their introduction into the cylinder (4) or that the primary flow (43) and the secondary flows (50, 51) are dosed.

14. Method according to one or more of claims 1 to 13, **characterised in that** the introduction of one, several or all of the components of the primary flow (43) and the secondary flows (50, 51) is controlled according to type, dosing amount and/or dosing speed.

15. Method according to one or more of claims 2 to 14, **characterised by** the execution of one or more of the following steps after process section (IV):
(a) sequential and/or parallel supply of the moulded bodies to a conveying system (35), possibly including withdrawal from a magazine (34),
(b) conveying the moulded bodies to one or more testing means (29), the transport to a plurality of testing means (29) being carried out sequentially and/or in parallel,
(c) execution of the corresponding test(s) in one or more testing means (29), the moulded bodies being tested in parallel and/or sequentially in the testing means (29) if a plurality of tests are carried out,
(d) sequential or parallel removal of the moulded bodies or products prepared therefrom from the testing means (29) and insertion into a magazine (34), an archiving storage or a garbage container after the implementation of the test(s), preferably including collection, processing and/ or transfer of test results in or after step (c).

16. Method according to claim 15, **characterised in that** one or several or all conveying operations, particularly in steps (a), (b) and/or (d), and/or the tests in step (c) and/or the collection, processing, evaluation and/or transfer of test results are controlled by control means (26), preferably using central data collection and data processing, particularly using a computer system or a microprocessor system and/or a programmable logic controller.

17. Device for the rapid preparation of homogeneous or quasi-homogeneous mixtures having a predetermined composition from component systems
(A) of two or more viscous or pasty fluids
or
(B) one or more viscous or pasty fluids and one or more
additives,
comprising
- supply and pre-mixer means (40) including
- conveying means (41) having one or more inlets (42) for at least one of the viscous or pasty fluids of the component system (A or B) as a material for a primary flow (43) which can supply the material as a primary flow (43) with a constant and selectable throughput in a predetermined flow direction (44),
and
- pre-mixer means (45), preferably disposed on the downstream end (46) of the conveying means (41) and comprising
- a main inlet (47) for the primary flow (43) from the conveying means (41),
- one or more inlets (48) for the other components of the component system (A or B) disposed substantially in the same plane (52) transverse to the flow direction (44) of the primary flow (43) which is preferably positioned near the main inlet (47) or at the main inlet (47),
and
- introduction means (49) connected to the inlets (48) and arranged so that the other components of the component system (A or B) can be brought in contact with and/or introduced into the primary flow (43) in the form of one or more secondary flows (50, 51),
- mixer means (53) having a radial mixing effect, the inlet (54) of which is disposed at the outlet (55) of the pre-mixer means (45) and at the outlet (56) of which the homogeneous or quasi-homogeneous mixture of the component system (A or B) is discharged (Figs. 1A, 1B),
and
- control means (26) controlling one or several functions of the device,
**characterised in that**
the control means control
- the conveying means (41) for the primary flow (43)
and
- the pre-mixer means (45) with the introduction means (49) such that
(I) the conveying means (41) produce a primary flow with a constant and selectable throughput consisting of at least one of the viscous or pasty fluids of the component system (A or B),
(II) the pre-mixer means (45) with the introduction means (49) introduce the other components of the component system (A or B) in the form of one or several secondary flows with a constant and selectable throughput with formation of a flow of a pre-mixture into the primary flow,
and
(III) the conveying means (41) with the pre-mixer means (45) deliver a predetermined, selectable volume of the pre-mixture through the mixer means (53),
and the steps (I) to (III) are repeated in cycles while preparing the same or a changed component system (A or B).

18. Device according to claim 17, **characterised in that**
- the main inlet (47) of the pre-mixer means (45) for the primary flow (43) is disposed on the outlet side end of the pre-mixer means on substantially the same axial level (51) as the inlets (48) for the secondary flows (50, 51),
- the pre-mixer means (45) comprise own conveyor means (5, 6) having two opposed supply directions and can be filled with the material of the primary flow (43) and the secondary flow(s) (50) in the first conveying direction (44, 1.), whereby the primary flow (43) comes in contact with the secondary flows (50, 51), while in the second conveying direction (44, 2.) the pre-mixture of the components of the component system (A or B) formed in the pre-mixer means (45) can be conveyed into or through the mixer means (53).

19. Device according to claim 17 or 18, **characterised in that** it further comprises a moulding tool (21) connected or connectable to the outlet (56) of the mixer means (53), preferably an injection moulding tool or a continuous casting tool.

20. Device according to claim 18 or 19, **characterised in that** the conveying means (5, 6) of the pre-mixer means (45) substantially consist of a piston (5) disposed in a cylinder (4) provided therein and a piston drive (6) (injection unit), the piston being axially reciprocable within the cylinder (5), wherein a pre-mixture of the components of the component system (A or B) is formed from the primary flow (43) and the secondary flow(s) (50) flowing in the first flow direction (44, 1.) when the piston (5) is returned into a lower stroke position, which pre-mixture can be conveyed into or through the mixer device when the piston (5) is then advanced into an upper stroke position (Fig. 1 B).

21. Device according to one or more of claims 17 to 20, **characterised in that** the pre-mixer means (45) are formed
- as a substantially cylindrical element provided, at the circumference, with one or more orifices or nozzles (57) opening into the primary flow (43) for introducing secondary flows (50, 51) through the inlets (48),
or
- as a diaphragm-like plate or disk (58) disposed perpendicular to the flow direction (44) of the primary flow (43) through and/or around which the primary flow can flow, the plate or disk (58) comprising openings or nozzles (57) opening into the primary flow axially in the flow direction or in a direction perpendicular to the flow direction (44) of the primary flow (43) on the downstream side (59) of the plate or disk (58) for introducing secondary flows (50, 51) through the inlets (48),
or
- as a preferably substantially rotationally symmetric flow body (60) disposed in the primary flow (43), the primary flow (43) flowing around the flow body, and provided with openings or nozzles (57) opening into the primary flow (43) downstream of the flow body (60) for introducing secondary flows (50, 51) through the inlets (48) (Figs. 1C, 1D, 1E).

22. Device according to one or more of claims 17 to 21, **characterised in that** it has a modular construction, the conveying means (41), the pre-mixer means (45) and the mixer means (53) as well as possibly the moulding tool (21) being formed as modules which are preferably detachably connected to each other by means of quick-action fastenings.

23. Device according to one or more of claims 17 to 22, **characterised in that** the conveying means (41) substantially consist of a unit formed by a plasticizer screw (61) and a piston (63) (Fig. 1F).

24. Device according to one or more of claims 17 to 23, **characterised by** the following features:
- the conveyor means (41) comprise a screw plasticizer unit (71) which can be supplied with the material for the primary flow through an inlet (42), the outlet side end of the screw plasticizer unit (71) being connected to the pre-mixer means (45);
- the plasticizer screw (61) of the plasticizer unit (71) is provided with an axial through hole through which a piston rod (62) passes which can be axially moved therein, a piston (63) being disposed at the end of the piston rod (62) at the outlet side end of the plasticizer unit;
- the pre-mixer means (45) are connected to the housing (65) of the plasticizer unit (71) at their main inlet (47);
- at the main inlet (47) of the pre-mixer means (45) a cylinder is provided into which the piston (63) can be moved when it is axially advanced by the piston rod (62), the cylinder being connected to the pre-mixer means (45) or being a part of the pre-mixer means (45);
- the piston rod (62) with the piston (63) and the plasticizer screw (61) are driven by a drive unit (66) so that they are independently controllable whereby in the lower stroke position of the piston (63) the plasticized material of the primary flow (43) supplied by the plasticizer unit (71) can enter the pre-mixer means (45) through an annular clearance (64) provided between the piston (63) and the housing (65) and be brought in contact with the secondary flows (50, 51), and the annular clearance (64) and the inlets (48) of the pre-mixer means (45) for the other components of the component system (A or B) are closed by the piston (63) when the piston is axially advanced by the piston rod 62, the piston (63) conveying the resulting component system (A or B) enclosed in the pre-mixer means (45) through the mixer means (53) when the piston (63) is further advanced (Fig. 1F).

25. Device according to one or more of claims 17 to 23, **characterised by** the following features
- the conveyor means (41) comprise a screw plasticizer unit (71) which can be supplied with the material for the primary flow through an inlet (42), the outlet side end of the screw plasticizer unit (71) being connected to the pre-mixer means (45);
- the plasticizer screw (61) of the plasticizer unit (71) is fixedly connected to a piston (63) at the outlet side end, the piston (63) being disposed in a cylinder (70) so as to be axially movable, the cylinder (70) being connected to the pre-mixer means (45) or forming a part of the pre-mixer means (45);
- the piston (63) is provided with a central axial melt channel (67) which is provided with a valve (69) at the free end of the piston (63), opens into the pre-mixer means (45) and ends in radially positioned inlet orifices (68) at its other end in the region of the connection to the plasticizer screw (61);
- the plasticizer screw (61) with the piston (63) connected thereto is controllably driven by a drive unit (66) and can be axially shifted, whereby in the lower stroke position of the piston (63) plasticized material of the primary flow (43) supplied by the plasticizer unit (71) can enter the axial melt channel (67) through the radial inlet orifices (68), be discharged into the pre-mixer means (45) at its outlet side end and be brought in contact with the secondary flows (50, 51), and the access of the primary flow (43) to the pre-mixer means (45) is closed by the valve (69), and the inlets (48) of the pre-mixer means (45) for the other components of the component system (A or B) are closed by the piston (63) when the piston (63) is axially advanced by the plasticizer screw (61), the piston (63) conveying the resulting component system (A or B) enclosed in the pre-mixer means (45) through the mixer means (53) when the piston (63) is further advanced (Fig. 1G).

26. Device according to one or more of claims 17 to 23, **characterised by** the following features:
- the conveyor means (41) comprise a screw plasticizer unit (71) which can be supplied with the material for the primary flow through an inlet (42), the outlet side end of the screw plasticizer unit (71) being connected to the pre-mixer means (45);
- the plasticizer screw (61) of the plasticizer unit (71) comprises an axial through hole through which a piston (63) passes which can be axially displaced therein, extends further on the outlet side end of the plasticizer unit (71) and is axially movable in a cylinder (70) which is connected to the pre-mixer means (45) or is a part of the pre-mixer means (45);
- the piston (63) includes a central axial melt channel (67) in the part disposed in the cylinder (70), the central axial melt channel (67) is provided with a valve (69) at the free end of the piston (63), and it opens into the pre-mixer means (45) and ends in radially positioned inlet orifices (68) at its other end which is disposed in the region of the outlet side end of the plasticizer unit (71);
- the plasticizer screw (61) as well as the piston (63) are driven by a drive unit (66) so that they are independently controllable whereby in the lower stroke position of the piston (63) plasticized material of the primary flow (43) supplied by the plasticizer unit (71) can be introduced into the axial melt channel (67) through the radial inlet orifices (68), and be discharged into the pre-mixer means (45) at its outlet side end and brought in contact with the secondary flows (50, 51), and the radial inlet orifices (68) and the inlets (48) of the pre-mixer means (45) for the other components of the component system (A or B) are closed by the piston (63) when the piston (63) is axially advanced by the plasticizer screw (61), the piston (63) conveying the resulting component system (A or B) enclosed in the pre-mixer (45) means through the mixer means (53) when the piston (63) is further advanced (Fig. 1H).

27. Device according to one or more of claims 17 to 23, **characterised by** the following features:
- the conveyor means (41) comprise a screw plasticizer unit (71) controllably driven by a drive (66) and comprising a plasticizer screw (61) to which the material for the primary flow can be supplied through an inlet (42), as well as a cylinder (70) including a piston (63) axially displaceable therein, the cylinder (70) being connected to the pre-mixer means (45) or forming a part of the pre-mixer means (45);
- the cylinder (70) is provided with an inlet (72) disposed at the side, preferably perpendicular to the axis of cylinder (70) in the region of the end facing the pre-mixer means (45), the inlet (72) being connected to the outlet side end of the plasticizer unit (71) via a melt channel (73);
- the piston (63) comprises a lateral inlet orifice (74) preferably positioned radially perpendicular to the axis of the piston (63) to which a preferably orthogonally bent melt channel (75) is connected which, beginning at the inlet orifice (74), preferably first extends in the radial direction and then centrally in the axial direction of the piston (63) and opens into the pre-mixer means (45);
- the piston (63) is driven by a controllable drive unit (76) so that it is axially movable, whereby the inlet orifice (74) of the piston (63) is aligned with the inlet (72) of the cylinder (70) in the lower stroke position of the piston (63) so that plasticized material of the primary flow (43) supplied by the plasticizer unit (71) through the melt channel (73) can be introduced into the melt channel (75) of the piston (63) through the inlet (72) and the inlet orifice (74), from there flow into the pre-mixer means (45) and there be brought in contact with the secondary flows (50, 51), the piston (63) conveying the resulting component system (A or B) enclosed in the pre-mixer means (45) through the mixer means (53) when the piston (63) is further advanced (Fig. 1I).

28. Device according to one or more of claims 17 to 22, **characterised by** the following features:
- the conveyor means (41) comprise a screw push extruder (77) including a push screw (78) to which the material for the primary flow can be supplied through an inlet (42), the outlet side end of the screw push extruder (77) being connected to the pre-mixer means (45);
- the push screw (78) is controllably driven by a drive unit (66), the conveyed, plasticized material of the primary flow (43) being conveyed into the pre-mixer means (45) in the lowest stroke position of the push screw (78) to be brought there in contact with the secondary flows (50, 51), the resulting component system (A or B) being conveyed into the mixer means (53) and filled into the moulding tool (21) when the push screw (78) is advanced (Fig. 1J).

29. Device according to one or more of claims 17 to 28, **characterised in that** one or more of the supply means (14, 15, 16, 16') or one or more introduction means (49) for secondary flows (50, 51) and/or the conveyor means (41) have a dosing function or comprise dosing means (Figs. 1A, 1B, 1F to 1J, 2A, 2B,4).

30. Device according to one or more of claims 17 to 29, **characterised by**
- a conveying system (35)
and
- one or more testing means (29) for testing properties of the
moulded bodies,
wherein the conveying system (35) can carry out at least one of the following functions:
(i) gathering or receiving moulded bodies from a moulding tool (21), a cutting or punching device (36), a magazine storing system (24), a magazine (34) and/or an archiving storage (37),
(ii) conveying moulded bodies to one or more testing means (29),
(iii) conveying moulded bodies from one or more testing means (29) to one or more other testing means (29),
(iv) conveying moulded bodies from one or more testing means (29) to a magazine storing system (24), into a magazine (34), an archiving storage (37) and/or a garbage container,
(v) conveying moulded bodies from one magazine storing system (24) or magazine (34) to another magazine storing system (24) or magazine (34),
(vi) applying a code to moulded bodies or magazines (34) and/or reading codes on moulded bodies or magazines (34) and controlling the conveying operations in dependence of the codes,
(vii) conveying magazines in which moulded bodies can be stored, to discharging or returning locations,
wherein preferably one or more of the functions (i) to (vii) can be carried out sequentially and/or in parallel (Figs. 2B, 10, 11).

31. Device according claim 30, **characterised in that** it comprises a magazine storing system (24) comprising one magazine (34) or a plurality of magazines (34) in which produced moulded bodies can be stored or intermediately stored (Fig. 2B).

32. Device according to one or more of claims 17 to 31, **characterised in that** one or more introduction means (49) for secondary flows (50, 51) and/or the conveyor means (41) for the primary flow (43) are a device according to claim 17 or 18.

33. Device according to one or more of claims 17 to 32, **characterised in that** the control means (26) are arranged to control one or several further or all functions of the device.

## Revendications

1. Procédé de production rapide de mélanges homogènes ou quasi-homogènes ayant une composition prédéterminée, à partir de systèmes de composants constitués de :
(A) deux fluides visqueux ou pâteux, ou plus
ou
(B) un ou plusieurs fluides visqueux ou pâteux et un ou plusieurs additifs,
comprenant les étapes de procédé suivantes dans l'ordre indiqué :
(I) production d'un flux ayant un débit constant et sélectionnable, constitué d'au moins un des fluides visqueux ou pâteux du système de composants (A ou B) (flux primaire),
(II) introduction des autres composants du système de composants (A ou B), à une hauteur axiale sensiblement identique par rapport à un plan passant à la transversale de la direction d'écoulement du flux primaire, dans le flux primaire sous la forme d'un ou de plusieurs flux secondaires ayant un débit constant et sélectionnable de manière à ce que les directions d'écoulement des flux secondaires soient approximativement parallèles à la direction d'écoulement du flux primaire,
en formant un flux d'un prémélange des composants du système de composants (A ou B), qui présente une composition globalement sensiblement identique, correspondant à la composition prédéterminée, à l'intérieur des éléments volumiques (V_{Ei}) s'étendant sur sa section transversale, et
(III) transport d'un volume prédéterminé et sélectionnable du prémélange à travers un dispositif mélangeur ayant une action de mélange radiale en conservant un mélange homogène ou quasi-homogène constitué du système de composants (A ou B),
les étapes de procédé (I) à (III) étant répétées de manière cyclique en produisant le même système de composants (A ou B) ou un système de composants (A ou B) modifié.

2. Procédé selon la revendication 1,
**caractérisé par** l'autre étape de procédé suivante, après l'étape de procédé (III) :
(IV) production d'un ou de plusieurs corps moulés à partir du mélange homogène ou quasi-homogène obtenu.

3. Procédé selon la revendication 2, **caractérisé en ce que** la production du corps moulé ou des corps moulés est effectuée de manière rythmée,
- les étapes de procédé (I) à (III) étant réalisées dans un temps de production du mélange
et
- des corps moulés étant produits à partir du mélange homogène ou quasi-homogène dans un temps de formage ou plusieurs temps de formage consécutifs,
après quoi la succession ci-dessus d'un temps de production du mélange et d'un ou de plusieurs autres temps de formage consécutifs pouvant être répétée autant de fois que désiré.

4. Procédé selon une ou plusieurs des revendications 1 à 3, **caractérisé en ce que** la direction d'écoulement est identique au cours des étapes de procédé (I), (II) et (III) et le cas échéant également à l'étape de procédé (IV).

5. Procédé selon une ou plusieurs des revendications 1 à 3, **caractérisé en ce que** le transport du flux de prémélange est effectué à travers le dispositif mélangeur au cours de l'étape de procédé (III) et le cas échéant également au cours de l'étape de procédé (IV) dans une direction d'écoulement qui est opposée à la direction d'écoulement du flux primaire de l'étape de procédé (I) et du flux de prémélange de l'étape de procédé (II).

6. Procédé selon une ou plusieurs des revendications 1 à 5, **caractérisé en ce que** l'étape de procédé (III) et le cas échéant aussi l'étape de procédé (IV) sont réalisées lors du formage par moulage par injection à une vitesse pondérale ou volumique plus élevée ou à un débit plus élevé que celle ou celui des étapes de procédé (I) et (II).

7. Procédé selon une ou plusieurs des revendications 1 à 6, **caractérisé en ce que**, à l'étape de procédé (III), on utilise un dispositif mélangeur ayant une action de mélange radiale et axiale ou une combinaison de dispositifs mélangeurs ayant une action de mélange radiale et/ou axiale.

8. Procédé selon une ou plusieurs des revendications 1 à 7, **caractérisé en ce que** le mélange homogène ou quasi-homogène obtenu après l'étape de procédé (III) est soumis à une réaction ayant lieu dans un réacteur ou une section de réaction, le cas échéant avant une étape de procédé (IV) située en aval.

9. Procédé selon une ou plusieurs des revendications 1 à 3 et 5 à 8, consistant à
- introduire les composants du système de composants (A ou B) en des rapports quantitatifs prédéfinis dans une unité d'injection (1), dans laquelle l'état visqueux ou pâteux du système de composants est conservé,
- homogénéiser ou quasi-homogénéiser le système de
composants (A ou B) dans un dispositif mélangeur (2)
et
- produire un ou plusieurs corps moulés à partir du mélange homogénéisé ou quasi-homogénéisé,
**caractérisé par**
- l'utilisation d'une unité d'injection (1), qui se compose sensiblement d'un cylindre (4) et d'un piston (5) coulissant dans celui-ci dans le sens axial,
- l'introduction simultanée des composants du système de composants (A ou B) dans un élément volumique (VE) s'étendant sur la section transversale radiale du cylindre (4) à l'extrémité (9) du cylindre (4) de l'unité d'injection (1) se trouvant du côté sortie au-dessus du piston (5) tout en faisant revenir simultanément le piston (5) d'une première position de levage la plus élevée en une position de levage inférieure et en formant un prémélange des composants du système de composants (A ou B) qui présente globalement une composition sensiblement identique, correspondant à la composition prédéterminée, à l'intérieur des éléments volumiques (VEᵢ) s'étendant sur la section transversale radiale du cylindre (4),
- le transport du prémélange grâce à la poussée du piston (5) depuis la position de levage inférieure en une position de levage supérieure à travers le dispositif mélangeur (2)
et
- l'homogénéisation ou la quasi-homogénéisation du prémélange dans un dispositif mélangeur (2) ayant une action de mélange radiale, en particulier dans un dispositif mélangeur statique.

10. Procédé selon une ou plusieurs des revendications 1 à 3 et 5 à 8, consistant à
- introduire les composants du système de composants (A ou B) en des rapports quantitatifs prédéfinis dans une unité d'injection (1), dans laquelle l'état visqueux ou pâteux du système de composants est conservé,
- homogénéiser ou quasi-homogénéiser le système de composants (A ou B) dans un dispositif mélangeur (2)
et
- produire un ou plusieurs corps moulés à partir du mélange homogénéisé ou quasi-homogénéisé,
**caractérisé par**
- l'utilisation d'une unité d'injection (1), qui se compose essentiellement d'un cylindre (4) et d'un piston (5) coulissant dans celui-ci dans le sens axial,
- l'introduction simultanée des composants du système de composants (A ou B) dans le cylindre (4) de l'unité d'injection (1) au-dessus du piston (5) tout en faisant revenir simultanément le piston (5) de sa position de levage la plus élevée en une position de levage inférieure et en formant un prémélange des composants du système de composants (A ou B) dont la composition correspond globalement à la composition prédéterminée,
- le transport du prémélange grâce à la poussée du piston (5) depuis la position de levage inférieure en une position de levage supérieure à travers le dispositif mélangeur (2)
et
- l'homogénéisation ou la quasi-homogénéisation du prémélange dans un dispositif mélangeur (2) ayant une action de mélange axiale et radiale.

11. Procédé selon une ou plusieurs des revendications 1 à 10, **caractérisé en ce qu'**au moins un des fluides visqueux ou pâteux est un plastique fondu, de préférence un plastique thermoplastique et/ou un élastomère thermoplastique et/ou la production d'un corps moulé par moulage par injection ou par extrusion est réalisée.

12. Procédé selon une ou plusieurs des revendications 1 à 11, **caractérisé en ce qu'**au moins un des composants du système de composants (A ou B) est une matière matricielle, en particulier une matière plastique fondue, et au moins un des autres composants est un additif, de préférence des charges, des colorants, des composants polymériques, des stabilisateurs, des catalyseurs, des agents d'écoulement et de démoulage, des lubrifiants et/ou des composants réactifs étant utilisés comme additifs.

13. Procédé selon une ou plusieurs des revendications 1 à 12, **caractérisé en ce que** les composants du système de composants (A ou B) sont dosés lors de leur introduction dans le cylindre (4) ou le flux primaire (43) et les flux secondaires (50, 51).

14. Procédé selon une ou plusieurs des revendications 1 à 13, **caractérisé en ce que** l'introduction d'un, de plusieurs ou de la totalité des composants du flux primaire (43) et des flux secondaires (50, 51) est régulée en fonction du type, de la quantité de dosage et/ou de la vitesse de dosage.

15. Procédé selon une ou plusieurs des revendications 2 à 14, **caractérisé en ce que** l'on effectue une ou plusieurs des étapes suivantes après l'étape de procédé (IV) :
(a) l'amenée séquentielle et/ou parallèle des corps moulés à un système de transport (35), le cas échéant en les prélevant dans un magasin (34) ;
(b) le transport des corps moulés vers un ou plusieurs dispositifs de contrôle (29), le transport vers plusieurs dispositifs de contrôle (29) étant réalisé séquentiellement et/ ou parallèlement,
(c) la réalisation du ou des contrôles correspondants dans un ou plusieurs dispositifs de contrôle (29), les corps moulés étant contrôlés dans les dispositifs de contrôle (29) en réalisant plusieurs contrôles parallèlement et/ ou séquentiellement ;
(d) l'évacuation séquentielle ou parallèle des corps moulés ou produits en résultant, après réalisation du ou des contrôles, hors du ou des dispositifs de contrôle (29) et l'introduction dans un magasin (34), dans un dépôt ou un récipient de collecté des déchets,
de préférence avec enregistrement, traitement et/ou transmission des résultats du contrôle pendant ou bien après l'étape (c).

16. Procédé selon la revendication 15, **caractérisé en ce qu'**une ou plusieurs ou la totalité des opérations de transport, en particulier au cours des étapes (a), (b) et/ou (d), et/ou les contrôles à l'étape (c) et/ou l'enregistrement, le traitement, l'évaluation et/ou la transmission des résultats des contrôles, sont commandées avec un dispositif de commande (26), de préférence intégrant un enregistrement et un traitement centralisés des données, en particulier avec un système informatique ou un système à microprocesseur et/ ou un automate programmable (API).

17. Dispositif de production rapide de mélanges homogènes ou quasi- homogènes ayant une composition prédéterminée, à partir des systèmes de composants constitués
(A) de deux fluides visqueux ou pâteux ou plus,
ou
(B) d'un ou de plusieurs fluides visqueux ou pâteux et d'un ou de plusieurs additifs,
comprenant :
- un système de transport et de prémélange (40), comportant :
- un système de transport (41) comprenant un ou plusieurs orifices d'entrée (42) destinés à au moins un des fluides visqueux ou pâteux du système de composants (A ou B) constituant la matière d'un flux primaire (43), ledit système de transport pouvant transporter la matière sous la forme d'un flux primaire (43) à un débit constant et sélectionnable dans une direction d'écoulement prédéterminé (44),
et
- un système de prémélange (45) qui est disposé de préférence à l'extrémité (46) du système de transport (41), opposée au sens du flux, et présente :
• un orifice d'entrée principale (47) pour le flux primaire (43) sortant du système de transport (41),
• un ou plusieurs orifices d'entrée (48) pour les autres composants du système de composants (A ou B), qui se trouvent sensiblement dans le même plan (52) à la perpendiculaire de la direction d'écoulement (44) du flux primaire (43), qui se trouve de préférence à proximité de l'orifice d'entrée principale (47) ou au niveau de l'orifice d'entrée principale (47),
et
• des moyens d'introduction (49), qui sont raccordés aux orifices d'entrée (48) et conçus pour que les autres composants du système de composants (A ou B), sous la forme d'un ou de plusieurs flux secondaires (50, 51), puissent être mis en contact avec le flux primaire (43) et/ou être introduits dans celui-ci,
- un dispositif mélangeur (53) ayant une action de mélange radiale, dont l'orifice d'entrée (54) est disposé à la sortie (55) du système de prémélange (45) et à la sortie duquel (56) sort le mélange homogène ou quasi-homogène constitué du système de composants (A ou B) (figure 1A, 1B), et
- un dispositif de commande (26) qui commande une ou plusieurs fonctions du dispositif,
**caractérisé en ce que** le dispositif de commande (26) commande
- le système de transport (41) pour le flux primaire (43) et d'introduction (49) de sorte que
(I) le système de transport (41) produise un flux primaire ayant un débit constant et sélectionnable à partir d'au moins un des fluides visqueux ou pâteux du système de composants (A ou B),
(II) le système de prémélange (45) avec les moyens d'introduction (49) introduise dans le flux primaire le restant des composants du système de composants (A ou B) sous la forme d'un ou de plusieurs flux secondaires ayant un débit constant et sélectionnable en formant un flux d'un prémélange
et
(III) le système de transport (41) avec le système de prémélange (45) transporte un volume prédéterminé et sélectionnable Sdu prémélange à travers le dispositif mélangeur (53), et les étapes (I) à (III) sont répétées de manière cyclique en produisant le même système de composants ou un système de composants modifié (A ou B).

18. Dispositif selon la revendication 17, **caractérisé en ce que**
- l'orifice d'entrée principale (47) du système de prémélange (45) pour le flux primaire (43) se situe à l'extrémité du côté sortie du système de prémélange sensiblement à la même hauteur axiale (51) que les orifices d'entrée (48) pour les flux secondaires (50, 51),
- le système de prémélange (45) présente un système de transport (5, 6), qui lui est propre et qui comprend deux directions de transport opposées réciproquement, et peut être chargé dans la première direction de transport (44, 1.) avec la matière du flux primaire (43) et du ou des flux secondaires (50), le flux primaire (43) entrant en contact avec les flux secondaires (50, 51), alors que, dans la deuxième direction de transport (44, 2.), le prémélange des composants du système de composants (A ou B) produit dans le système de prémélange (45) peut être transporté dans ou à travers le dispositif mélangeur (53) (figure 1B).

19. Dispositif selon la revendication 17 ou 18, **caractérisé en ce qu'**il présente en plus un outil de moulage (21) qui est raccordé ou peut être raccordé à la sortie (56) du dispositif mélangeur (53), de préférence un outil de moulage par injection ou un outil de moulage par extrusion.

20. Dispositif selon la revendication 18 ou 19, **caractérisé en ce que** le système de transport (5, 6) du système de prémélange (45) se compose essentiellement d'un piston (5) prévu à l'intérieur de celui-ci dans un cylindre (4) et d'un entraînement de piston (6) (unité d'injection), le piston pouvant être déplacé d'avant en arrière dans la direction axiale du cylindre (4) et, lors du mouvement en arrière du piston (5) en une position de levage inférieure, un prémélange des composants du système de composants (A ou B), qui peut être transporté dans ou à travers le dispositif mélangeur lors de la poussée en avant consécutive du piston (5) en une position de levage supérieure, étant formé à partir du flux primaire (43) et du ou des flux secondaires (50) qui circulent dans la première direction de flux (44, 1.) (figure 1B).

21. Dispositif selon une ou plusieurs des revendications 17 à 20, **caractérisé en ce que** le système de prémélange (45) est conçu
- sous la forme d'un élément sensiblement cylindrique, qui présente à sa circonférence une ou plusieurs ouvertures ou buses (57) destinées à introduire les flux secondaires (50, 51) par le biais des orifices d'entrée (48) et débouchant dans le flux primaire (43) ;
ou
- sous la forme d'une plaque ou d'un disque (58), disposé perpendiculairement à la direction d'écoulement (44) du flux primaire (43), de type diaphragme ou bien pouvant être traversé ou contourné par le flux primaire (43), et présentant des ouvertures ou buses (57) destinées à introduire les flux secondaires (50, 51) par le biais des orifices d'entrée (48) qui débouchent dans le flux primaire (43) du côté opposé au flux (59) de la plaque ou du disque (58) et axialement dans la direction d'écoulement ou dans une direction perpendiculaire à la direction d'écoulement (44) du flux primaire (43) ;
ou
- sous la forme d'un corps d'écoulement (60), disposé dans le flux primaire (43), contourné par le flux primaire (43) et de préférence sensiblement symétrique par rotation, qui présente des ouvertures ou buses (57) destinées à introduire les flux secondaires (50, 51) par le biais des orifices d'entrée (48) qui débouchent dans le flux primaire (43) du côté opposé au flux du corps d'écoulement (60) (figures 1C, 1D, 1E).

22. Dispositif selon une ou plusieurs des revendications 17 à 21, **caractérisé par le fait qu'**il comporte une structure modulaire, le système de transport (41), le système de prémélange (45), le dispositif mélangeur (53) et le cas échéant aussi l'outil de moulage (21) étant conçus sous la forme de modules qui peuvent être raccordés de manière amovible les uns avec les autres de préférence par connexions rapides.

23. Dispositif selon une ou plusieurs des revendications 17 à 22, **caractérisé en ce que** le système de transport (41) se compose essentiellement d'une unité constituée d'une vis de plastification (61) et d'un piston (63) (figure 1F).

24. Dispositif selon une ou plusieurs des revendications 17 à 23, **caractérisé par** les caractéristiques suivantes :
- le système de transport (41) comprend une unité de plastification à vis (71), à laquelle peut être amenée la matière pour le flux primaire par le biais d'un orifice d'entrée (42) et dont l'extrémité du côté sortie est raccordée au système de prémélange (45) ;
- la vis de plastification (61) de l'unité de plastification (71) présente une perforation dans le sens axial, à travers laquelle passe une tige de piston (62) coulissant axialement dans celle-ci, et à l'extrémité du côté sortie de laquelle est disposé un piston (63) ;
- le système de prémélange (45) est raccordé au niveau de son orifice d'entrée principale (47) avec le boîtier (65) de l'unité de plastification (71) ;
- à l'orifice d'entrée principale (47) du système de prémélange (45), il y a un cylindre qui est raccordé au système de prémélange (45) ou fait partie du système de prémélange (45) et dans lequel peut pénétrer le piston (63) lors de la poussée axiale par le biais de la tige de piston (62) ;
- la tige de piston (62) avec le piston (63) et la vis de plastification (61) peuvent être entraînées par une unité d'entraînement (66), tout en pouvant être commandées indépendamment,
où la matière plastifiée du flux primaire (43), transportée par l'unité de plastification (71), peut pénétrer par le biais d'une fente circulaire (64) prévue entre le piston (63) et le boîtier (65) dans le système de prémélange (45) en position de levage la plus basse du piston (63) et peut entrer en contact avec les flux secondaires (50, 51), et où, lors de la poussée axiale du piston (63) avec la tige de piston (62), la fente circulaire (64) et les orifices d'entrée (48) du système de prémélange (45) sont fermés pour les autres composants du système de composants (A ou B) par le piston (63), qui transporte le système de composants (A ou B) résultant inclus dans le système de prémélange (45) à travers le dispositif mélangeur (53) lors d'un nouveau coulissage (figure 1F).

25. Dispositif selon une ou plusieurs des revendications 17 à 23, **caractérisé par** les caractéristiques suivantes :
- le système de transport (41) comprend une unité de plastification à vis (71), à laquelle peut être amenée la matière pour le flux primaire par le biais d'un orifice d'entrée (42) et dont l'extrémité du côté sortie est raccordée au système de prémélange (45) ;
- la vis de plastification (61) de l'unité de plastification (71) est raccordée, à l'extrémité du côté sortie, de manière solidaire à un piston (63), qui est disposé dans un cylindre (70) de manière à coulisser axialement, ledit cylindre étant raccordé au système de prémélange (45) ou faisant partie du système de prémélange (45),
- le piston (63) présente un canal axial central pour la matière fondue (67), qui est doté d'une soupape (69) à l'extrémité libre du piston (63) et qui débouche dans le système de prémélange (45) et qui se termine à son autre extrémité dans la zone de raccordement avec la vis de plastification (61) par des ouvertures d'entrée (68) disposées radialement ;
- la vis de plastification (61) avec le piston (63) qui y est raccordé peut être entraînée par une unité d'entraînement (66) et coulissée axialement de manière régulable, où, en position de levage la plus basse du piston (63), la matière plastifiée du flux primaire (43), transportée par l'unité de plastification (71), peut pénétrer dans le canal axial pour la matière fondue (67) par le biais des ouvertures d'entrée radiales (68) et sortir dans le système de prémélange (45) à son extrémité du côté sortie et peut entrer en contact avec les flux secondaires (50, 51), et où, lors de la poussée axiale du piston (63), sont fermés aux autres composants du système de composants (A ou B), par le biais de la vis de plastification (61), l'accès du flux primaire (43) au système de prémélange (45) par la soupape (69) et, par le biais du piston (63), les orifices d'entrée (48) du système de prémélange (45) par le piston (63), qui transporte le système de composants (A ou B) résultant inclus dans le système de prémélange (45) à travers le dispositif mélangeur (53) lors d'un nouveau coulissage (figure 1G).

26. Dispositif selon une ou plusieurs des revendications 17 à 23, **caractérisé par** les caractéristiques suivantes :
- le système de transport (41) comprend une unité de plastification à vis (71), à laquelle peut être amenée la matière pour le flux primaire par le biais d'un orifice d'entrée (42) et dont l'extrémité du côté sortie est raccordée au système de prémélange (45) ;
- la vis de plastification (61) de l'unité de plastification (71) présente une perforation dans le sens axial, à travers laquelle passe un piston (63) coulissant axialement dans celle-ci, qui se prolonge à l'extrémité du côté sortie de l'unité de plastification (71) et est coulissant axialement dans un cylindre (70), raccordé au système de prémélange (45) ou faisant partie du système de prémélange (45),
- le piston (63) présente dans la partie qui réside dans le cylindre (70) un canal axial central pour la matière fondue (67), qui est doté d'une soupape (69) à l'extrémité libre du piston (63) et qui débouche dans le système de prémélange (45) et qui se termine à son autre extrémité, qui se situe dans la zone de l'extrémité du côté sortie de l'unité de plastification (71), par des ouvertures d'entrée (68) disposées radialement ;
- la vis de plastification (61) ainsi que le piston (63) peuvent être entraînés par une unité d'entraînement (66) de manière régulable indépendamment, où, en position de levage la plus basse du piston (63), la matière plastifiée du flux primaire (43), transportée par l'unité de plastification (71), peut pénétrer dans le canal axial pour la matière fondue (67) par le biais des ouvertures d'entrée radiales (68) et sortir dans le système de prémélange (45) à son extrémité du côté sortie et peut entrer en contact avec les flux secondaires (50, 51), et où, lors de la poussée axiale du piston (63), sont fermées aux autres composants du système de composants (A ou B), par le biais de la vis de plastification (61), les ouvertures d'entrée radiales (68) et les orifices d'entrée (48) du système de prémélange (45) par le piston (63), qui transporte le système de composants (A ou B) résultant inclus dans le système de prémélange (45) à travers le dispositif mélangeur (53) lors d'un nouveau coulissage (figure 1H).

27. Dispositif selon une ou plusieurs des revendications 17 à 23, **caractérisé par** les caractéristiques suivantes :
- le système de transport (41) comprend une unité de plastification à vis (71), entraînée de manière régulable par un entraînement (66) et comprenant une vis de plastification (61), à laquelle peut être amenée la matière pour le flux primaire par le biais d'un orifice d'entrée (42), ainsi qu'un cylindre (70) avec un piston (63) qui peut être coulissé axialement dans celui-ci, le cylindre (70) étant raccordé au système de prémélange (45) ou faisant partie du système de prémélange (45) ;
- le cylindre (70) présente un orifice d'entrée (72) disposé latéralement, de préférence perpendiculairement à l'axe du cylindre (70), dans la zone de l'extrémité qui va jusqu'au système de prémélange (45), qui est raccordé par le biais d'un canal de matière fondue (73) à l'extrémité du côté sortie de l'unité de plastification (71) ;
- le piston (63) présente une ouverture d'entrée (74) latérale disposée radialement et perpendiculairement à l'axe du piston (63), à laquelle est adjoint un canal de matière fondue (75) de préférence incliné à angle droit, qui va, en partant de l'ouverture d'entrée (74), de préférence d'abord dans le sens radial et ensuite au centre dans le sens axial du piston (63) et débouche dans le système de prémélange (45) ;
- le piston (63) est entraîné par une unité d'entraînement (76) régulable, de manière à pouvoir coulisser axialement, où, en position de levage la plus basse du piston (63), l'ouverture d'entrée (74) du piston (63) est alignée avec l'orifice d'entrée (72) du cylindre (70) de sorte que la matière plastifiée du flux primaire (43), transportée par l'unité de plastification (71) à travers le canal de matière fondue (73), peut pénétrer dans le canal de matière fondue (75) du piston (63) par le biais de l'orifice d'entrée (72) et de l'ouverture d'entrée (74) et en sortir pour aller dans le système de prémélange (45) et peut y entrer en contact avec les flux secondaires (50, 51), et où, lors de la poussée axiale du piston (63), l'ouverture d'entrée (74) et les orifices d'entrée (48) du système de prémélange (45) sont fermés et le système de composants (A ou B) résultant inclus dans le système de prémélange (45) est transporté à travers le dispositif mélangeur (53) lors d'un nouveau coulissage (figure 1I).

28. Dispositif selon une ou plusieurs des revendications 17 à 22, **caractérisé par** les caractéristiques suivantes :
- le système de transport (41) comprend une extrudeuse à vis à piston (77) avec une vis à piston (78) à laquelle peut être amenée la matière pour le flux primaire par le biais d'un orifice d'entrée (42) et dont l'extrémité du côté sortie est raccordée au système de prémélange (45) ;
- la vis à piston (78) peut être entraînée par une unité d'entraînement (66) de manière régulable, où, en position de levage la plus basse de la vis à piston (78), la matière plastifiée du flux primaire (43) transportée est envoyée dans le système de prémélange (45) et y entre en contact avec les flux secondaires (50, 51) et le système de composants (A ou B) résultant est transporté dans le dispositif mélangeur (53) et l'outil de moulage (21) est rempli lors de la poussée de la vis à piston (78) (figure 1J).

29. Dispositif selon une ou plusieurs des revendications 17 à 28, **caractérisé en ce qu'**un ou plusieurs des dispositifs d'amenée (14, 15, 16, 16') ou un ou plusieurs moyens d'introduction (49) pour les flux secondaires (50, 51) et/ou le système de transport (41) possèdent une fonction de dosage ou présentent un dispositif de dosage (Figs. 1A, 1B, 1F à 1J, 2A, 2B, 4).

30. Dispositif selon une ou plusieurs des revendications 19 à 29, **caractérisé par**
- un système de transport (35)
et
- un ou plusieurs dispositifs de contrôle (29) destinés au contrôle des propriétés des corps moulés,
le système de transport (35) pouvant réaliser au moins l'une des fonctions suivantes :
(i) le prélèvement ou l'obtention de corps moulés dans un outil de moulage (21), un dispositif de coupe ou de découpe à l'emporte-pièce (36), un système de magasinage (24), un magasin (34) et/ou un dépôt (37),
(ii) le transport de corps moulés vers un ou plusieurs dispositifs de contrôle (29),
(iii) le transport de corps moulés depuis un ou plusieurs dispositifs de contrôle (29) vers un ou plusieurs autres dispositifs de contrôle (29),
(iv) le transport des corps moulés depuis un ou plusieurs dispositifs de contrôle (29) vers un système de magasinage (24), dans un magasin (34), un dépôt (37) et/ou un récipient de collecte de déchets,
(v) le transport des corps moulés depuis un système de magasinage (24) ou un magasin (34) vers un autre système de magasinage (24) ou un autre magasin (34),
(vi) l'apposition et/ou la lecture d'un codage sur les corps moulés ou les magasins (34) et la commande des opérations de transport en fonction du codage,
(vii) le transport des magasins, dans lesquels les corps moulés peuvent être emmagasinés, vers des endroits d'enlèvement ou des endroits de retour,
une ou plusieurs des fonctions (i) à (vii) pouvant être réalisées de préférence séquentiellement et/ou parallèlement (figures 2B, 10, 11).

31. Dispositif selon la revendication 30, **caractérisé en ce qu'**il présente un système de magasinage (24), qui comprend un magasin (34) ou plusieurs magasins (34), dans lesquels peuvent être stockés ou stockés provisoirement les corps moulés produits (Fig. 2B).

32. Dispositif selon une ou plusieurs des revendications 17 à 31, **caractérisé en ce qu'**un ou plusieurs moyens d'introduction (49) pour les flux secondaires (50, 51) et/ou le système de transport (41) pour le flux primaire (43) sont un dispositif selon la revendication 17 ou 18.

33. Dispositif selon une ou plusieurs des revendications 17 à 32, **caractérisé en ce que** le dispositif de commande (26) commande une ou plusieurs autres fonctions ou la totalité des autres fonctions du dispositif.
